(19) Europäisches Patentamt / European Patent Office / Office européen des brevets

(11) **EP 4 746 310 A1**

## EUROPEAN PATENT APPLICATION
published in accordance with Art. 153(4) EPC

(12)

(43) Date of publication:
**20.05.2026   Bulletin 2026/21**

(21) Application number: **24839628.5**

(22) Date of filing: **04.07.2024**

(51) International Patent Classification (IPC):
**H04B 7/08** (2006.01)      **H02J 50/20** (2016.01)
**H02J 50/40** (2016.01)

(52) Cooperative Patent Classification (CPC):
**H02J 50/20; H02J 50/40; H04B 7/08**

(86) International application number:
**PCT/JP2024/024164**

(87) International publication number:
**WO 2025/013736 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **13.07.2023   JP 2023115100**

(71) Applicant: **Panasonic Intellectual Property
Corporation
of America
Torrance, CA 90504 (US)**

(72) Inventor: **MURAKAMI, Yutaka
Kadoma-shi, Osaka 571-0057 (JP)**

(74) Representative: **Grünecker Patent- und
Rechtsanwälte
PartG mbB
Leopoldstraße 4
80802 München (DE)**

(54)   **WIRELESS DEVICE AND CONTROL METHOD**

(57)   This wireless device comprises: a reception unit that receives a communication signal including a first reference signal, and a power transmission signal; and a control unit that controls beamforming when receiving the power transmission signal on the basis of the first reference signal.

FIG. 2A

## Description

Technical Field

The present disclosure relates to a radio apparatus and a control method.

Background Art

For example, in Patent Literature (hereinafter, referred to "PTL") 1, as illustrated in FIG. 19, a wireless electric power transmission apparatus is disclosed that includes a power transmission antenna that emits radio waves toward a power receiver having a power reception antenna with a directivity to receive power transmitted by radio waves between offshore and onshore, and a driver configured to set an orientation toward a direction in which the power receiver is present.

Citation List

Patent Literature

PTL 1
Japanese Patent No. 6388728

Summary of Invention

However, in consideration of a propagation environment of radio waves, it is desired to provide a radio power transmission apparatus and a power reception apparatus that are highly flexible and can perform highly efficient charging in various propagation environments of radio waves.

A non-limiting and exemplary embodiment of the present disclosure facilitates providing a technology of a radio power transmission system capable of performing highly efficient charging.

A radio apparatus according to one aspect of the present disclosure includes: a receiver that receives a communication signal and a power transmission signal, the communication signal including a first reference signal; and a controller that controls beamforming in reception of the power transmission signal, based on the first reference signal.

A radio apparatus according to one aspect of the present disclosure includes: a controller that generates a communication signal and a power transmission signal, the communication signal including a first reference signal; and a transmitter that transmits the communication signal including the first reference signal and transmits the power transmission signal to another radio apparatus that controls beamforming in reception of the power transmission signal, based on the first reference signal.

A control method according to one aspect of the present disclosure includes: receiving, by a radio apparatus, a communication signal including a first reference signal; controlling, by the radio apparatus, beamforming in reception of a power transmission signal, based on the first reference signal; and receiving the power transmission signal by the radio apparatus.

A control method according to one aspect of the present disclosure includes: generating, by a radio apparatus, a communication signal and a power transmission signal, the communication signal including a first reference signal; transmitting, by the radio apparatus, the communication signal including the first reference signal; and transmitting, by the radio apparatus, the power transmission signal to another radio apparatus that controls beamforming based on the first reference signal.

It should be noted that general or specific embodiments may be implemented as a system, an apparatus, a method, an integrated circuit, a computer program, a storage medium, or any selective combination thereof.

According to a non-limiting and exemplary embodiment of the present disclosure, it is possible to provide a radio power transmission system capable of performing highly efficient charging.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

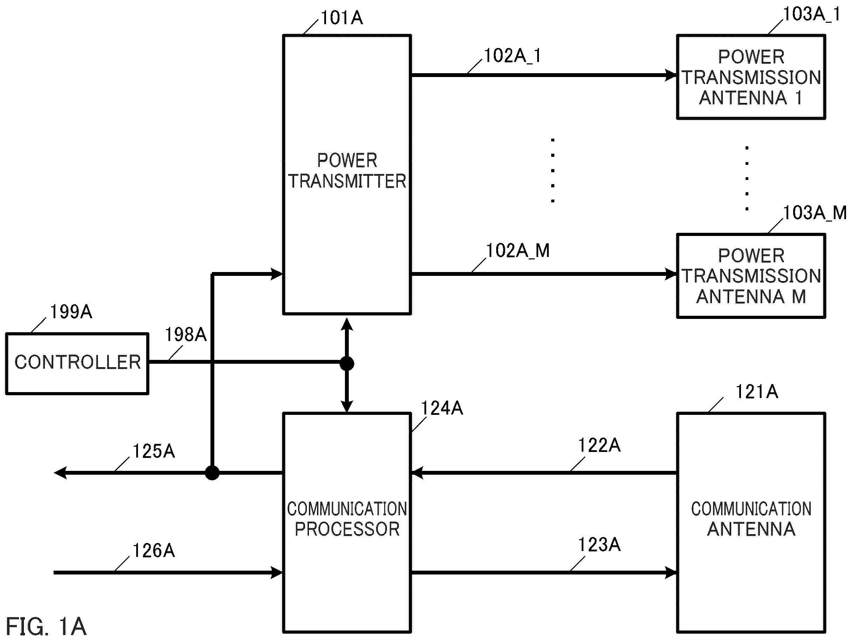

FIG. 1A is a diagram illustrating an exemplary configuration of an apparatus for power transmission and communication (hereinafter, may be referred to as "power transmission and communication apparatus") in Embodiment 1;

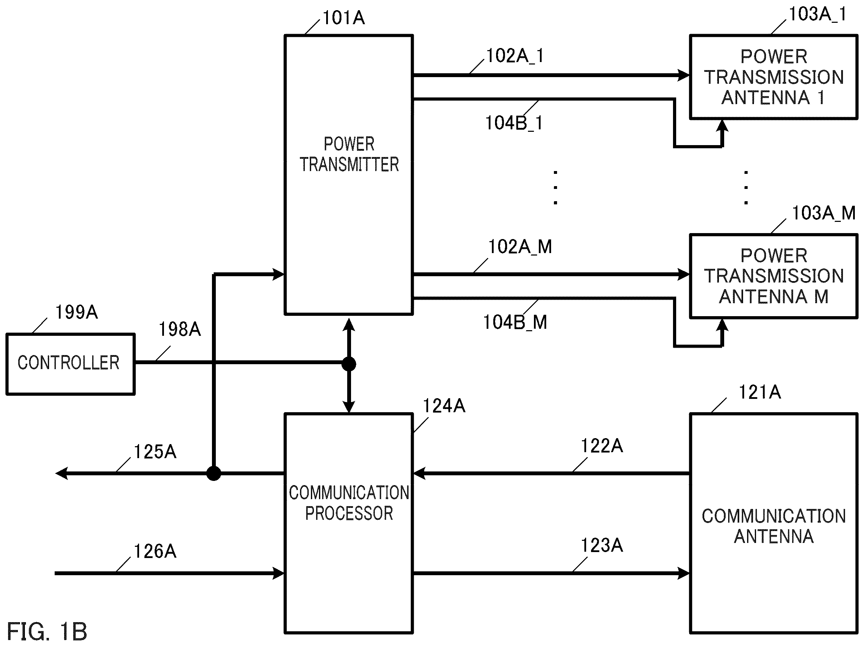

FIG. 1B is a diagram illustrating an exemplary configuration different from the configuration of the power transmission and communication apparatus in Embodiment 1 illustrated in FIG. 1A;

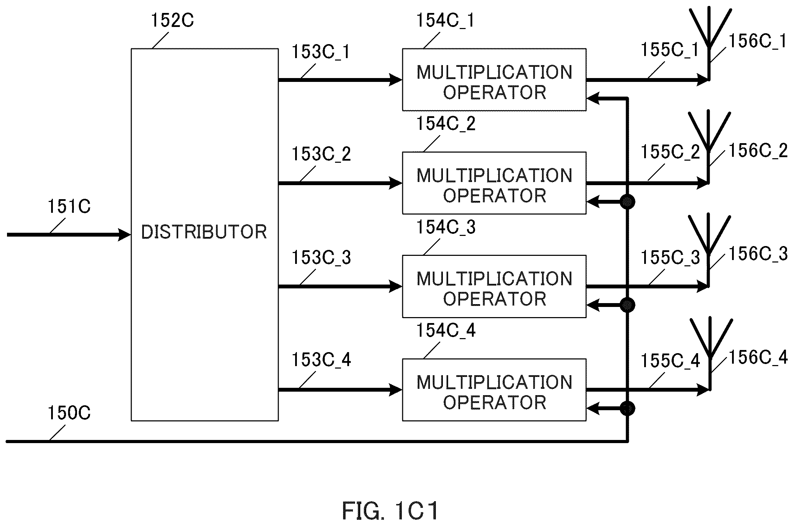

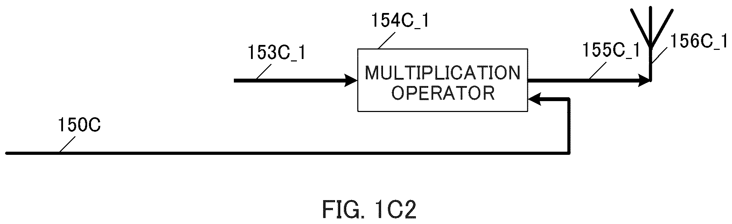

FIG. 1C1 is a diagram illustrating an exemplary configuration of a power transmission antenna in FIGS. 1A and 1B;

FIG. 1C2 is a diagram illustrating an example different from the configuration of a power transmission antenna in FIGS. 1A and 1B illustrated in FIG. 1C1;

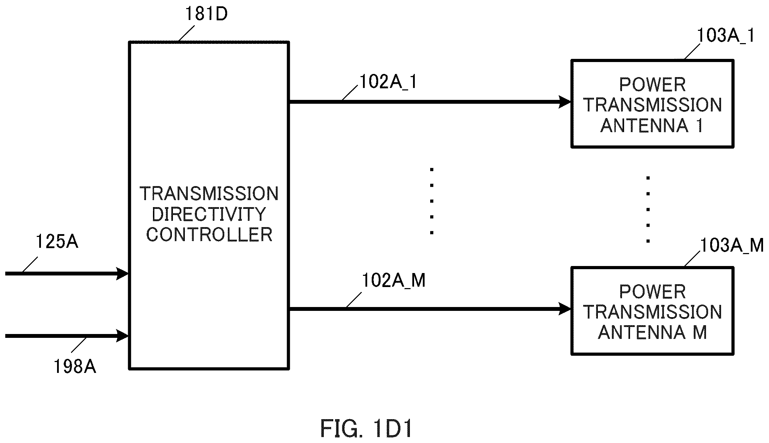

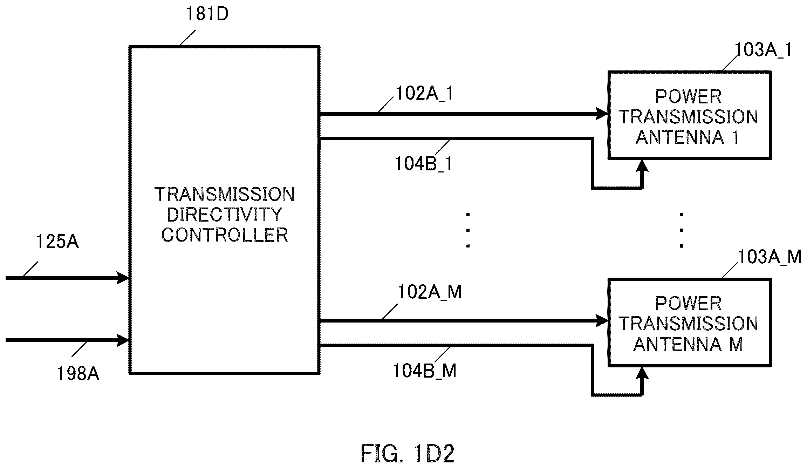

FIG. 1D1 is a diagram illustrating an exemplary configuration of a portion of a power transmitter and a power transmission antenna in FIG. 1A;

FIG. 1D2 is a diagram illustrating an exemplary configuration of a portion of the power transmitter and the power transmission antennas in FIG. 1B;

FIG. 1E is a diagram illustrating an exemplary configuration of the power transmission and communication apparatus in Embodiment 1;

FIG. 1F is a diagram illustrating an exemplary configuration different from the configuration of the power transmission and communication apparatus in Embodiment 1 illustrated in FIG. 1E;

FIG. 1G is a diagram illustrating an exemplary configuration of the power transmission and communication apparatus in Embodiment 1;

FIG. 1H is a diagram illustrating an exemplary configuration different from the configuration of the power transmission and communication apparatus in Embodiment 1 illustrated in FIG. 1G;

FIG. 2A is a diagram illustrating an exemplary configuration of an apparatus that receives a signal for power transmission (hereinafter, may be referred to "power transmission signal") transmitted by a power transmission and communication apparatus to charge a battery;

FIG. 2B is a diagram illustrating an exemplary configuration different from the configuration of the apparatus that receives a power transmission signal transmitted by the power transmission and communication apparatus to charge a battery illustrated in FIG. 2A;

FIG. 2C is a diagram illustrating an exemplary configuration of a power reception antenna in FIGS. 2A and 2B;

FIG. 2D is a diagram illustrating an example different from the configuration of the power reception antenna in FIGS. 2A and 2B illustrated in FIG. 2C;

FIG. 2E is a diagram illustrating an exemplary configuration of an apparatus that receives a power transmission signal transmitted by a power transmission and communication apparatus to charge a battery;

FIG. 2F is a diagram illustrating an exemplary configuration different from the configuration of the apparatus that receives a power transmission signal transmitted by a power transmission and communication apparatus to charge a battery illustrated in FIG. 2E;

FIG. 2G is a diagram illustrating an exemplary configuration of the apparatus that receives a power transmission signal transmitted by a power transmission and communication apparatus to charge a battery;

FIG. 2H is a diagram illustrating an exemplary configuration different from the configuration of the apparatus that receives a power transmission signal transmitted by a power transmission and communication apparatus to charge a battery illustrated in FIG. 2G;

FIG. 2I is a diagram illustrating an exemplary configuration of an operation section related to charging provided in a charger of FIGS. 2A and 2B, a charger and receiver of FIGS. 2E and 2F, and a charging and communication processor of FIGS. 2G and 2H;

FIG. 2J1 is a diagram illustrating an exemplary configuration of the charger and receiver of FIGS. 2E and 2F;

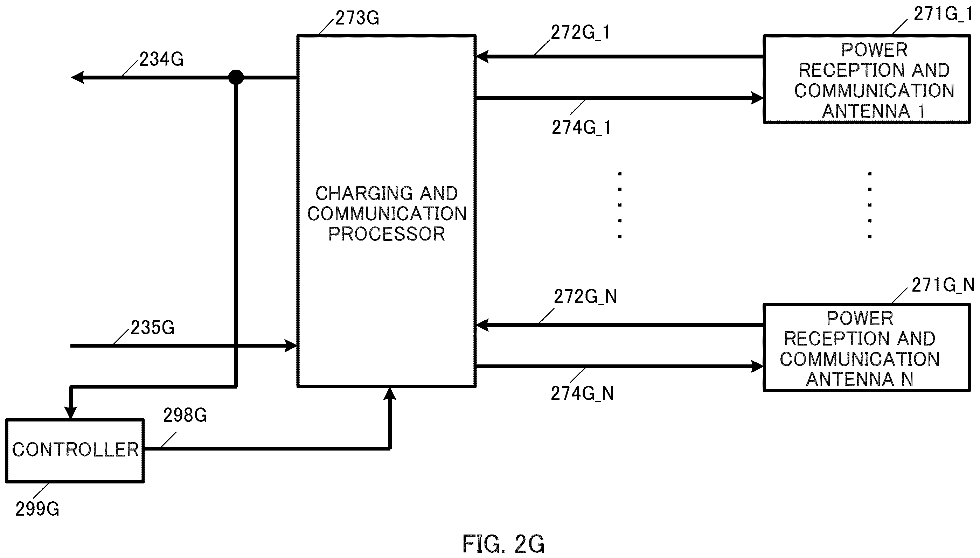

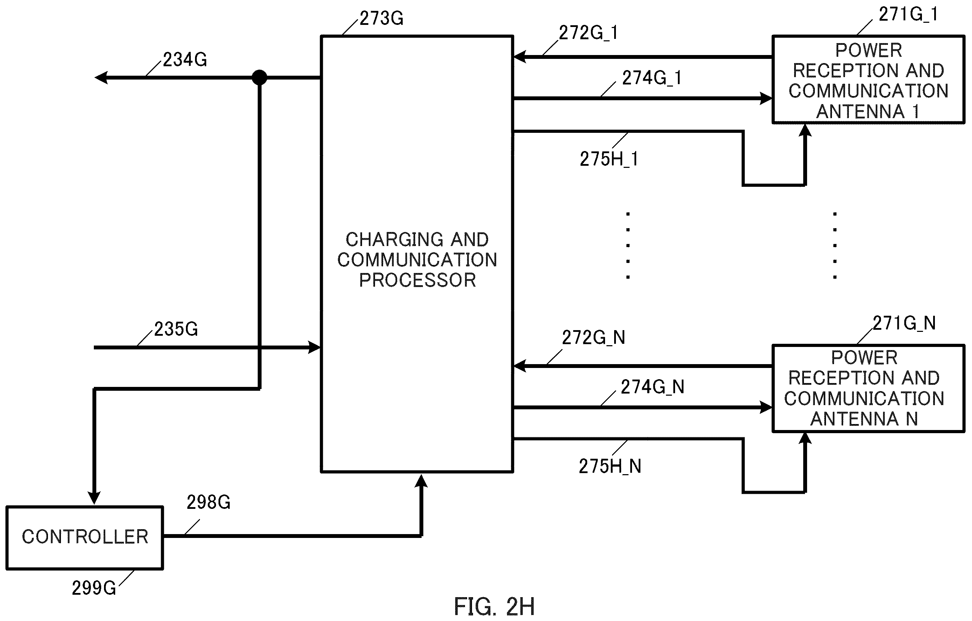

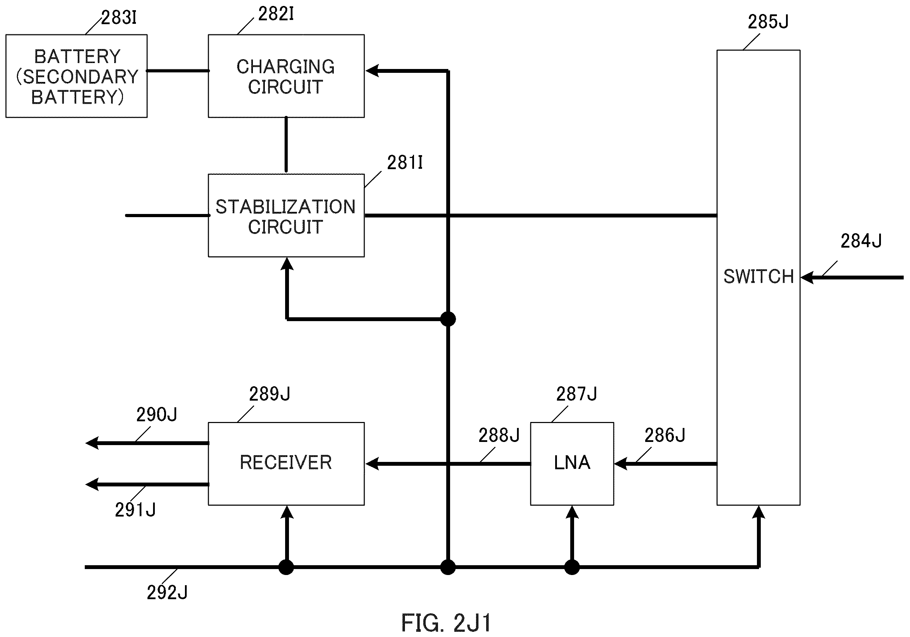

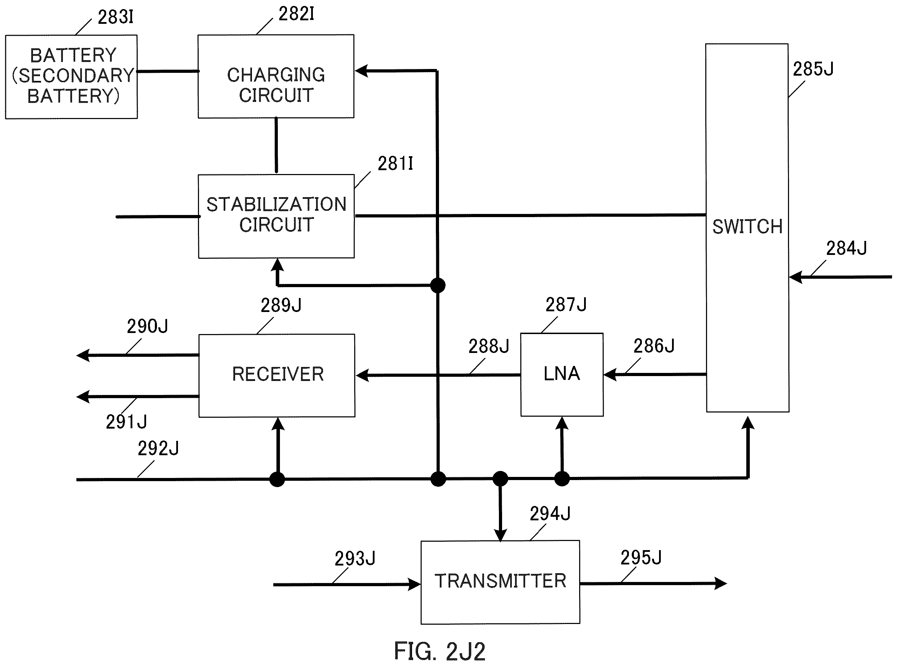

FIG. 2J2 is a diagram illustrating an exemplary configuration of the charging and communication processor of FIGS. 2G and 2H;

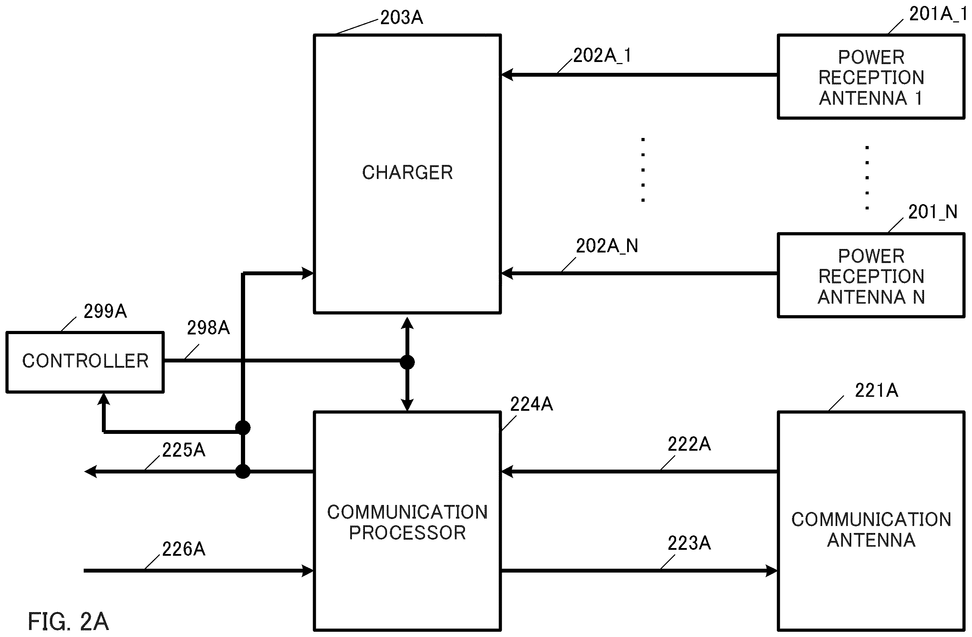

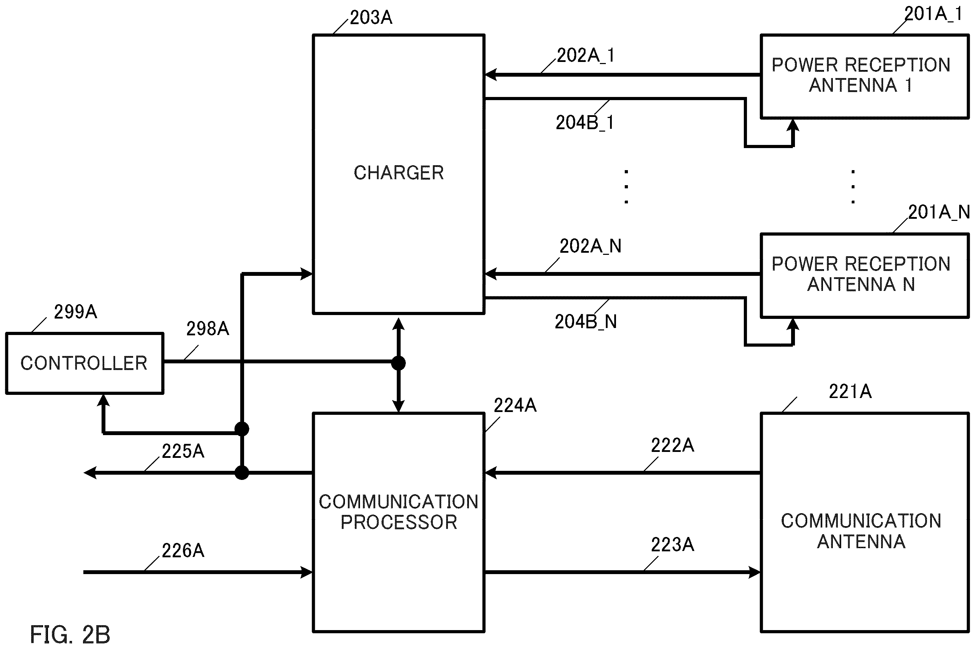

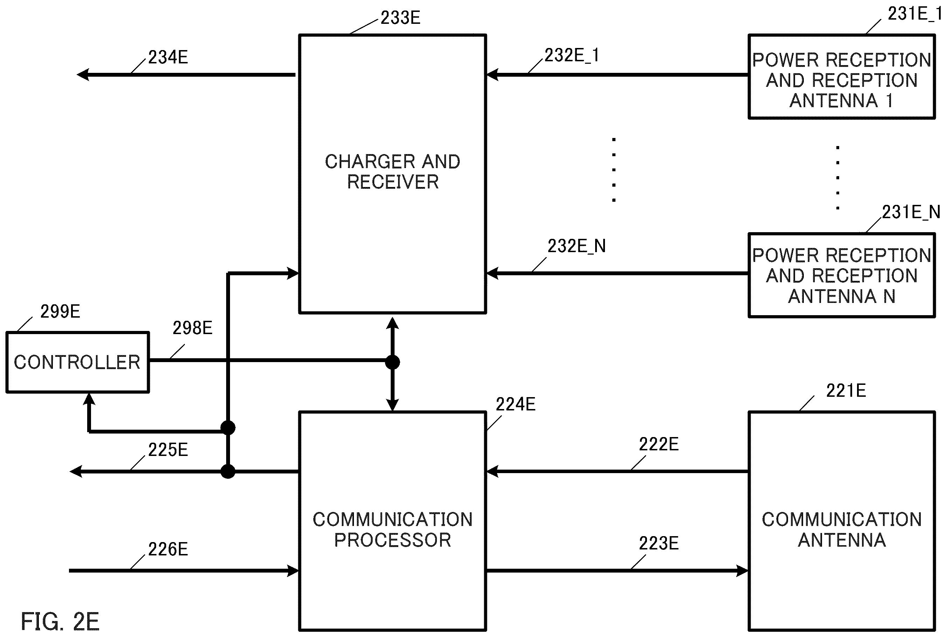

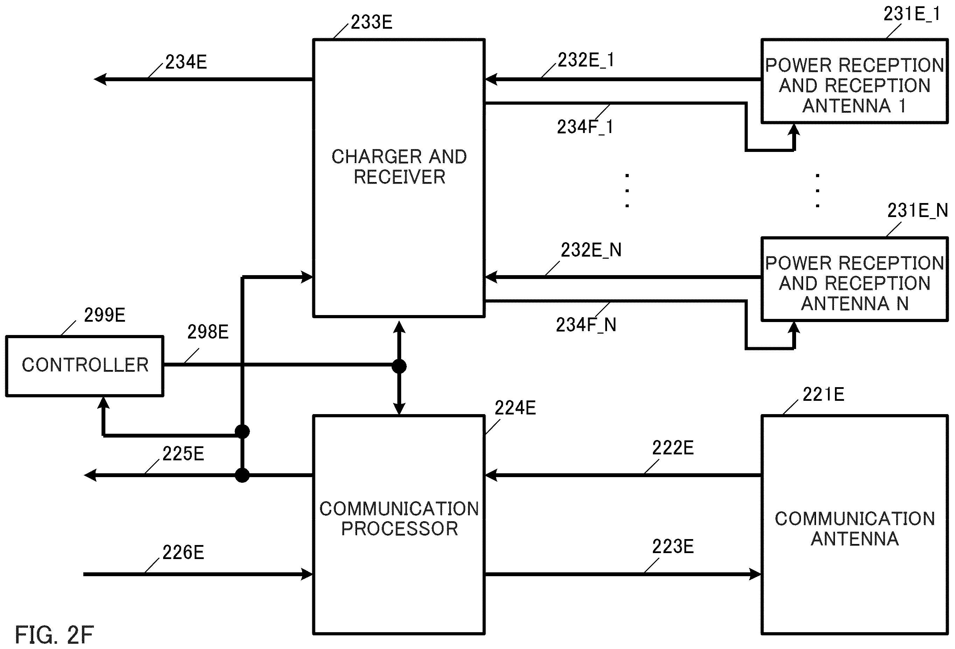

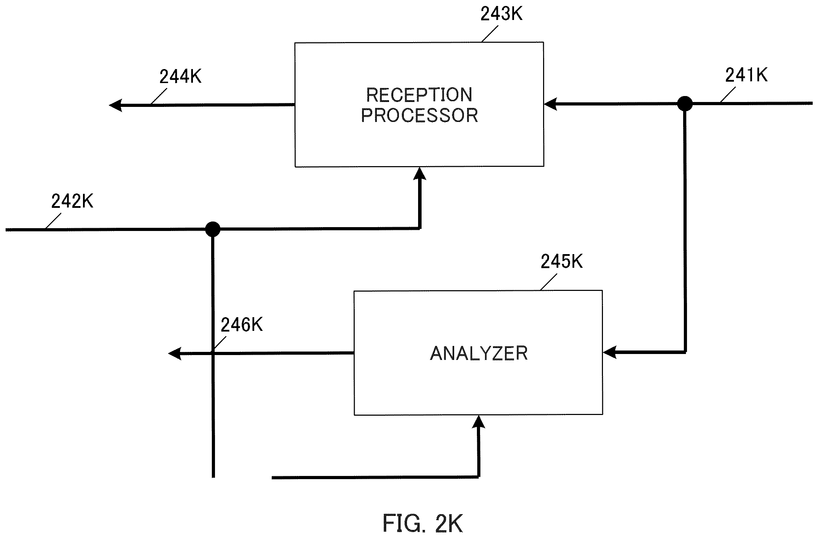

FIG. 2K is a diagram illustrating an exemplary configuration of a "communication processor in FIGS. 2A and 2B", the "charger and receiver in FIGS. 2E and 2F", and the "charging and communication processor in FIGS. 2G and 2H";

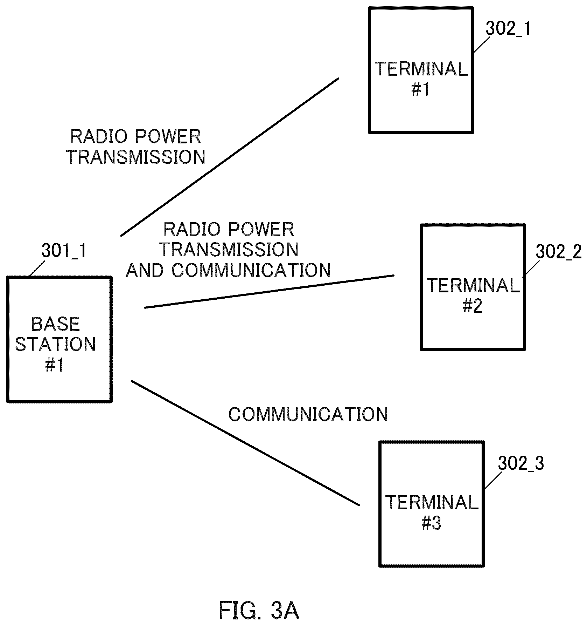

FIG. 3A is a diagram illustrating an example of a relationship between a base station and a terminal;

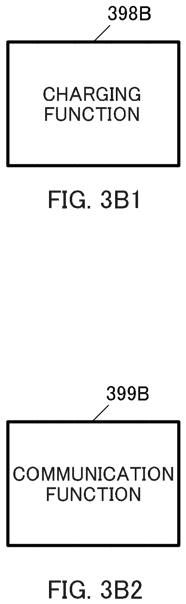

FIG. 3B1 is a diagram illustrating an example of a terminal having a charging function;

FIG. 3B2 is a diagram illustrating an example of a terminal having a communication function;

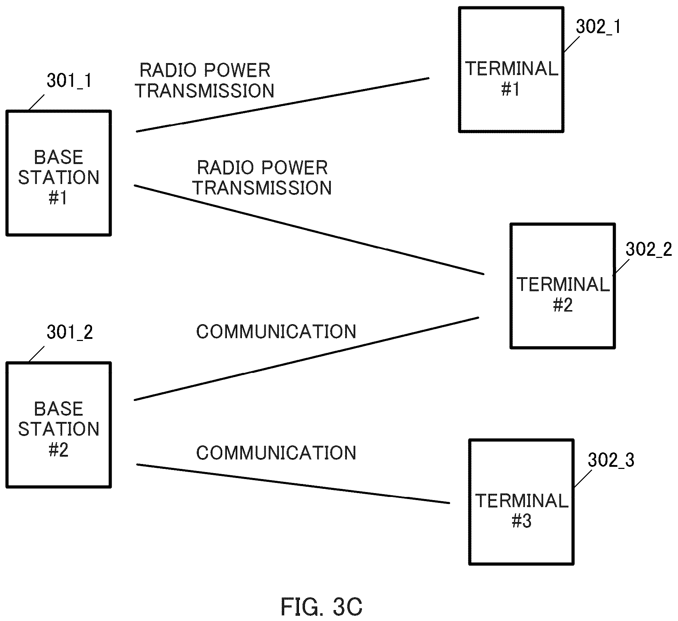

FIG. 3C is a diagram illustrating another example of a relationship between a base station and a terminal;

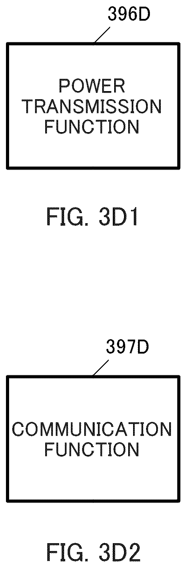

FIG. 3D1 is a diagram illustrating an example of a base station having a power transmission function;

FIG. 3D2 is a diagram illustrating an example of a base station having a communication function;

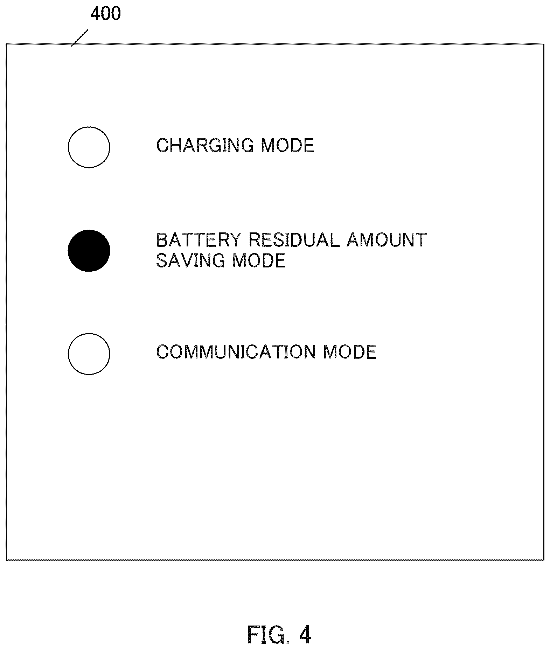

FIG. 4 is a diagram illustrating an example of a mode of a terminal;

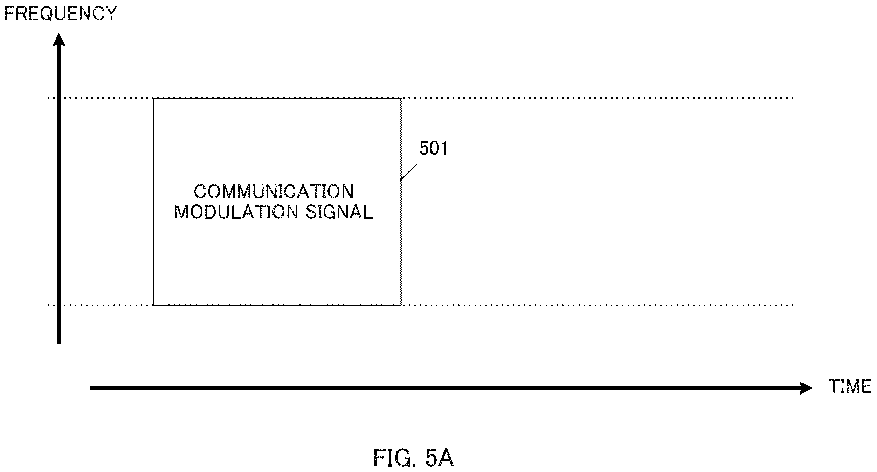

FIG. 5A is a diagram illustrating an exemplary configuration in a time-frequency domain of a modulation signal transmitted by base station #1 of FIG. 3A when base station #1 performs only communication;

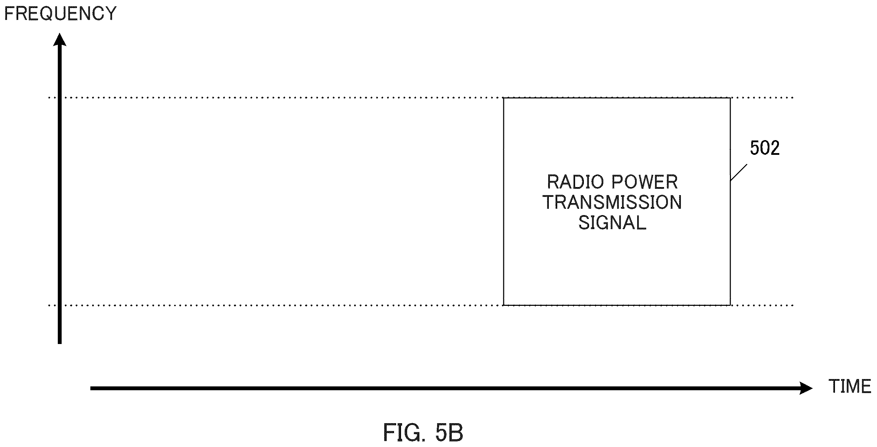

FIG. 5B is a diagram illustrating an exemplary configuration in a time-frequency domain of a signal transmitted by base station #1 of FIG. 3A when base station #1 performs only radio power transmission;

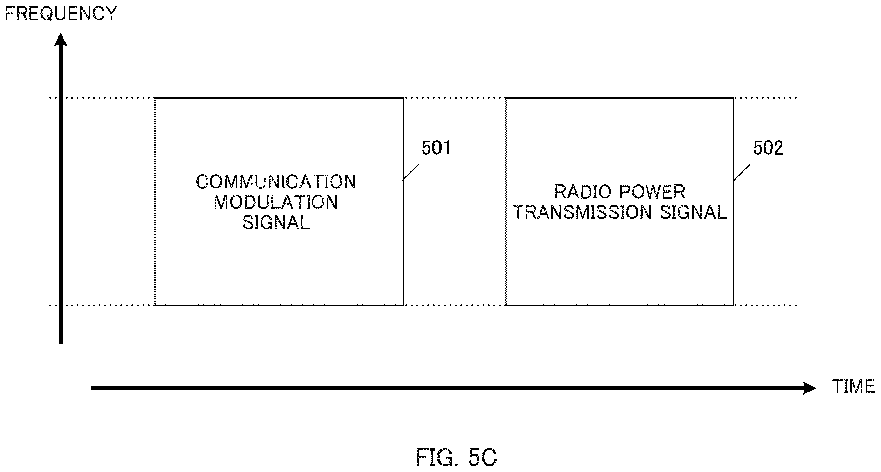

FIG. 5C is a diagram illustrating an exemplary configuration in a time-frequency domain of a modulation signal and a signal transmitted by base station #1 of FIG. 3A when base station #1 performs communication and radio power transmission;

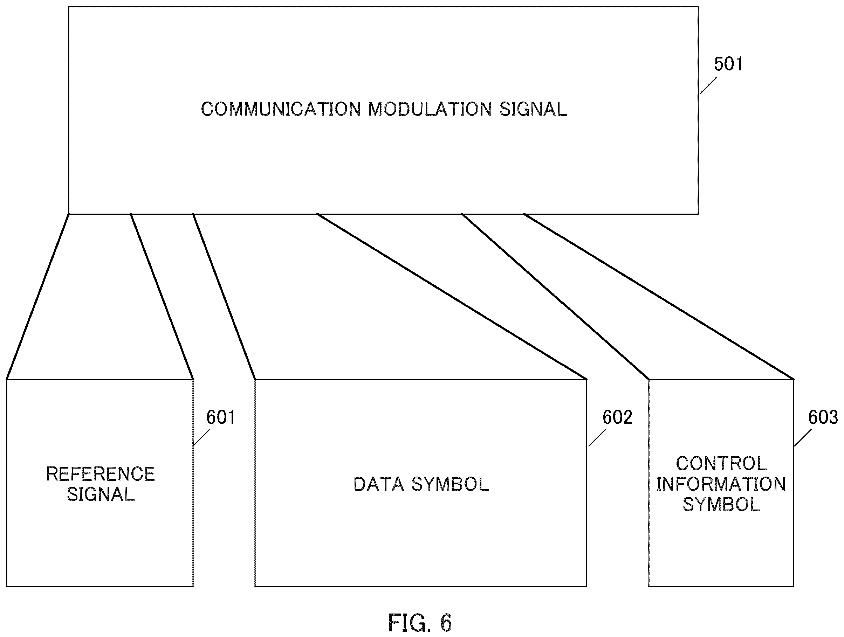

FIG. 6 is a diagram illustrating an example of a communication modulation signal;

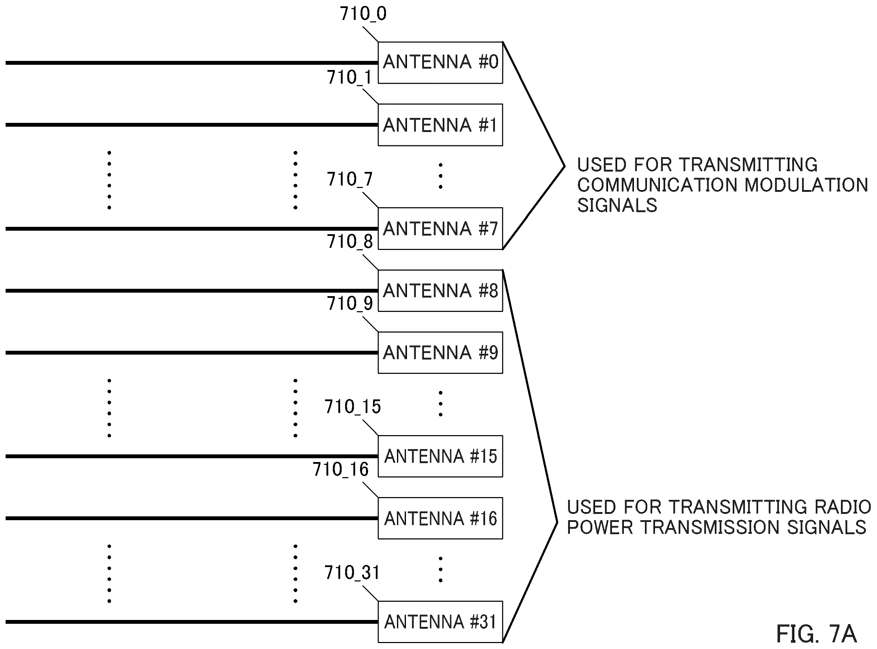

FIG. 7A is a diagram illustrating an exemplary configuration related to an antenna in a configuration of base station #1;

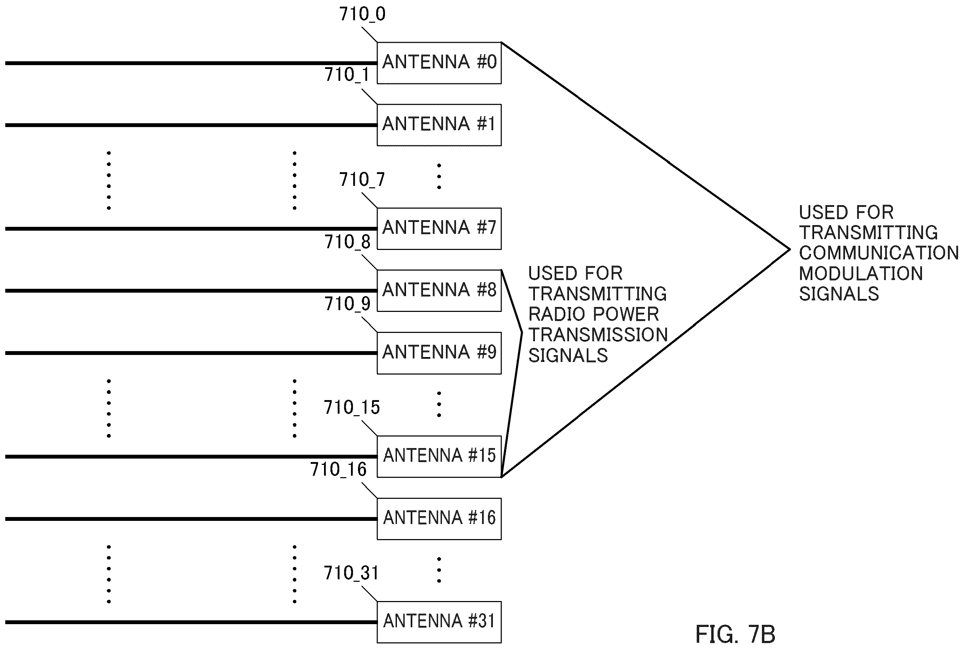

FIG. 7B is a diagram illustrating an example different from the configuration related to the antenna in the configuration of base station #1 illustrated in FIG. 7A;

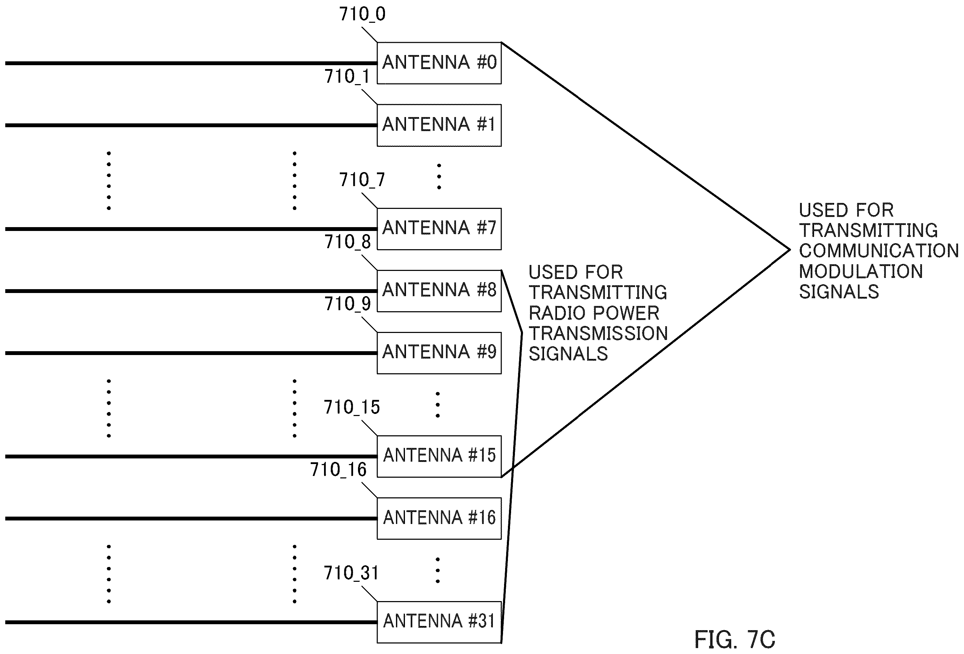

FIG. 7C is a diagram illustrating an example different from the configurations related to the antenna in the configuration of base station #1 illustrated in FIGS. 7A and 7B;

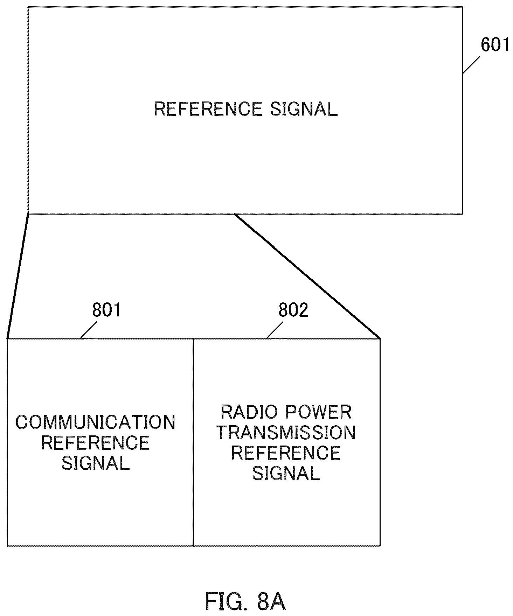

FIG. 8A is a diagram illustrating an exemplary configuration of a reference signal of FIG. 6 included in the communication modulation signal of FIG. 5C when base station #1 uses the antenna as illustrated in FIG. 7A;

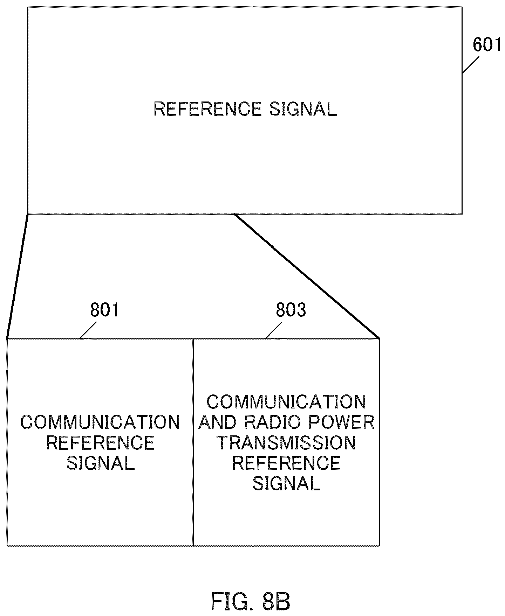

FIG. 8B is a diagram illustrating an exemplary configuration of the reference signal of FIG. 6 included in the communication modulation signal of FIG. 5C when base station #1 uses the antenna as illustrated in FIG. 7B;

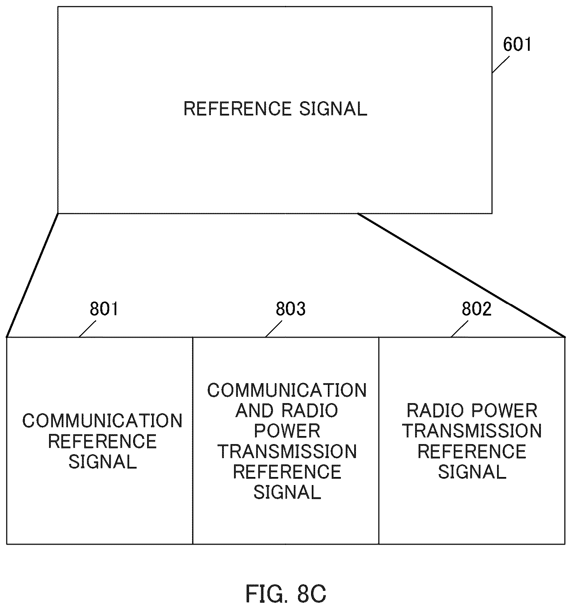

FIG. 8C is a diagram illustrating an exemplary configuration of the reference signal of FIG. 6 included in the communication modulation signal of FIG. 5C when base station #1 uses the antenna as illustrated in FIG. 7C;

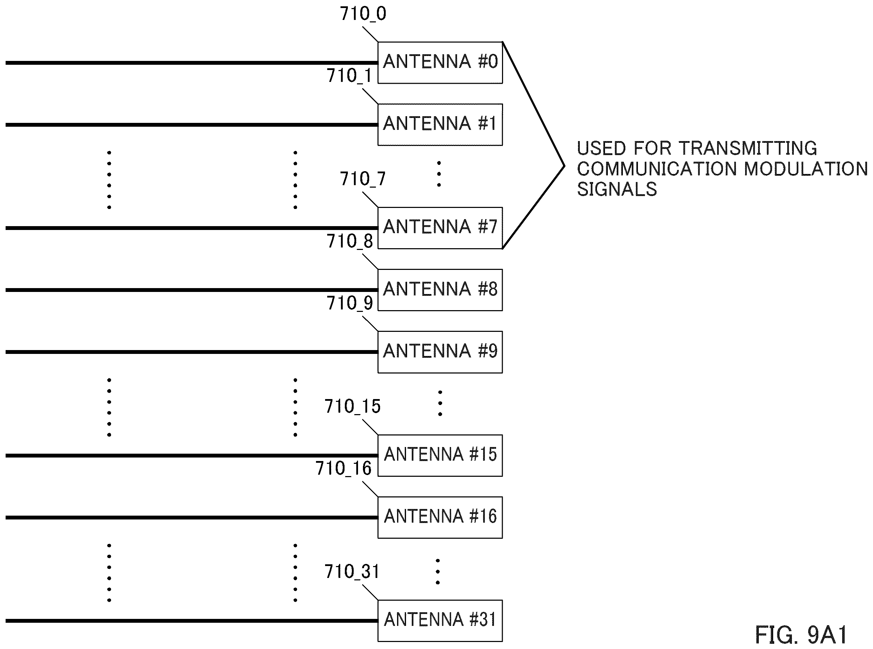

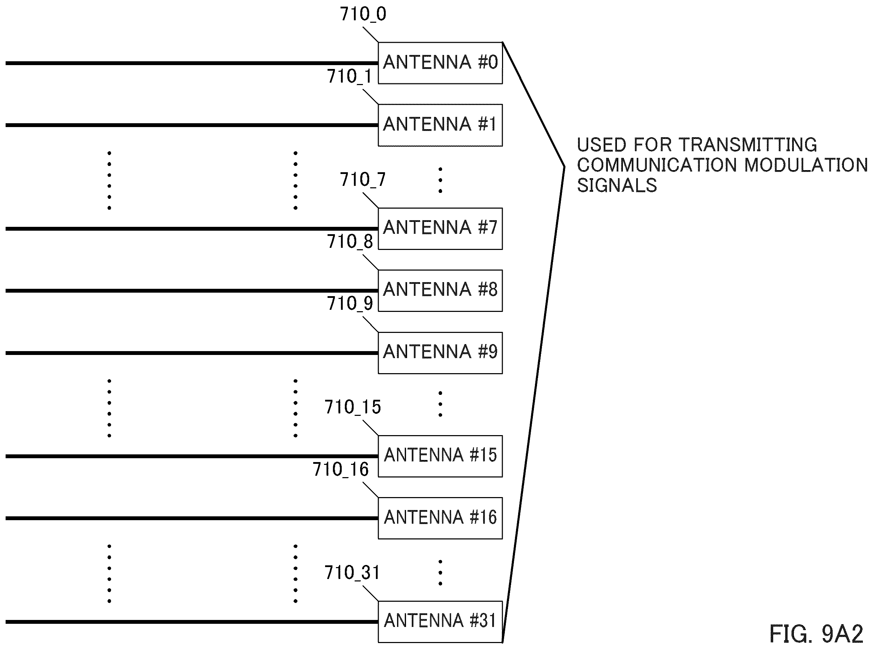

FIG. 9A1 is a diagram illustrating an exemplary configuration related to antennas in base station #2;

FIG. 9A2 is a diagram illustrating an exemplary configuration related to the antennas in base station #2;

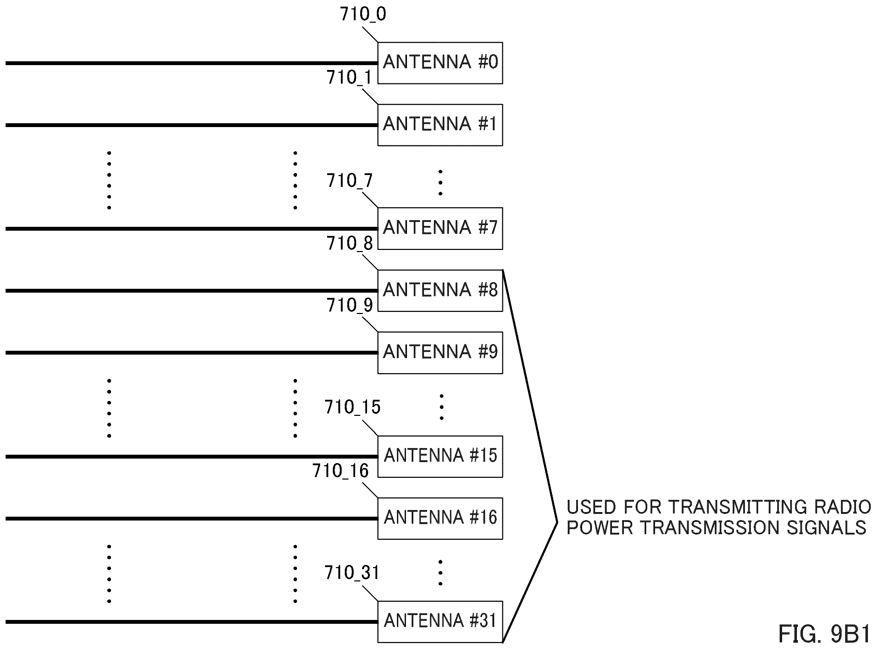

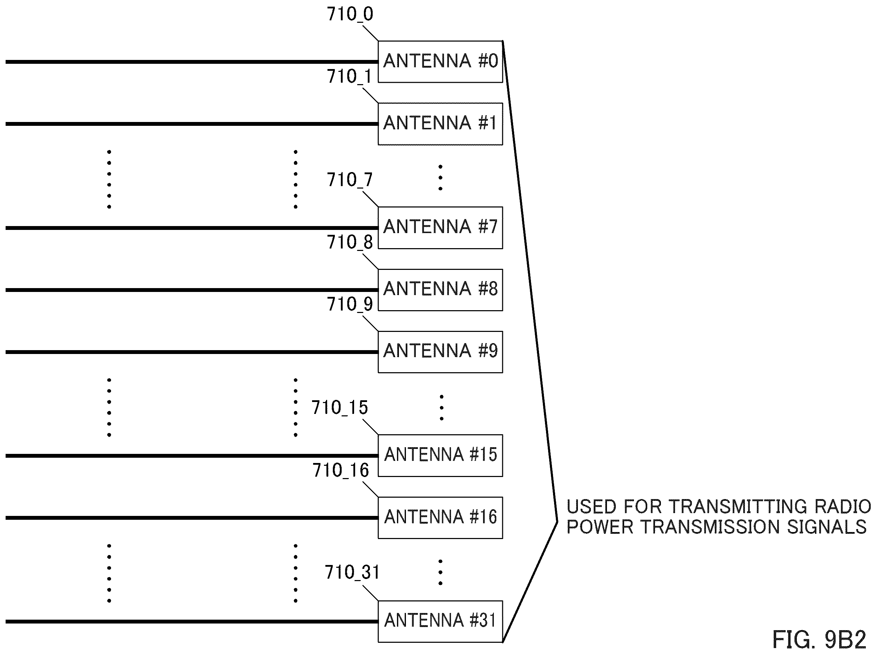

FIG. 9B1 is a diagram illustrating an exemplary configuration related to the antennas;

FIG. 9B2 is a diagram illustrating an example different from the configuration related to the antennas in FIG. 9B1;

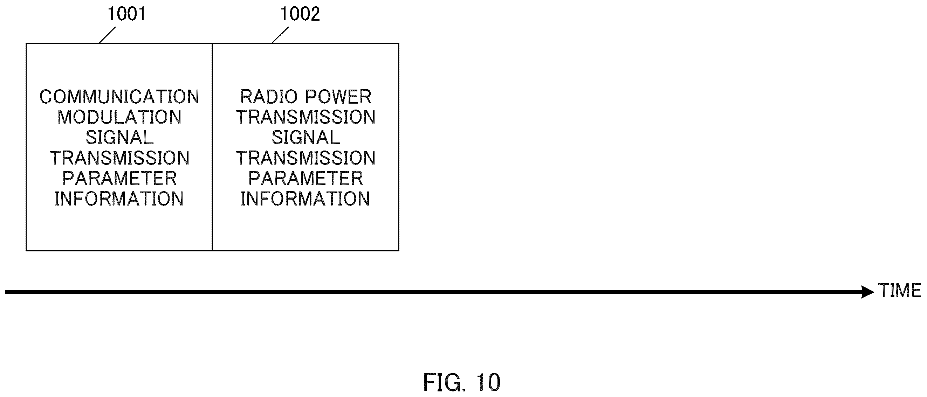

FIG. 10 is a diagram illustrating an exemplary configuration of a control information symbol of FIG. 6 included in the communication modulation signal of FIG. 5C when base station #1 uses the antennas as illustrated in FIG. 7A;

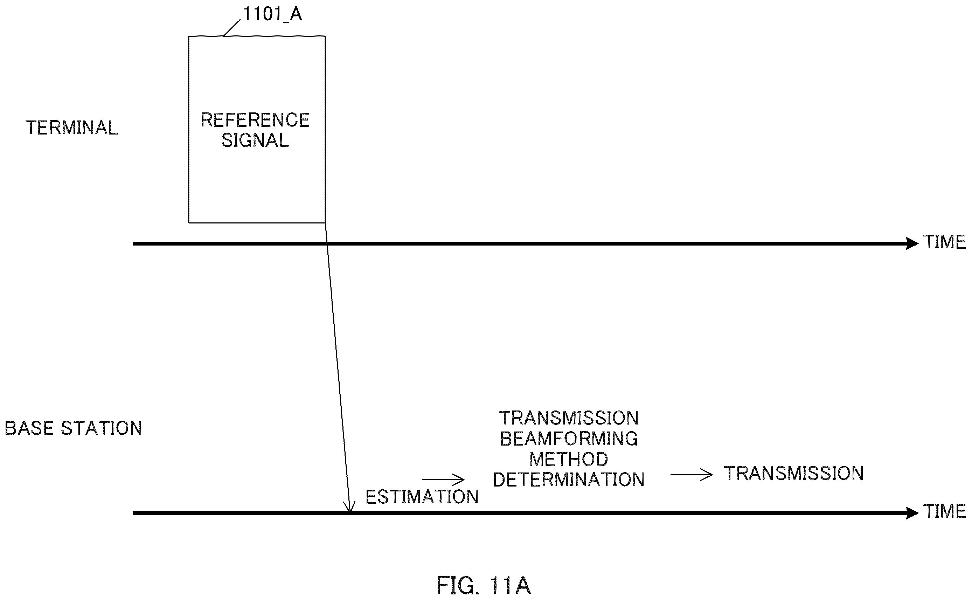

FIG. 11A is a diagram illustrating a first example of interaction between a terminal and a base station;

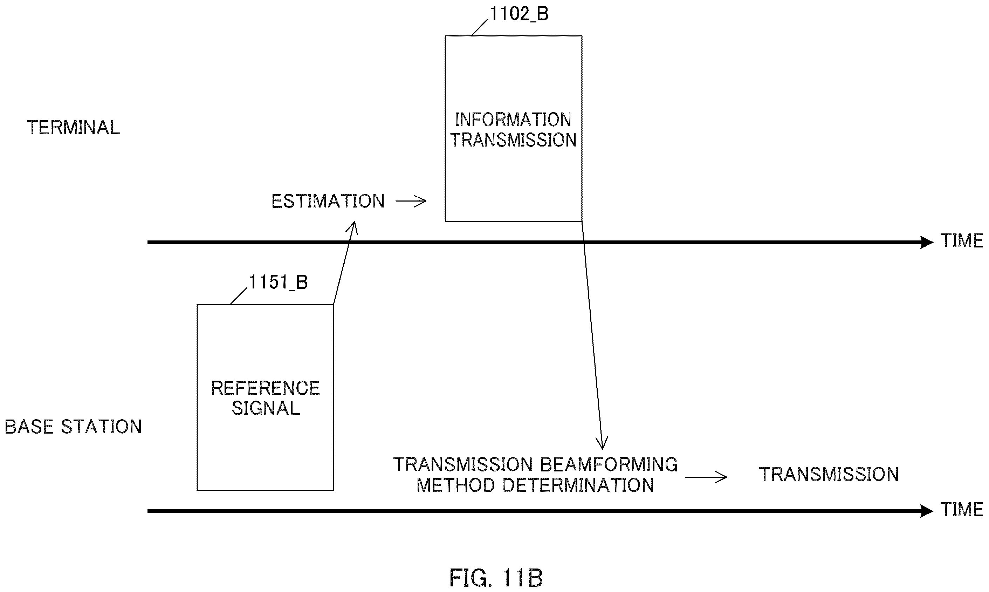

FIG. 11B is a diagram illustrating a second example of the interaction between a terminal and a base station;

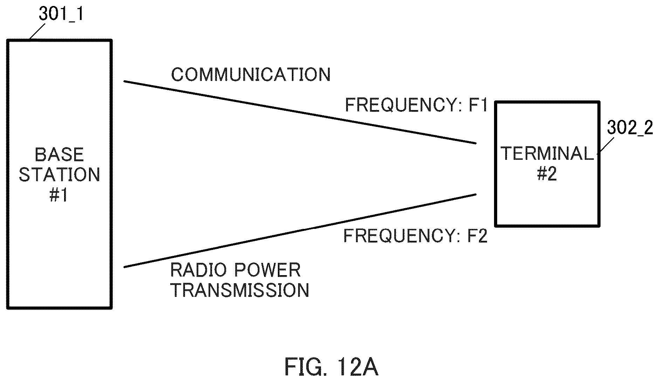

FIG. 12A is a diagram illustrating another example of a relationship between a base station and a terminal;

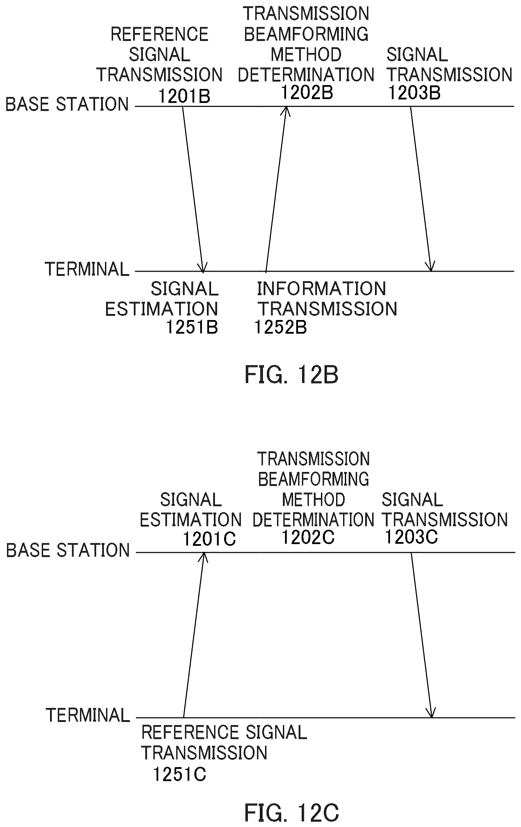

FIG. 12B is a diagram illustrating an example of interaction between a base station and a terminal when the base station performs transmission beamforming;

FIG. 12C is a diagram illustrating an example different from FIG. 12B of the interaction between a base station and a terminal when the base station performs transmission beamforming;

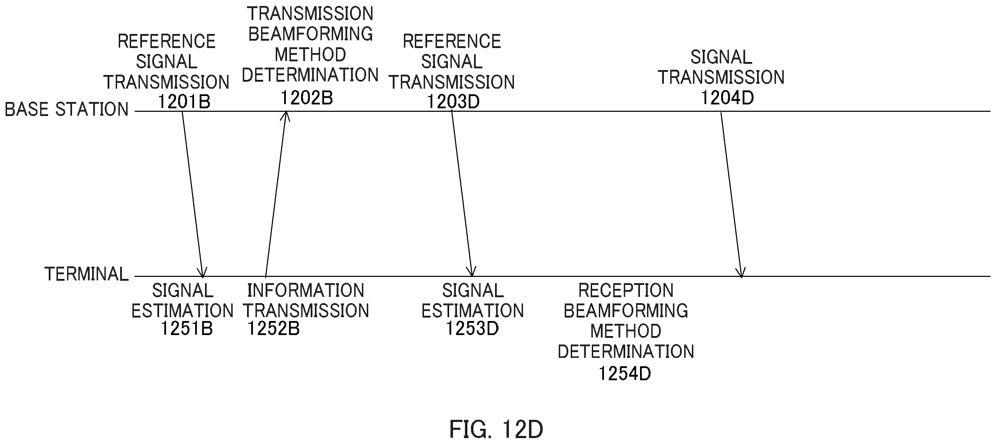

FIG. 12D is a diagram illustrating an example of interaction between a base station and a terminal when the base station performs transmission beamforming and the terminal performs reception beamforming;

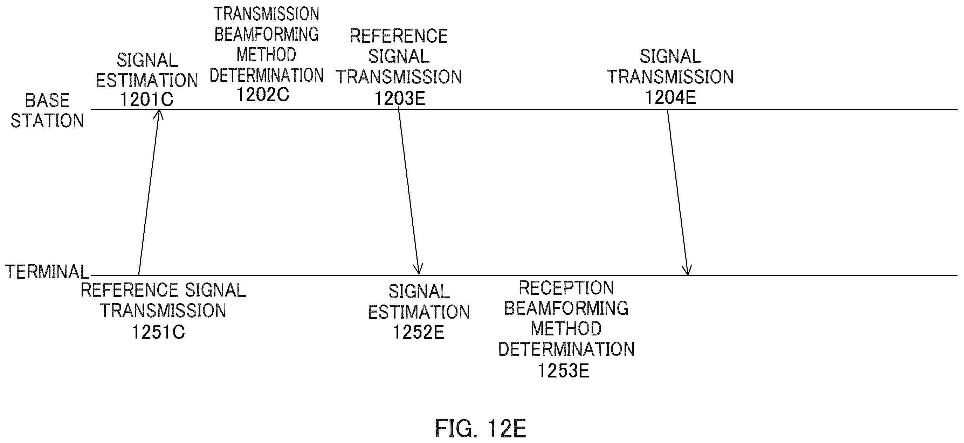

FIG. 12E is a diagram illustrating an example different from FIG. 12D of interaction between a base station and a terminal when the base station performs transmission beamforming and the terminal performs reception beamforming;

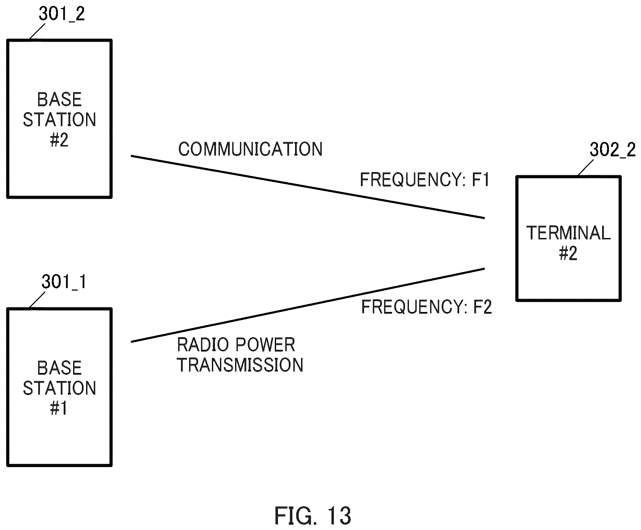

FIG. 13 is a diagram illustrating another example of a relationship between base stations and a terminal;

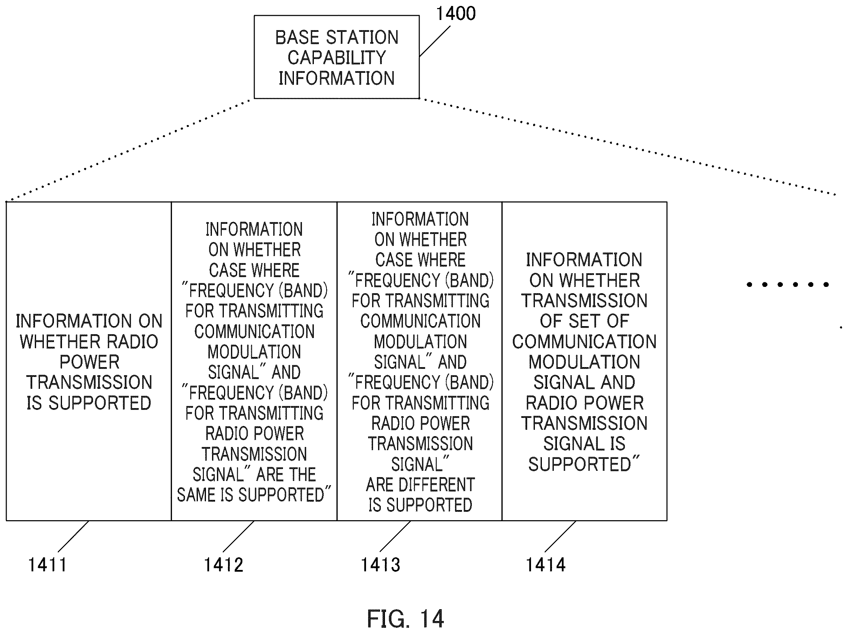

FIG. 14 is a diagram illustrating an exemplary configuration of base station capability information transmitted from the base station in FIGS. 3A and 3C to the terminals;

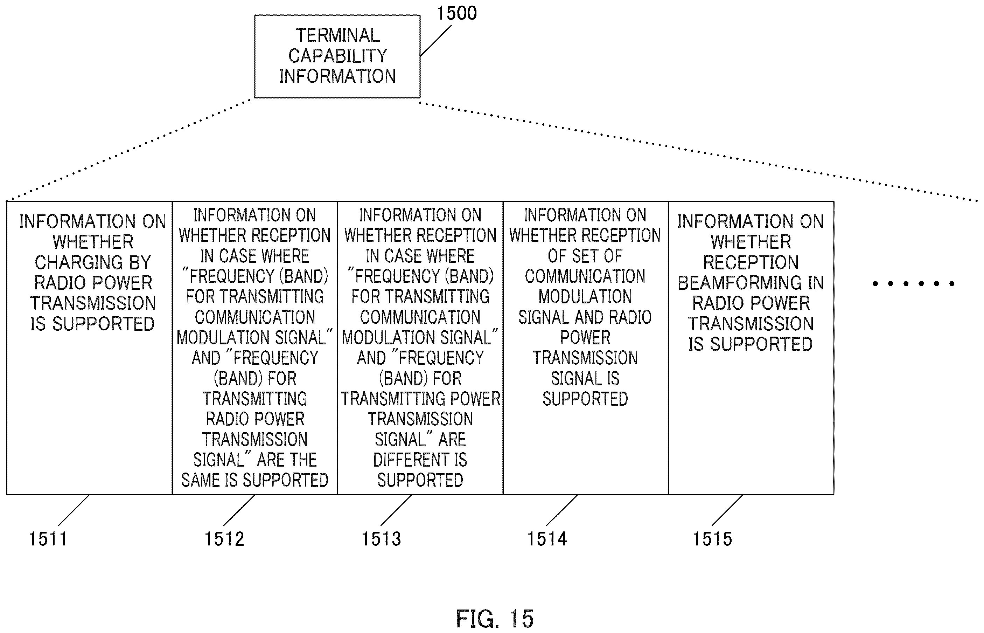

FIG. 15 is a diagram illustrating an exemplary configuration of terminal capability information transmitted from the terminals in FIGS. 3A and 3C to the base station;

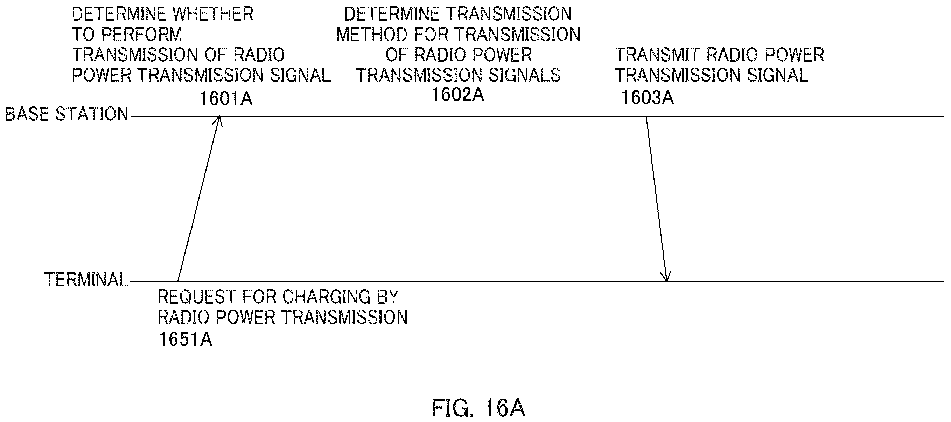

FIG. 16A is a diagram illustrating an example of interaction between the base station and the terminal in FIG. 3A;

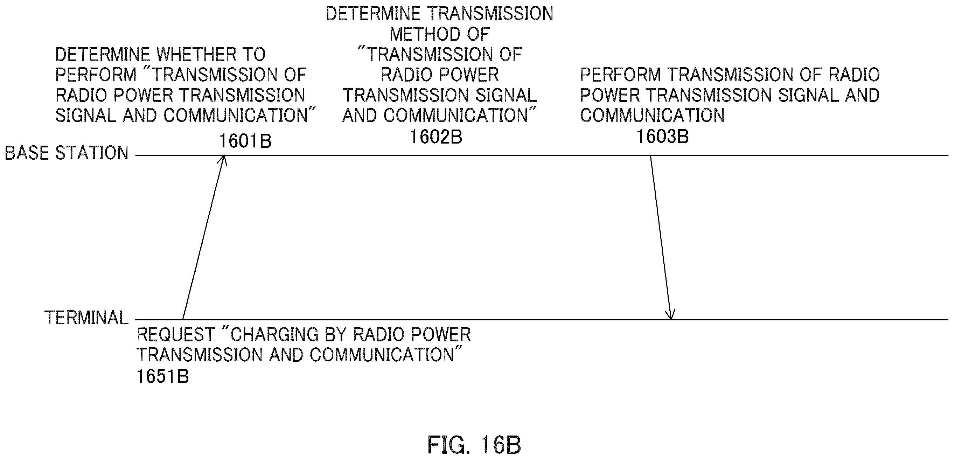

FIG. 16B is a diagram illustrating an example different from FIG. 16A of interaction between the base station and the terminals in FIG. 3A;

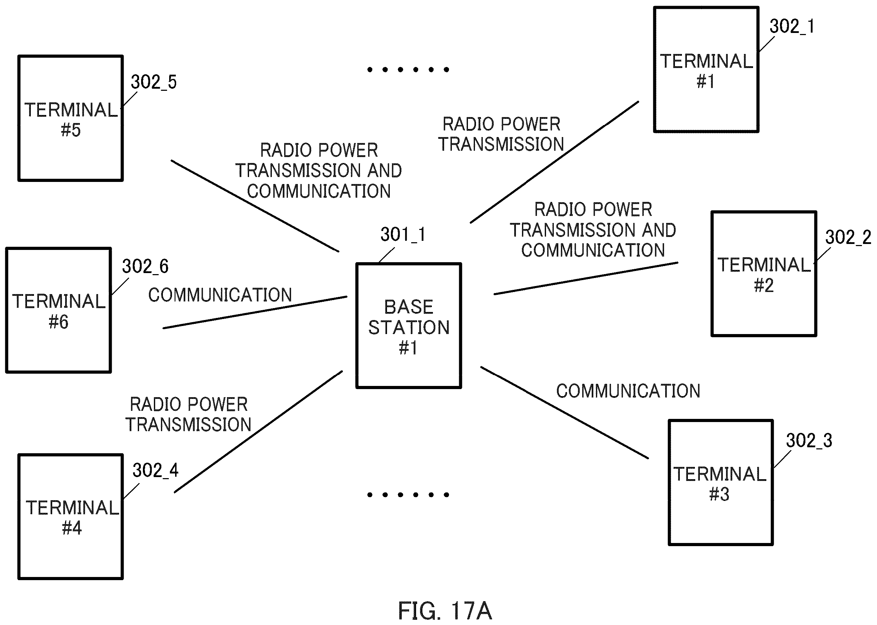

FIG. 17A is a diagram illustrating an example different from FIGS. 3A and 3C of a relationship between the base station and the terminals;

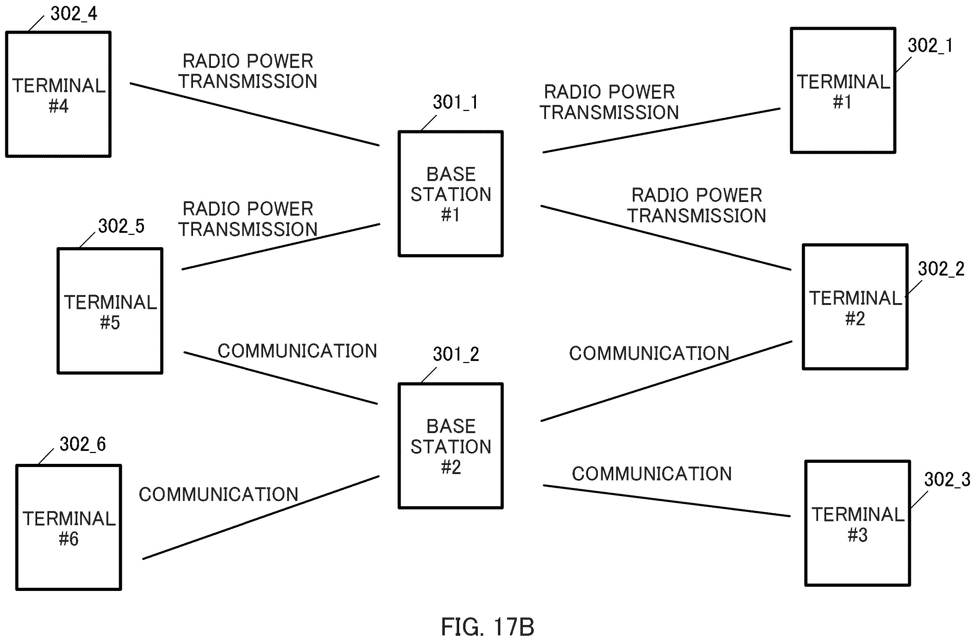

FIG. 17B is a diagram illustrating an example different from FIGS. 3A, 3C, and 17A of a relationship between the base stations and the terminals;

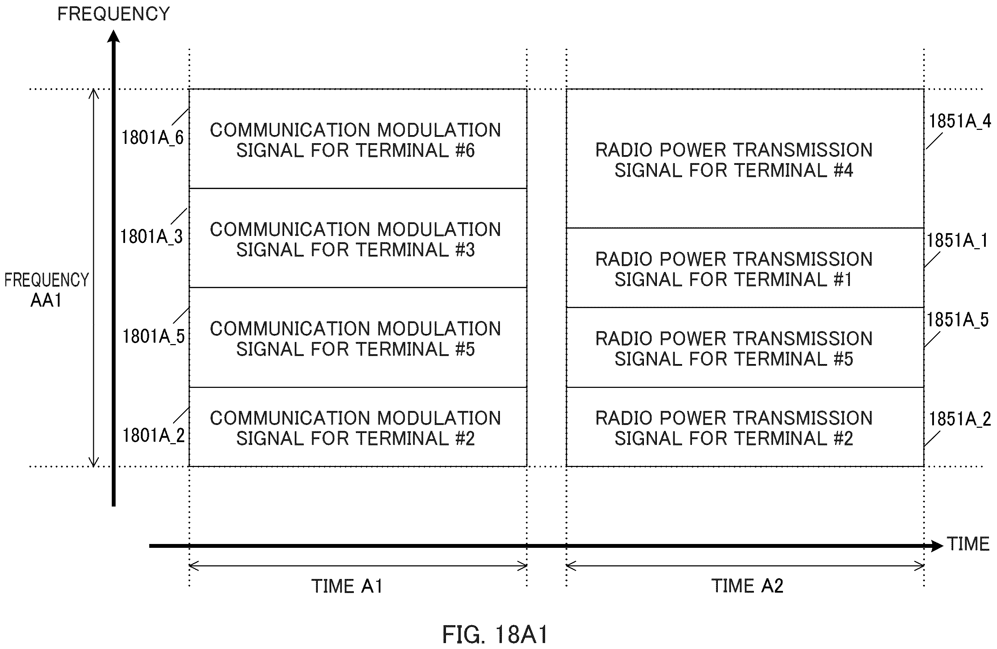

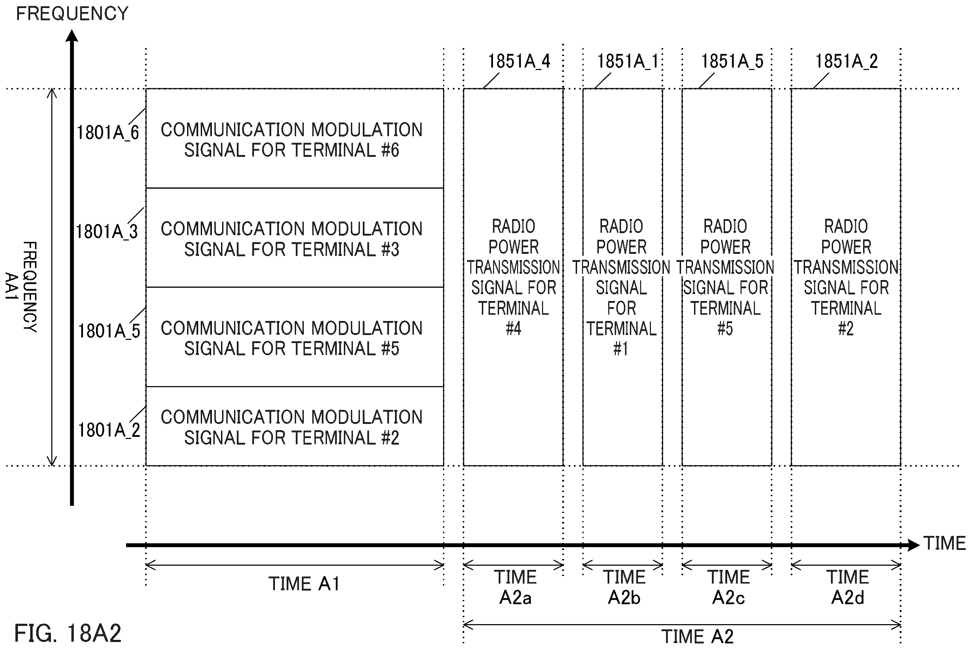

FIG. 18A1 is a diagram illustrating an exemplary configuration of a modulation signal and a signal in a time-frequency domain transmitted by base station #1 of FIG. 17A;

FIG. 18A2 is a diagram illustrating an exemplary configuration of a modulation signal and a signal in a time-frequency domain transmitted by base station #1 of FIG. 17A;

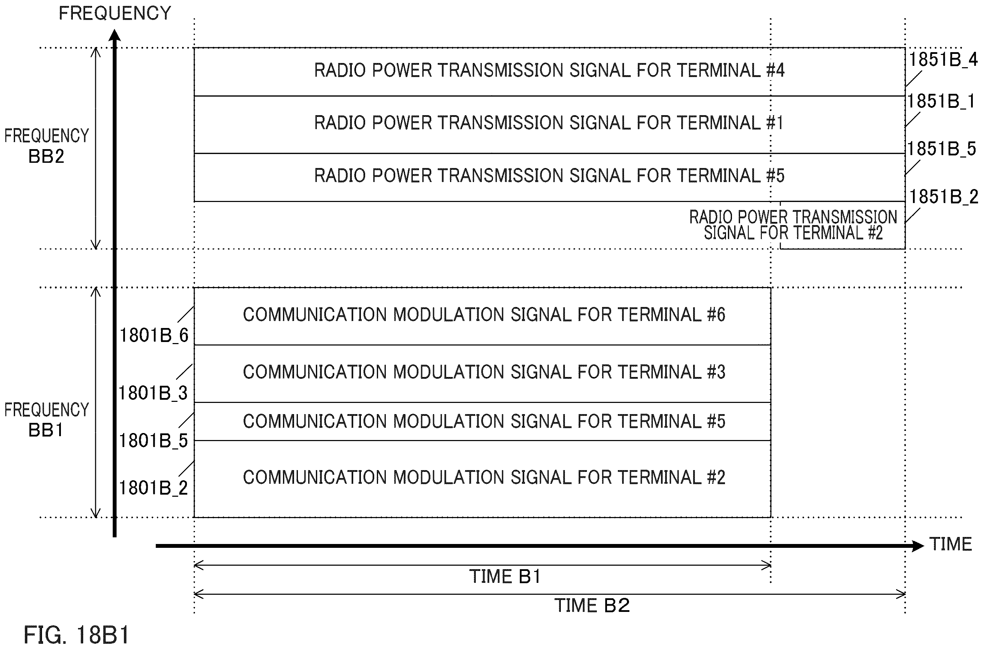

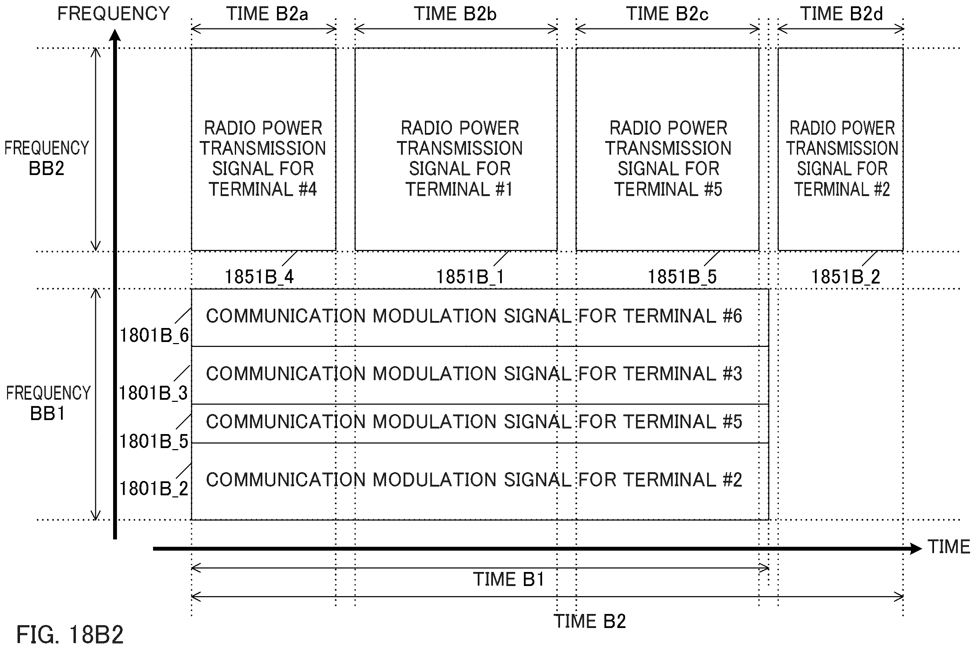

FIG. 18B1 is a diagram illustrating an exemplary configuration of the modulation signal and the signal in the time-frequency domain transmitted by base station #1 of FIG. 17A;

FIG. 18B2 is a diagram illustrating an exemplary configuration of the modulation signal and the signal in the time-frequency domain transmitted by base station #1 of FIG. 17A;

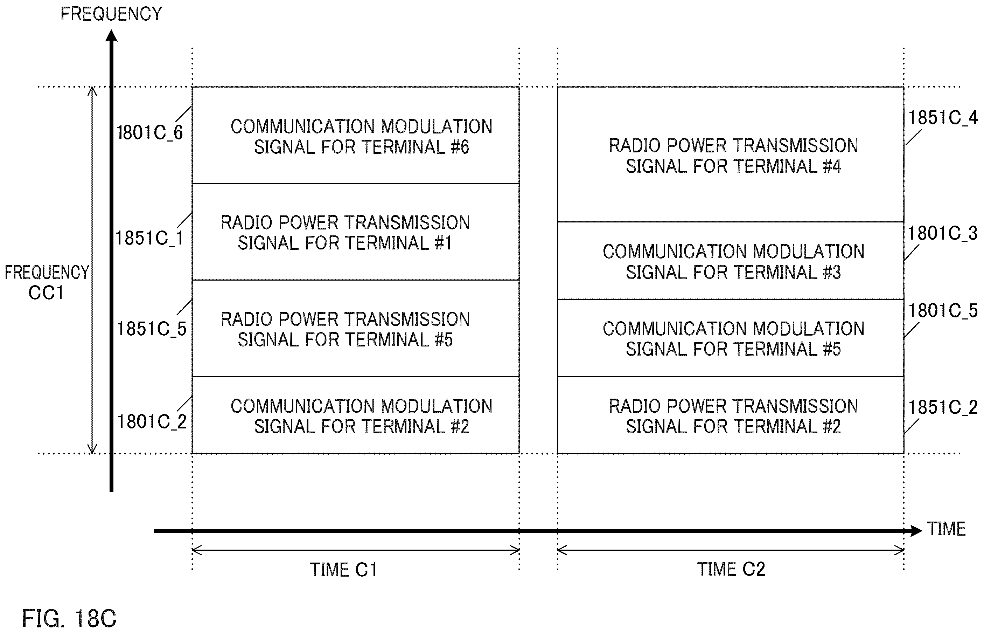

FIG. 18C is a diagram illustrating an exemplary configuration of the modulation signal and the signal in the time-frequency domain transmitted by base station #1 of FIG. 17A; and

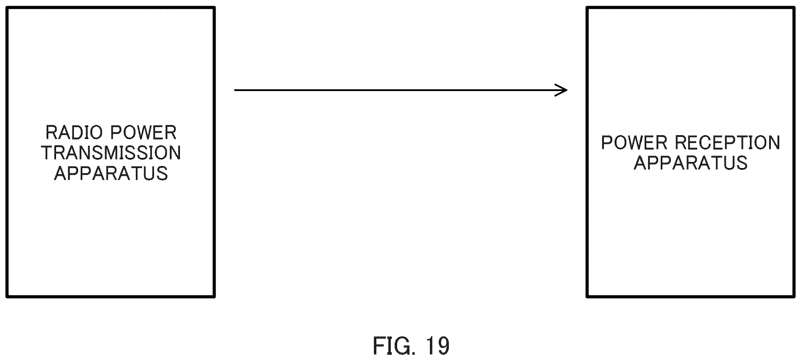

FIG. 19 is a diagram illustrating an example of a radio power transmission system according to the related art.

Hereinafter, embodiments of the present disclosure will be described in detail with reference to the accompanying drawings.

(Embodiment 1)

In Embodiment 1, a system and an apparatus for radio power transmission will be described.

FIG. 1A illustrates an exemplary configuration of an "apparatus for power transmission and communication (hereinafter, may be referred to as "power transmission and communication apparatus")" in the present embodiment, such as a base station or an access point. The "power transmission and communication apparatus" may be an example of a radio apparatus or a radio power transmission apparatus.

Controller 199A outputs control signal 198A including communication control information and power transmission control information.

Power transmitter 101A receives reception data 125A and control signal 198A, and in a case where control signal 198A indicates performing power transmission, power transmitter 101A outputs transmission signals 102A_1, ..., 102A_i, ..., and 102A_M for power transmission. M is an integer of 1 or more, or an integer of 2 or more, and i is an integer of 1 or more and M or less.

Transmission signal 102A_1 for power transmission is output from power transmission antenna 1 of 103A_1 as a radio wave. Transmission signal 102A_i for power transmission is output from power transmission antenna i of 103A_i as a radio wave. Transmission signal 102A_M for power transmission is output from power transmission antenna M of 103A_M as a radio wave.

Communication processor 124A receives transmission data 126A and control signal 198A, and in a case where control signal 198A indicates performing communication, communication processor 124A performs processing, such as error correction encoding and modulation on transmission data 126A and outputs transmission signal 123A. Transmission signal 123A is output from communication antenna 121A as a radio wave.

Communication processor 124A receives reception signal 122A and control signal 198A via communication antenna 121A and performs processing, such as demodulation and error correction decoding on reception signal 122A based on control signal 198A and outputs reception data 125A.

In FIG. 1A, a configuration in which a processor not illustrated in FIG. 1A is added may be adopted. Further, communication antenna 121A and communication processor 124A of FIG. 1A (and FIG. 1B) may perform transmission and/or reception corresponding to Multiple-Input Multiple-Output (MIMO) transmission in which a plurality of modulation signals (a plurality of streams) are transmitted using a plurality of antennas. Therefore, communication antenna 121A may be one or more or two or more antennas. Further, transmission signal 123A may be composed of a plurality of signals. Reception signal 122A may be composed of a plurality of signals.

The configuration of power transmission antenna i of 103A_i will be described in detail, hereinafter.

In a case where a Radio Frequency (RF) circuit (analog circuit) including a power amplifier for power transmission and an RF circuit (analog circuit) including a power amplifier for communication are separated from each other as in FIG. 1A, it is also possible to obtain an effect that an RF circuit corresponding to an application such as transmission and communication can be easily provided.

FIG. 1B illustrates a configuration example different from the configuration of the "power transmission and communication apparatus" in the present embodiment, such as a base station or an access point illustrated in FIG. 1A. In FIG. 1B, the same reference numerals are assigned to components that operate in the same manner as in FIG. 1A, and a part of the description thereof will be omitted.

FIG. 1B is characterized in that power transmitter 101A outputs antenna control signal 104B_1 for controlling power transmission antenna 1 of power transmitter 103A_1, ..., antenna control signal 104B_i for controlling power transmission antenna i of power transmitter 103A_i, ..., and antenna control signal 104B_M for controlling power transmission antenna i of power transmitter 103A_M.

The configuration and operation of power transmission antenna i of 103A_i will be described in detail, hereinafter.

In a case where an RF circuit (analog circuit) including a power amplifier for power transmission and an RF circuit (analog circuit) including a power amplifier for communication are separated from each other as in FIG. 1B, it is also possible to obtain an effect that an RF circuit corresponding to an application such as transmission and communication can be easily provided.

FIG. 1C1 is an exemplary configuration of power transmission antenna i of 103A_i in FIGS. 1A and 1B. Note that, i is an integer of 1 or more and M or less. Further, power transmission antenna i of 103A_i is composed of four antennas as an example. However, the number of antennas constituting power transmission antenna i of 103A_i is not limited to four and may be 1 or more.

Distributor 152C receives input signal 151C corresponding to transmission signal 102A_i for power transmission in FIGS. 1A and 1B, and distributes input signal 151C and outputs signal 153C_1, signal 153C_2, signal 153C_3, and signal 153C_4.

Multiplication operator 154C_1 receives signal 153C_1 and control signal 150C, multiplies signal 153C_1 by a multiplication coefficient based on control signal 150C to generate a signal 155C_1 after coefficient multiplication and outputs signal 155C_1. Signal 155C_1 after coefficient multiplication is output from antenna 156C_1 as a radio wave. Control signal 150C corresponds to, for example, control signal 104B_i of FIG. 1B.

A description will be specifically given. Signal 153C_1 is represented by tp1(t). Note that, t represents time. In a case where the multiplication coefficient is represented by w1, signal 155C_1 after coefficient multiplication can be represented by tp1(t) × w1. Note that, tp1(t) can be represented by a complex number, and thus may be a real number. Further, w1 can be represented by a complex number and thus may be a real number.

Multiplication operator 154C_2 receives signal 153C_2 and control signal 150C, multiplies signal 153C_2 by a multiplication coefficient based on control signal 150C to generate a signal 155C_2 after coefficient multiplication and outputs signal 155C_2. Signal 155C_2 after coefficient multiplication is output from antenna 156C_2 as a radio wave. Control signal 150C corresponds to, for example, control signal 104B_i of FIG. 1B.

A description will be specifically given. Signal 153C_2 is represented by tp2(t). Note that, t represents time. In a case where the multiplication coefficient is represented by w2, signal 155C_2 after coefficient multiplication can be represented by tp2(t) × w2. Note that, tp2(t) can be represented by a complex number, and thus may be a real number. Further, w2 can be represented by a complex number and thus may be a real number.

Multiplication operator 154C_3 receives signal 153C_3 and control signal 150C, multiplies signal 153C_3 by a multiplication coefficient based on control signal 150C to generate a signal 155C_3 after coefficient multiplication and outputs signal 155C_3. Signal 155C_3 after coefficient multiplication is output from antenna 156C_3 as a radio wave. Control signal 150C corresponds to, for example, control signal 104B_i of FIG. 1B.

A description will be specifically given. Signal 153C_3 is represented by tp3(t). Note that, t represents time. In a case where the multiplication coefficient is represented by w3, signal 155C_3 after coefficient multiplication can be represented by tp3(t) × w3. Note that, tp3(t) can be represented by a complex number, and thus may be a real number. Further, w3 can be represented by a complex number and thus may be a real number.

Multiplication operator 154C_4 receives signal 153C_4 and control signal 150C, multiplies signal 153C_4 by a multiplication coefficient based on control signal 150C to generate signal 155C_4 after coefficient multiplication and outputs signal 155C_4. Signal 155C_4 after coefficient multiplication is output from antenna 156C_4 as a radio wave. Control signal 150C corresponds to, for example, control signal 104B_i of FIG. 1B.

A description will be specifically given. Signal 153C_4 is represented by tp4(t). Note that, t represents time. In a case where the multiplication coefficient is represented by w4, signal 155C_4 after coefficient multiplication can be represented by tp4(t) × w4. Note that, tp4(t) can be represented by a complex number, and thus may be a real number. Further, w4 can be represented by a complex number and thus may be a real number.

Note that, "the absolute values of w1, w2, w3, and w4 may be equal to each other." This corresponds to a case in which phase change is performed. Needless to say, the absolute values of w1, w2, w3, and w4 may not be equal to each other.

The values of w1, w2, w3, and w4 are set based on control signal 150C. The values of w1, w2, w3, and w4 may be switchable.

With the configuration described above, it is made possible to perform directivity control of signals for power transmission, and thus the apparatus that receives a signal for power transmission (hereinafter, may be referred to as "power transmission signal") transmitted by the "power transmission and communication apparatus," such as a base station or an access point can obtain an effect that highly efficient charging is possible.

FIG. 1C2 is an example different from the configuration of power transmission antenna i of 103A_i in FIGS. 1A and 1B illustrated in FIG. 1C1. Note that, i is an integer of 1 or more and M or less. In FIG. 1C2, the same reference numerals are assigned to components that operate in the same manner as in FIG. 1C1, and a part of the description thereof will be omitted.

Multiplication operator 154C_1 receives signal 153C_1 and control signal 150C, multiplies signal 153C_1 by a multiplication coefficient based on control signal 150C to generate a signal 155C_1 after coefficient multiplication and outputs signal 155C_1. Signal 155C_1 after coefficient multiplication is output from antenna 156C_1 as a radio wave. Control signal 150C corresponds to, for example, control signal 104B_i of FIG. 1B. Signal 153C_1 corresponds to, for example, transmission signal 102A_i for power transmission in FIGS. 1A and 1B.

A description will be specifically given. Signal 153C_1 is represented by tp1(t). Note that, t represents time. In a case where the multiplication coefficient is represented by w1, signal 155C_1 after coefficient multiplication can be represented by tp1(t) × w1. Note that, tp1(t) can be represented by a complex number and thus may be a real number. Further, w1 can be represented by a complex number and thus may be a real number.

The value of w1 is set based on control signal 150C. The value of w1 may be switchable.

In a case where application is made to power transmission antenna i of 103A_i in FIG. 1A, power transmission antenna i of 103A_i may be composed of antenna 156C_1 of FIG. 1C2.

With the configuration described above, it is made possible to perform directivity control of signals for power transmission, and thus the apparatus that receives a power transmission signal transmitted by the "power transmission and communication apparatus," such as a base station or an access point can obtain an effect that highly efficient charging is possible.

FIG. 1D1 is an exemplary configuration of a portion of power transmitter 101A and power transmitter 103A_i in FIG. 1A, which is composed of power transmission antenna i. Note that, i is an integer of 1 or more and M or less.

Transmission directivity controller 181D receives reception data 125A and control signal 198A. Transmission directivity controller 181D performs, for example, an arithmetic operation for transmission directivity control based on reception data 125A.

Reception data 125A may be an estimated signal of a channel or the like instead of data. In this case, transmission directivity controller 181D of FIG. 1D1 receives a signal instead of reception data 125A.

Transmission directivity controller 181D outputs v signals 102A_1, ..., 102A_i, ..., and 102A_M for power transmission based on the transmission directivity control.

Transmission directivity controller 181D may select an antenna to be used in accordance with the arithmetic operation of the transmission directivity control.

With the configuration described above, it is made possible to perform directivity control of signals for power transmission, and thus the apparatus that receives a power transmission signal transmitted by the "power transmission and communication apparatus," such as a base station or an access point can obtain an effect that highly efficient charging is possible.

FIG. 1D2 is an exemplary configuration of a portion of power transmitter 101A and power transmitter 103A_i in FIG. 1B, which is composed of power transmission antenna i. Note that, i is an integer of 1 or more and M or less. In FIG. 1D2, the same reference numerals are assigned to components that operate in the same manner as in FIG. 1D1, and a part of the description thereof will be omitted.

Transmission directivity controller 181D receives reception data 125A and control signal 198A. Transmission directivity controller 181D performs, for example, an arithmetic operation for transmission directivity control based on reception data 125A.

Reception data 125A may be an estimated signal of a channel or the like instead of data. In this case, transmission directivity controller 181D of FIG. 1D2 receives a signal instead of reception data 125A.

Transmission directivity controller 181D outputs v signals 102A_1, ..., 102A_i, ..., and 102A_M for power transmission based on the transmission directivity control.

Transmission directivity controller 181D may select an antenna to be used in accordance with the arithmetic operation of the transmission directivity control.

Further, transmission directivity controller 181D outputs, for example, antenna control signal 104B_i for controlling power transmission antenna i of 103A_i based on reception data 125A. Power transmission antenna i of 103A_i is controlled based on antenna control signal 104B_i, but since this point has already been described, the description thereof will be omitted.

Note that, reception data 125A may be an estimated signal of a channel or the like instead of data. In this case, transmission directivity controller 181D of FIG. 1D2 receives a signal instead of reception data 125A.

With the configuration described above, it is made possible to perform directivity control of signals for power transmission, and thus the apparatus that receives a power transmission signal transmitted by the "power transmission and communication apparatus," such as a base station or an access point can obtain an effect that highly efficient charging is possible.

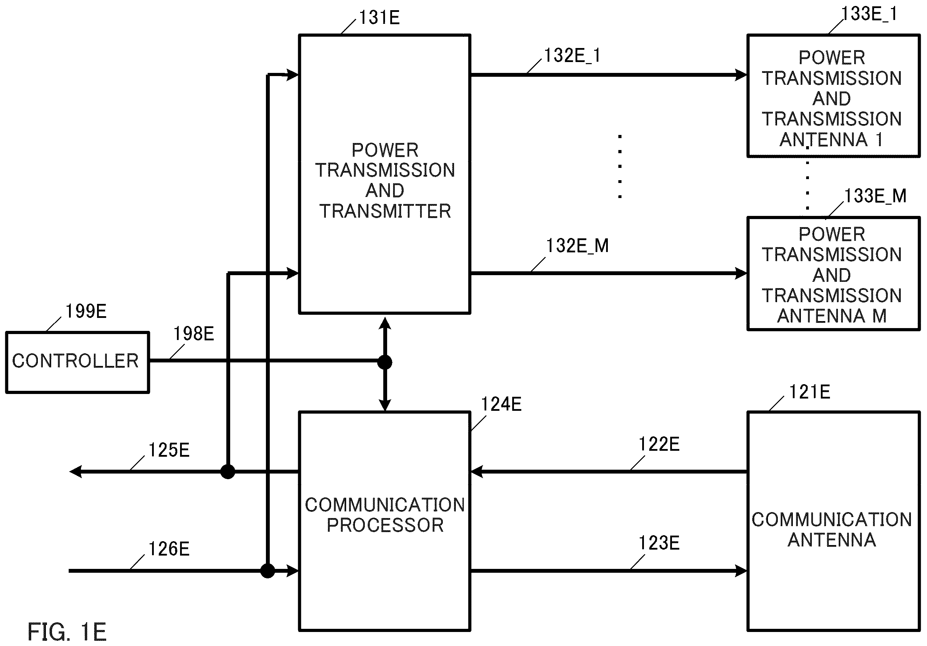

FIG. 1E illustrates an exemplary configuration of the "power transmission and communication apparatus" in the present embodiment, for example, a base station, an access point, or the like.

Controller 199E outputs control signal 198E including communication control information and power transmission control information.

Power transmission and transmitter 131E receives reception data 125E and control signal 198E, and in a case where control signal 198E indicates performing transmission, power transmission and transmitter 131E outputs transmission signals 132E_1, ..., 132E_i, ..., and 132E_M for power transmission. M is an integer of 1 or more, or an integer of 2 or more, and i is an integer of 1 or more and M or less.

Transmission signal 132E_1 for power transmission is output from power transmission and transmission antenna 1 of 133E_1 as a radio wave. Transmission signal 132E_i for power transmission is output from power transmission and transmission antenna i of 133E_i as a radio wave. Transmission signal 132E_M for power transmission is output from power transmission and transmission antenna M of 133E_M as a radio wave.

Power transmission and transmitter 131E receives reception data 125E, transmission data 126E, and control signal 198E, and in a case where control signal 198E indicates performing signal transmission for communication, transmission and transmitter 131E performs processing, such as error correction encoding and modulation on transmission data 126E, and outputs transmission signals 132E_1, ..., 132E_i, ..., and 132E_M for communication.

Transmission signal 132E_1 for communication is output from power transmission and transmission antenna 1 of 133E_1 as a radio wave. Transmission signal 132E_i for communication is output from power transmission and transmission antenna i of 133E_i as a radio wave. Transmission signal 132E_M for communication is output from power transmission and transmission antenna M of 133E_M as a radio wave.

Communication processor 124E receives transmission data 126E and control signal 198E, and in a case where control signal 198E indicates performing communication, communication processor 124E performs processing, such as error correction encoding and modulation on transmission data 126E, and outputs transmission signal 123E. Transmission signal 123E is output from communication antenna 121E as a radio wave.

Communication processor 124E receives reception signal 122E and control signal 198E via communication antenna 121E and performs processing, such as demodulation and error correction decoding on reception signal 122E based on control signal 198E, and outputs reception data 125E.

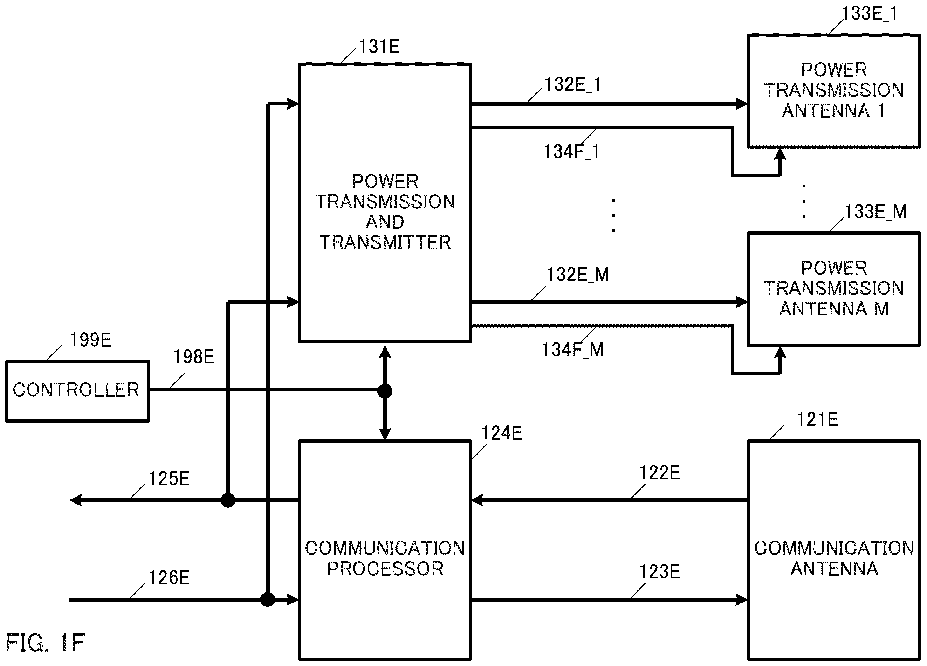

In FIG. 1E, a configuration in which a processor not illustrated in FIG. 1E is added may be adopted. Further, communication antenna 121E and communication processor 124E of FIG. 1E (and FIG. 1F) may perform transmission and/or reception corresponding to MIMO transmission in which a plurality of modulation signals (a plurality of streams) are transmitted using a plurality of antennas. Therefore, communication antenna 121E may be one or more or two or more antennas. Further, transmission signal 123E may be composed of a plurality of signals. Reception signal 122E may be composed of a plurality of signals.

The configuration of power transmission and transmission antenna i of 103E_i is the same as the configuration of power transmission antenna of 103A_i in FIGS. 1A and 1B, and has already been described, so the description thereof will be omitted.

With the configuration described above, it is made possible to perform directivity control of signals for power transmission, and thus the apparatus that receives a power transmission signal transmitted by the "power transmission and communication apparatus," such as a base station or an access point can obtain an effect that highly efficient charging is possible.

FIG. 1F illustrates a configuration example different from the configuration of the "power transmission and communication apparatus" in the present embodiment, for example, a base station, an access point, or the like, illustrated in FIG. 1E. In FIG. 1F, the same reference numerals are assigned to components that operate in the same manner as in FIG. 1E, and a part of the description thereof will be omitted.

FIG. 1F is characterized in that power transmission and transmitter 131E outputs antenna control signal 134F_1 for controlling power transmission and transmission antenna 1 of 133E_1, ..., antenna control signal 134F_i for controlling power transmission and transmission antenna i of 133E_i, ..., and antenna control signal 134F_M for controlling power transmission and transmission antenna M of 133E_M.

The configuration of power transmission and transmission antenna i of 103E_i is the same as the configuration of power transmission antenna of 103A_i in FIGS. 1A and 1B, and has already been described, so the description thereof will be omitted.

With the configuration described above, it is made possible to perform directivity control of signals for power transmission, and thus the apparatus that receives a power transmission signal transmitted by the "power transmission and communication apparatus," such as a base station or an access point can obtain an effect that highly efficient charging is possible.

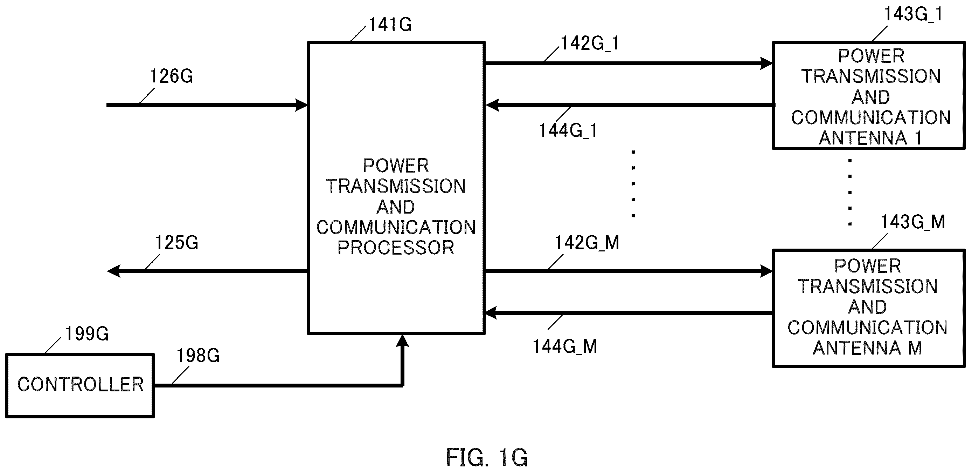

FIG. 1G illustrates an exemplary configuration of the "power transmission and communication apparatus" in the present embodiment, for example, a base station, an access point, or the like.

Controller 199G outputs control signal 198G including communication control information and power transmission control information.

Power transmission and communication processor 141G receives control signal 198G and reception signals 144G_1, ..., 144G_i, ..., and 144G_M for communication, and in a case where control signal 198G indicates performing the transmission, power transmission and communication processor 141G outputs transmission signals 142G_1, ..., 142G_i, ..., and 142G_M for power transmission. M is an integer of 1 or more, or an integer of 2 or more, and i is an integer of 1 or more and M or less.

Transmission signal 142G_1 for power transmission is output from power transmission and communication antenna 1 of 143G_1 as a radio wave. Transmission signal 142G_i for power transmission is output from power transmission and communication antenna i of 143G_i as a radio wave. Transmission signal 142G_M for power transmission is output from power transmission and communication antenna M of 143G_M as a radio wave.

Power transmission and communication processor 141G receives control signal 198G, reception signals 144G_1, ..., 144G_i, ..., and 144G_M for communication, and transmission data 126G, and in a case where control signal 198G indicates performing signal transmission for communication, power transmission and communication processor 141G performs processing, such as error correction encoding and modulation on transmission data 126G, and outputs transmission signals 142G_1, ..., 142G_i, ..., and 142G_M for communication.

Transmission signal 142G_1 for communication is output from power transmission and communication antenna 1 of 143G_1 as a radio wave. Transmission signal 142G_i for communication is output from power transmission and communication antenna i of 143G_i as a radio wave. Transmission signal 142G_M for communication is output from power transmission and communication antenna M of 143G_M as a radio wave.

Power transmission and communication processor 141G receives control signal 198G, reception signals 144G_1, ..., 144G_i, ..., and 144G_M for communication, and transmission data 126G. In a case where control signal 198G indicates performing the signal reception for communication, power transmission and communication processor 141G receives reception signals 144G_1, ..., 144G_i, ..., and 144G_M for communication received by power transmission and communication antenna 1 of 143G_1, power transmission and communication antenna i of 143G_i, and power transmission and communication antenna M of 143G_M, and performs processing, such as demodulation and error correction decoding on reception signals 144G_1, ..., 144G_i, ..., and 144G_M for communication received by power transmission and communication antenna 1 of 143G_1, power transmission and communication antenna i of 143G_i, and power transmission and communication antenna M of 143G_M, and outputs reception data 125G.

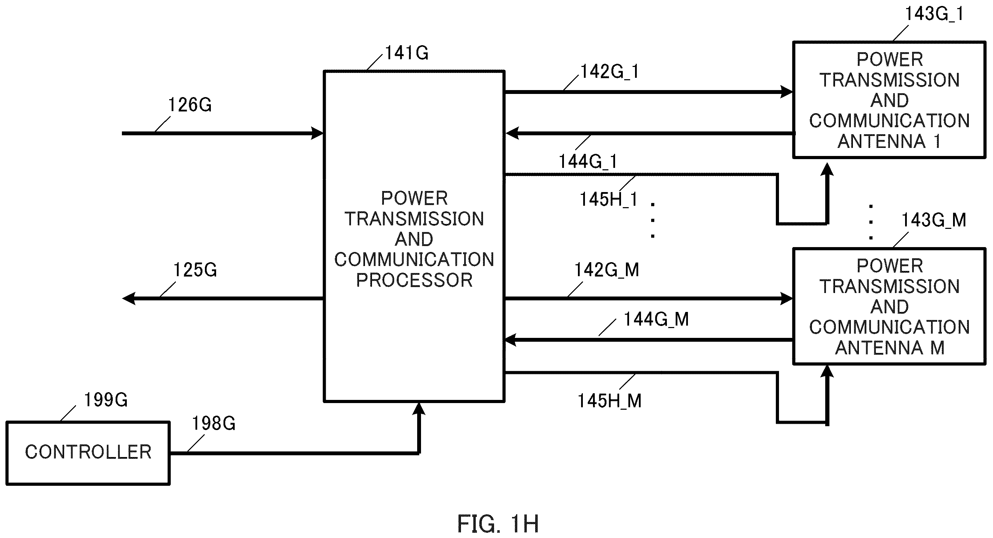

In FIG. 1G, a configuration in which a processor not illustrated in FIG. 1G is added may be adopted. Further, power transmission and communication processor 141G of FIG. 1G (and FIG. 1H) may perform transmission and/or reception corresponding to MIMO transmission in which a plurality of modulation signals (a plurality of streams) are transmitted using a plurality of antennas.

The configuration of power transmission and communication antenna i of 143G_i is the same as the configuration of power transmission antenna of 103A_i in FIGS. 1A and 1B, and has already been described, so the description thereof will be omitted.

With the configuration described above, it is made possible to perform directivity control of signals for power transmission, and thus the apparatus that receives a power transmission signal transmitted by the "power transmission and communication apparatus," such as a base station or an access point can obtain an effect that highly efficient charging is possible.

FIG. 1H illustrates a configuration example different from the configuration of the "power transmission and communication apparatus" in the present embodiment, for example, a base station, an access point, or the like, illustrated in FIG. 1G. In FIG. 1H, the same reference numerals are assigned to components that operate in the same manner as in FIG. 1G, and a part of the description thereof will be omitted.

FIG. 1H is characterized in that power transmission and communication processor 141G outputs an antenna control signal 145H_1 for controlling power transmission and communication antenna 1 of 143G_1, ..., antenna control signal 145H_i for controlling power transmission and communication antenna i of 143G_i, ..., and antenna control signal 145H_M for controlling power transmission and communication antenna M of 143G_M.

The configuration of power transmission and communication antenna i of 143G_i is the same as the configuration of power transmission antenna of 103A_i in FIGS. 1A and 1B, and has already been described, so the description thereof will be omitted.

With the configuration described above, it is made possible to perform directivity control of signals for power transmission, and thus the apparatus that receives a power transmission signal transmitted by the "power transmission and communication apparatus," such as a base station or an access point can obtain an effect that highly efficient charging is possible.

FIGS. 1A, 1B, 1D1, 1D2, 1E, 1F, 1G, and 1H are examples of configurations of the "power transmission and communication apparatus" such as a base station and an access point, and the configuration method for the apparatus is not limited to these examples.

FIG. 2A illustrates an exemplary configuration of an apparatus (e.g., a terminal) that receives a power transmission signal transmitted by the "power transmission and communication apparatus," such as a base station or an access point to charge a battery (secondary battery). The apparatus (e.g., a terminal) that performs charging of a battery (secondary battery) may be an example of a radio apparatus or a power reception apparatus.

Controller 299A receives reception data 225A (or signal generated by receiving), and outputs control signal 298A including communication control information of communication and charging control information.

Charger 203A receives control signal 298A, reception data 225A, and reception signals 202A_1, ..., 202A_i, ..., and 202A_N for charging received by power reception antenna 1 of 201A_1, power reception antenna i of 201A_i, and power reception antenna N of 201A_N, and in a case where control signal 298A indicates performing charging, charger 203A performs charging of the battery (secondary battery). N is an integer of 1 or more, or an integer of 2 or more, and i is an integer of 1 or more and N or less.

Communication processor 224A receives transmission data 226A and control signal 298A, and in a case where control signal 298A indicates performing communication, communication processor 224A performs processing, such as error correction encoding and modulation on transmission data 226A and outputs transmission signal 223A. Transmission signal 223A is output from communication antenna 221A as a radio wave.

Communication processor 224A receives reception signal 222A and control signal 298A via communication antenna 221A and performs processing, such as demodulation and error correction decoding on reception signal 222A based on control signal 298A and outputs reception data 225A.

In FIG. 2A, a configuration in which a processor not illustrated in FIG. 2A is added may be adopted. Further, communication antenna 221A and communication processor 224A of FIG. 2A (and FIG. 2B) may perform transmission and/or reception corresponding to MIMO transmission in which a plurality of modulation signals (a plurality of streams) is transmitted using a plurality of antennas. Therefore, communication antenna 221A may be one or more or two or more antennas. Further, transmission signal 223A may be composed of a plurality of signals. Reception signal 222A may be composed of a plurality of signals.

The configuration of power reception antenna i of 201A_i will be described in detail, hereinafter.

With the configuration described above, it is made possible to perform directivity control of a signal in a case of power reception for charging, and thus, in some cases, highly efficient charging is possible. This point will be described in detail, hereinafter.

Further, in a case where an RF circuit (analog circuit) for charging and an RF circuit (analog circuit) for communication are separated from each other as in FIG. 2A, it is also possible to obtain an effect that an RF circuit corresponding to an application, such as charging and communication can be easily provided (e.g., the presence or absence of Low Noise Amplifier).

FIG. 2B illustrates a configuration example different from the configuration of the "power transmission and communication apparatus" in the present embodiment, for example, a base station, an access point, or the like, illustrated in FIG. 2A. In FIG. 2B, the same reference numerals are assigned to components that operate in the same manner as in FIG. 2A, and a part of the description thereof will be omitted.

FIG. 2B is characterized in that charger 203A outputs antenna control signal 204B_1 for controlling power reception antenna 1 of 201A_1, ..., an antenna control signal 204B_i for controlling power reception antenna i of 201A_i, ..., and antenna control signal 204B_N for controlling power reception antenna N of 201A_N.

The configuration of power reception antenna i of 201A_i will be described in detail, hereinafter.

With the configuration described above, it is made possible to perform directivity control of a signal in a case of power reception for charging, and thus, in some cases, highly efficient charging is possible. This point will be described in detail, hereinafter.

Further, in a case where an RF circuit (analog circuit) for charging and an RF circuit (analog circuit) for communication are separated from each other as in FIG. 2A, it is also possible to obtain an effect that an RF circuit corresponding to an application, such as charging and communication can be easily provided (e.g., the presence or absence of Low Noise Amplifier).

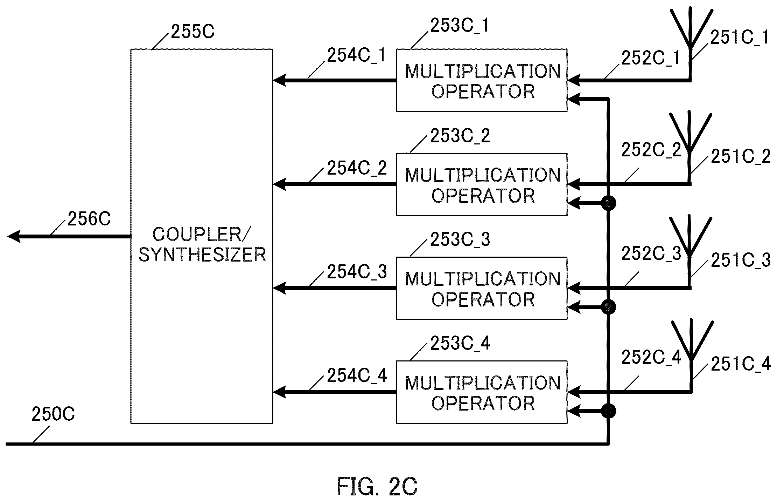

FIG. 2C is an exemplary configuration of power transmission antenna i of 201A_i in FIGS. 2A and 2B. Note that, i is an integer of 1 or more and N or less. Further, power transmission antenna i of 201A_i is composed of four antennas as an example. However, the number of antennas constituting power transmission antenna i of 201A_i is not limited to four and may be 1 or more.

Multiplication operator 253C_1 receives first reception signal 252C_1 and control signal 250C via antenna 251C_1, multiplies first reception signal 252C_1 by a multiplication coefficient based on control signal 250C and outputs first reception signal 254C_1 after coefficient multiplication. Control signal 250C corresponds to, for example, control signal 204B_i of FIG. 2B.

A description will be specifically given. First reception signal 252C_1 is represented by rp1(t). Note that, t represents time. In a case where the multiplication coefficient is represented by d1, reception signal 254C_1 after coefficient multiplication can be represented by rp1(t) × d1. Note that, rp1(t) can be represented by a complex number and thus may be a real number. Further, d1 can be represented by a complex number and thus may be a real number.

Multiplication operator 253C_2 receives second reception signal 252C_2 and control signal 250C via antenna 251C_2, multiplies second reception signal 252C_2 by a multiplication coefficient based on control signal 250C and outputs second reception signal 254C_2 after coefficient multiplication. Control signal 250C corresponds to, for example, control signal 204B_i of FIG. 2B.

A description will be specifically given. Second reception signal 252C_2 is represented by rp2(t). Note that, t represents time. In a case where the multiplication coefficient is represented by d2, second reception signal 254C_2 after coefficient multiplication can be represented by rp2(t) × d2. Note that, rp2(t) can be represented by a complex number and thus may be a real number. Further, d2 can be represented by a complex number and thus may be a real number.

Multiplication operator 253C_3 receives third reception signal 252C_3 and control signal 250C via antenna 251C_3, multiplies third reception signal 252C_3 by a multiplication coefficient based on control signal 250C and outputs third reception signal 254C_3 after coefficient multiplication. Control signal 250C corresponds to, for example, control signal 204B_i of FIG. 2B.

A description will be specifically given. Third reception signal 252C_3 is represented by rp3(t). Note that, t represents time. In a case where the multiplication coefficient is represented by d3, third reception signal 254C_3 after coefficient multiplication can be represented by rp3(t) × d3. Note that, rp3(t) can be represented by a complex number and thus may be a real number. Further, d3 can be represented by a complex number and thus may be a real number.

Multiplication operator 253C_4 receives fourth reception signal 252C_4 and control signal 250C via antenna 251C_4, multiplies fourth reception signal 252C_4 by a multiplication coefficient based on control signal 250C and outputs fourth reception signal 254C_4 after coefficient multiplication. Control signal 250C corresponds to, for example, control signal 204B_i of FIG. 2B.

A description will be specifically given. Fourth reception signal 252C_4 is represented by rp4(t). Note that, t represents time. In a case where the multiplication coefficient is represented by d4, fourth reception signal 254C_4 after coefficient multiplication can be represented by rp4(t) × d4. Note that, rp4(t) can be represented by a complex number and thus may be a real number. Further, d4 can be represented by a complex number and thus may be a real number.

Coupler and synthesizer 255C receives first reception signal 254C_1 after coefficient multiplication, second reception signal 254C_2 after coefficient multiplication, third reception signal 254C_3 after coefficient multiplication, and fourth reception signal 254C_4 after coefficient multiplication, combines first reception signal 254C_1 after coefficient multiplication, second reception signal 254C_2 after coefficient multiplication, third reception signal 254C_3 after coefficient multiplication, and fourth reception signal 254C_4 after coefficient multiplication, and outputs signal 256C. Signal 256C is represented by rp1(t) × d1 + rp2(t) × d2 + rp3(t) × d3 + rp4(t) × d4.

Note that, signal 256C corresponds to reception signal 202A_i for charging received by power reception antenna i of 201A_i in FIGS. 2A and 2B.

Note that, "the absolute values of d1, d2, d3, and d4 may be equal to each other." This corresponds to a case in which phase change is performed. Needless to say, the absolute values of d1, d2, d3, and d4 may not be equal to each other.

The values of d1, d2, d3, and d4 are set based on control signal 250C. The values of d1, d2, d3, and d4 may be switchable.

With the configuration described above, it is made possible to perform directivity control of a signal in a case of power reception for charging, and thus, in some cases, highly efficient charging is possible. This point will be described in detail, hereinafter.

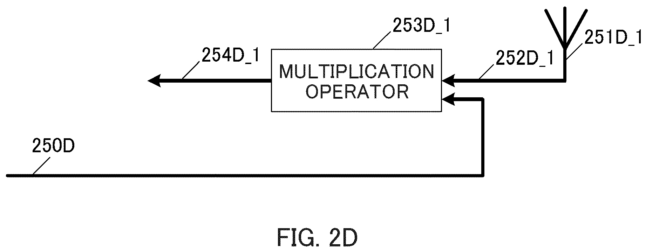

FIG. 2D is an example different from the configuration of power reception antenna i of 201A_i in FIGS. 2A and 2B illustrated in FIG. 2C. Note that, i is an integer of 1 or more and N or less.

Multiplication operator 253D_1 receives first reception signal 252D_1 and control signal 250D via antenna 251D_1, multiplies first reception signal 252D_1 by a multiplication coefficient based on control signal 250D and outputs first reception signal 254D_1 after coefficient multiplication. Control signal 250D corresponds to, for example, control signal 204B_i of FIG. 2B.

A description will be specifically given. First reception signal 252D_1 is represented by rp1(t). Note that, t represents time. In a case where the multiplication coefficient is represented by d1, first reception signal 254D_1 after coefficient multiplication can be represented by rp1(t) $\times$ d1. Note that, rp1(t) can be represented by a complex number and thus may be a real number. Further, d1 can be represented by a complex number and thus may be a real number.

First reception signal 254D_1 after coefficient multiplication corresponds to reception signal 202A_i for charging received by power reception antenna i of 201A_i in FIGS. 2A and 2B.

The value of d1 is set based on control signal 250D. The value of d1 may be switchable.

With the configuration described above, it is made possible to perform directivity control of a signal in a case of power reception for charging, and thus, in some cases, highly efficient charging is possible. This point will be described in detail, hereinafter.

FIG. 2E illustrates an exemplary configuration of an apparatus (e.g., a terminal) that receives a power transmission signal transmitted by the "power transmission and communication apparatus," such as a base station and an access point to charge a battery (secondary battery).

Controller 299E receives reception data 225E (or signal generated by receiving) and outputs control signal 298E including communication control information and charging control information.

Charger and receiver 233E receives control signal 298E, reception data 225E, and reception signals 232E_1, ..., 232E_i, ..., and 232E_N for charging received by power reception and reception antenna 1 of 231E_1, power reception and reception antenna i of 231E_i, and power reception and reception antenna N of 231E_N, and in a case where control signal 298E indicates performing charging, charger and receiver 233E performs the charging of the battery (secondary battery). N is an integer of 1 or more, or an integer of 2 or more, and i is an integer of 1 or more and N or less.

Charger and receiver 233E receives control signal 298E, reception data 225E, and reception signals 232E_1, ..., 232E_i, ..., and 232E_N for communication received by power reception and reception antenna 1 of 231E_1, power reception and reception antenna i of 231E_i, and power reception and reception antenna N of 231E_N, and in a case where control signal 298E indicates performing signal reception for communication, charger and receiver 233E performs processing, such as demodulation and error correction decoding on reception signals 232E_1, ..., 232E_i, ..., and 232E_N for communication received by power reception and reception antenna 1 of 231E_1, power reception and reception antenna i of 231E_i, and power reception and reception antenna N of 231E_N, and outputs reception data 234E.

Communication processor 224E receives transmission data 226E and control signal 298E, and in a case where control signal 298E indicates performing communication, communication processor 224E performs processing, such as error correction encoding and modulation on transmission data 226E, and outputs transmission signal 223E. Transmission signal 223E is output from communication antenna 221E as a radio wave.

Communication processor 224E receives reception signal 222E and control signal 298E via communication antenna 221E and performs processing, such as demodulation and error correction decoding on reception signal 222E based on control signal 298E, and outputs reception data 225E.

In FIG. 2E, a configuration in which a processor not illustrated in FIG. 2E is added may be adopted. Further, communication antenna 221E and communication processor 224E of FIG. 2E (and FIG. 2F) may perform transmission and/or reception corresponding to MIMO transmission in which a plurality of modulation signals (a plurality of streams) are transmitted using a plurality of antennas. Therefore, communication antenna 221E may be one or more or two or more antennas. Further, transmission signal 223E may be composed of a plurality of signals. Reception signal 222E may be composed of a plurality of signals.

The configuration of power reception and reception antenna i of 231E_i is the same as the configuration of power reception antenna i of 201A_i in FIGS. 2A and 2B, and has already been described, so the description thereof will be omitted.

With the configuration described above, it is made possible to perform directivity control of a signal in a case of power reception for charging, and thus, in some cases, highly efficient charging is possible. This point will be described in detail, hereinafter.

FIG. 2F illustrates a configuration example different from the configuration of the apparatus (e.g., a terminal) that receives a power transmission signal transmitted by the "power transmission and communication apparatus," such as a base station and an access point to charge a battery (secondary battery) illustrated in FIG. 2E in the present embodiment. In FIG. 2F, the same reference numerals are assigned to components that operate in the same manner as in FIG. 2E, and a part of the description thereof will be omitted.

FIG. 2F is characterized in that charging and communication processor 233E outputs an antenna control signal 234F_1 for controlling power reception and communication antenna 1 of 231E_1, ..., an antenna control signal 234F_i for controlling power reception and communication antenna i of 231E_i, ..., and antenna control signal 234F_N for controlling power reception and communication antenna N of 231E_N.

The configuration of power reception and reception antenna i of 231E_i is the same as the configuration of power reception antenna i of 201A_i in FIGS. 2A and 2B, and has already been described, so the description thereof will be omitted.

With the configuration described above, it is made possible to perform directivity control of a signal in a case of power reception for charging, and thus, in some cases, highly efficient charging is possible. This point will be described in detail, hereinafter.

FIG. 2G illustrates an exemplary configuration of an apparatus (e.g., a terminal) that receives a power transmission signal transmitted by the "power transmission and communication apparatus," such as a base station and an access point to charge a battery (secondary battery).

Controller 299G receives reception data 234G (or signal generated by receiving) and outputs control signal 298G including communication control information and charging control information.

Charging and communication processor 273G receives control signal 298G, transmission data 235G, and reception signals 272G_1, ..., 272G_i, ..., and 272G_N for charging received by power reception and communication antenna 1 of 271G_1, power reception and communication antenna i of 271G_i, and power reception and communication antenna N of 271G_N, and in a case where control signal 298G indicates performing charging, charging and communication processor 273G performs charging of the battery (secondary battery). N is an integer of 1 or more, or an integer of 2 or more, and i is an integer of 1 or more and N or less.

Charging and communication processor 273G receives control signal 298G, transmission data 235G, and reception signals 272G_1, ..., 272G_i, ..., and 272G_N for communication received by power reception and communication antenna 1 of 271G_1, power reception and communication antenna i of 271G_i, and power reception and communication antenna N of 271G_N, and in a case where control signal 298G indicates performing signal transmission for communication, charging and communication processor 273G performs processing, such as error correction encoding and modulation on transmission data 235G, and outputs transmission signals 274G_1, ..., 274G_i, ..., and 274G_N for communication.

Transmission signal 274G_1 for communication is output from power reception and communication antenna 1 of 271G_1 as a radio wave. Transmission signal 274G_i, ..., for communication is output from power reception and communication antenna i of 271G_i as a radio wave. Transmission signal 274G_N, ..., for communication is output from power reception and communication antenna N of 271G_N as a radio wave.

Charging and communication processor 273G receives control signal 298G, transmission data 235G, and reception signals 272G_1, ..., 272G_i, ..., and 272G_N for communication received by power reception and communication antenna 1 of 271G_1, power reception and communication antenna i of 271G_i, and power reception and communication antenna N 271G_N. In a case where control signal 298G indicates performing signal reception for communication, charging and communication processor 273G performs processing, such as demodulation and error correction decoding on reception signals 272G_1, ..., 272G_i, ..., and 272G_N for communication received by power reception and communication antenna 1 of 271G_1, power reception and communication antenna i of 271G_i, and power reception and communication antenna N of 271G_N, and outputs reception data 234G.

In FIG. 2G, a configuration in which a processor not illustrated in FIG. 2G is added may be adopted. Further, charging and communication processor 273G of FIG. 2G (and FIG. 2H) may perform transmission and/or reception corresponding to MIMO transmission in which a plurality of modulation signals (a plurality of streams) are transmitted using a plurality of antennas.

The configuration of power reception and communication antenna i of 271G_i is the same as the configuration of power reception antenna i of 201A_i in FIGS. 2A and 2B, and has already been described, so the description thereof will be omitted.

With the configuration described above, it is made possible to perform directivity control of a signal in a case of power reception for charging, and thus, in some cases, highly efficient charging is possible. This point will be described in detail, hereinafter.

FIG. 2H illustrates a configuration example different from the configuration of the apparatus (e.g., a terminal) that receives a power transmission signal transmitted by the "power transmission and communication apparatus," such as a base station and an access point to charge a battery (secondary battery) illustrated in FIG. 2G in the present embodiment. In FIG. 2H, the same reference numerals are assigned to components that operate in the same manner as in FIG. 2G, and a part of the description thereof will be omitted.

FIG. 2H is characterized in that charging and communication processor 273G outputs antenna control signal 275H_1 for controlling power reception and communication antenna 1 of 271G_1, ..., antenna control signal 275H_i for controlling power reception and communication antenna i of 271G_i, ..., and an antenna control signal 275H_N for controlling power reception and communication antenna N of 271G_N.

The configuration of power reception and communication antenna i of 271G_i is the same as the configuration of power reception antenna i of 201A_i in FIGS. 2A and 2B, and has already been described, so the description thereof will be omitted.

With the configuration described above, it is made possible to perform directivity control of a signal in a case of power reception for charging, and thus, in some cases, highly efficient charging is possible. This point will be described in detail, hereinafter.

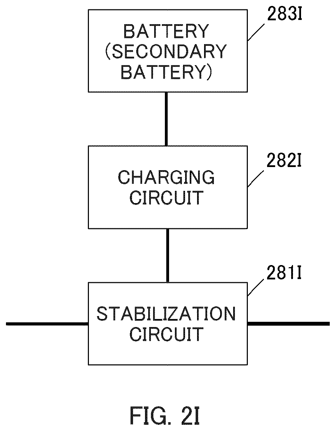

FIG. 2I illustrates an exemplary configuration of an operator related to charging provided in charger 203A of FIGS. 2A and 2B, charger and receiver 233E of FIGS. 2E and 2F, and charging and communication processor 273G of FIGS. 2G and 2H.

Stabilization circuit 281I receives a signal received by an antenna as an input and attempts to stabilize the signal. For example, stabilization circuit 281I can stabilize a Direct Current (DC) output by charging a capacitor in order to correspond to the fluctuating input power. The stabilized signal is transmitted to battery (secondary battery) 283I via charging circuit 282I, and battery (secondary battery) 283I is charged. Battery (secondary battery) 283I supplies power (voltage, current) to each part.

FIG. 2J1 illustrates an exemplary configuration of charger and receiver 233E of FIGS. 2E and 2F. In FIG. 2J1, the same reference numerals are assigned to components that operate in the same manner as in FIG. 2I, and a part of the description thereof will be omitted.

Switch 285J receives reception signal 284J and control signal 292J and outputs the signals to either Low Noise Amplifier (LNA) 287J or stabilization circuit 281I based on control signal 292J. Reception signal 284J corresponds to reception signal 232E_i for charging (communication) in FIGS. 2E and 2F, and control signal 292J corresponds to control signal 298E in FIGS. 2E and 2F.

It is characterized in that, in a case where reception signal 284J corresponding to reception signal 232E_i is a signal for communication, signal 286J is output. (In a case where reception signal 284J is a signal for charging, reception signal 284J is input to stabilization circuit 281I.)

LNA287J receives signal 286J and control signal 292J, amplifies signal 286J based on control signal 292J and outputs signal 288J.

Receiver 289J receives control signal 292J and signal 288J, performs demodulation, error correction decoding, and the like of signal 288J based on control signal 292J, outputs reception data 290J, and outputs signal 291J including control information, feedback information, and the signal obtained from the signal transmitted by the communication counterpart.

Antenna control signal 234F_i for controlling power reception and reception antenna i of 231E_i in FIG. 2F can be generated by using reception data 290J and signal 291J. This point will be described, hereinafter.

FIG. 2J2 illustrates an exemplary configuration of charging and communication processor 273G in FIGS. 2G and 2H. In FIG. 2J2, the same reference numerals are assigned to components that operate in the same manner as in FIGS. 2I and 2J1, and a part of the description thereof will be omitted.

Transmitter 294J receives transmission data 293J and control signal 292J, performs processing, such as error correction encoding and modulation on transmission data 293J based on control signal 292J, and outputs transmission signal 295J. Transmission data 293J corresponds to transmission data 235G in FIGS. 2G and 2H, and transmission signal 295J corresponds to transmission signal 274G_i for communication in FIGS. 2G and 2H.

FIG. 2K illustrates an exemplary configuration of a "communication processor in FIGS. 2A and 2B", a "charger and receiver in FIGS. 2E and 2F," and a "charging and communication processor in FIGS. 2G and 2H."

Reception processor 243K receives reception signal 241K and control signal 242K, performs demodulation, error correction decoding, and the like based on control signal 242K and outputs reception data 244K.

Reception signal 241K corresponds to "reception signal 222A in FIGS. 2A and 2B", "reception signal 232E_1 for communication received by power reception and reception antenna 1 of 231E_1, ..., reception signal 232E_i for communication received by power reception and reception antenna i of 231E_i, ..., and reception signal 232E_N for communication received by power reception and reception antenna N of 231E_N in FIGS. 2E and 2F," and "reception signal 272G_1 for communication received by power reception and communication antenna 1 of 271G_1, ..., 272G_i for communication received by power reception and communication antenna i of 271G_i, ..., and reception signal 272G_N for communication received by power reception and communication antenna N of 271G_N in FIGS. 2G and 2H".

Further, control signal 242K corresponds to "control signal 298A in FIGS. 2A and 2B", "control signal 298E in FIGS. 2E and 2F", and "control signal 298G in FIGS. 2G and 2H".

Reception data 244K corresponds to "reception data 225A in FIGS. 2A and 2B", "reception data 234E in FIGS. 2E and 2F", and "reception data 234G in FIGS. 2G and 2H".

Analyzer 245K receives reception signal 241K and control signal 242K, analyzes reception signal 241K, and outputs signal 246K of an analysis result.

Signal 246K of the analysis result corresponds to "reception data 225A in FIGS. 2A and 2B", "internal signal of charger and receiver 233E in FIGS. 2E and 2F", and the "internal signal of charging and communication processor 273G in FIGS. 2G and 2H".

The "communication processor in FIGS. 2A and 2B", the "charger and receiver in FIGS. 2E and 2F", and the "charging and communication processor in FIGS. 2G and 2H" perform reception directivity control in receiving a signal for charging by using signal 246K of the analysis result.

In order to perform the reception directivity control, based on signal 246K of analysis result, the following are generated: "antenna control signal 204B_1 for controlling power reception antenna 1 of 201A_1 in FIG. 2B, ..., antenna control signal 204B_i for controlling power reception antenna i of 201A_i, ..., and antenna control signal 204B_N for controlling power reception antenna N of 201A_N", "antenna control signal 234F_1 for controlling power reception and reception antenna 1 of 231E_1 in FIG. 2F, ..., antenna control signal 234F_i for controlling power reception and reception antenna i of 231E_i, ..., and antenna control signal 234F_N for controlling power reception and reception antenna N of 231E_N", and "antenna control signal 275H_1 for controlling power reception and communication antenna 1 of 271G_1 in FIG. 2H, ..., antenna control signal 275H_i for controlling power reception and communication antenna i of 271G_i, ..., and antenna control signal 275H_N for controlling power reception and communication antenna N of 271G_N."

With the configuration described above, it is made possible to perform directivity control of a signal in a case of power reception for charging, and thus, in some cases, highly efficient charging is possible. This point will be described in detail, hereinafter.

FIGS. 2A, 2B, 2E, 2F, 2G, and 2H are examples of the configuration of the apparatus (e.g., a terminal) that receives the power transmission signal transmitted by the "power transmission and communication apparatus," such as a base station and an access point to charge the battery (secondary battery), and the configuration method for the apparatus is not limited to these examples. Further, the apparatus that performs the charging of the battery (secondary battery) may include one or more or two or more batteries (secondary batteries).

FIG. 3A illustrates an example of a relationship between a base station and a terminal. For example, FIG. 3A illustrates an example of a relationship between a "base station that is an example of a "power transmission and communication apparatus" having a configuration such as FIGS. 1A, 1B, 1D1, 1D2, 1E, 1F, 1G, and 1H" and a "terminal that is an example of an apparatus that receives a power transmission signal transmitted by a "power transmission and communication apparatus" having a configuration such as FIGS. 2A, 2B, 2E, 2F, 2G, and 2H to charge a battery (secondary battery)".

It is assumed that base station #1 of 301_1 performs radio power transmission to terminal #1 of 302_1.

Further, it is assumed that base station #1 of 301_1 performs radio power transmission to terminal #2 of 302_2, and base station #1 of 301_1 and terminal #2 of 302_2 perform communication.

It is assumed that base station #1 of 301_1 and terminal #3 of 302_3 perform communication.

In the example of FIG. 3A, it is assumed that base station #1 of 301_1 has a function to perform radio power transmission and a function to perform communication. Since the configuration of the apparatus having the function to perform radio power transmission and the function to perform communication has already been described, the description thereof will be omitted.

Terminal #1 of 302_1 has a charging function by radio power transmission. In this case, the configuration is, for example, as illustrated in FIG. 3B1, the terminal includes charging function 398B. Further, as another method, a part of the communication function may be used. Since the configuration in this case has already been described, the description thereof will be omitted.

Terminal #2 of 302_2 has a charging function by radio power transmission and a communication function. Since the configuration in this case has already been described, the description thereof will be omitted.

Terminal #3 of 302_3 has a communication function. In this case, the configuration is, for example, as illustrated in FIG. 3B2, the terminal includes a communication function 399B.

In FIG. 3A, base station #1 of 301_1 performs interaction with three terminals, but base station #1 of 301_1 may perform interaction in the same manner with one or more terminals.

FIG. 3C illustrates another example of a relationship between a base station and a terminal. FIG. 3C illustrates an example different from FIG. 3A of a relationship between a "base station that is an example of a "power transmission and communication apparatus" having a configuration, such as FIGS. 1A, 1B, 1D1, 1D2, 1E, 1F, 1G, and 1H" and a "terminal that is an example of an apparatus that receives a power transmission signal transmitted by a "power transmission and communication apparatus" having a configuration, such as FIGS. 2A, 2B, 2E, 2F, 2G, and 2H to charge a battery (secondary battery)." In FIG. 3C, the same reference numerals are assigned to the same components as in FIG. 3A, and a part of the description thereof will be omitted.

It is assumed that base station #1 of 301_1 performs radio power transmission to terminal #1 of 302_1. Further, it is assumed that base station #1 of 301_1 performs radio power transmission to terminal #2 of 302_2.

It is assumed that base station #2 of 301_2 and terminal #2 of 302_2 perform communication. Further, it is assumed that base station #2 of 301_2 and terminal #3 of 302_3 perform communication.

In the example of FIG. 3C, it is assumed that base station #1 of 301_1 has a function to perform radio power transmission. Therefore, as illustrated in FIG. 3D1, base station #1 of 301_1 includes power transmission function 396D. As another method, a part of the communication function may be used. Since the configuration in this case has already been described, the description thereof will be omitted.

In the example of FIG. 3C, it is assumed that base station #2 of 301_2 has a function to perform communication. Therefore, as illustrated in FIG. 3D2, base station #2 of 301_2 includes communication function 397D.

Terminal #1 of 302_1 of FIG. 3C has a charging function by radio power transmission. In this case, the configuration is, for example, as illustrated in FIG. 3B1, the terminal includes charging function 398B. Further, as another method, a part of the communication function may be used. Since the configuration in this case has already been described, the description thereof will be omitted.

Terminal #2 of 302_2 of FIG. 3C has a charging function by radio power transmission and a communication function. Since the configuration in this case has already been described, the description thereof will be omitted.

Terminal #3 of 302_3 of FIG. 3C has a communication function. In this case, the configuration is, for example, as illustrated in FIG. 3B2, the terminal including communication function 399B.

Base station #1 of 301_1 and base station #2 of 301_2 in FIG. 3C may perform communication. In this case, the communication may be performed via another apparatus.

Further, in FIG. 3C, an example is illustrated in a case where the number of base stations is 2 and the number of terminals is 3, but the present disclosure is not limited to this, and the same can be performed in a case where the number of base stations is 1 or 2 or more and the number of terminals is 1 or more.

As illustrated in FIGS. 3A and 3C, a "base station capable of radio power transmission (power transmission)," a "base station capable of communication," and a "base station capable of radio power transmission and communication" may be present in the system.

Further, as illustrated in FIGS. 3A and 3C, a "terminal capable of charging," a "terminal capable of communication," and a "terminal capable of charging and communication" may be present in the system.

Next, a method in which a terminal uses reception beamforming during charging will be described.

The configuration of the terminal that is the apparatus that receives a power transmission signal transmitted by the "power transmission and communication apparatus," such as a base station and an access point to charge a battery (secondary battery) is illustrated in FIGS. 2A, 2B, 2E, 2F, 2G, and 2H, and it is described that the reception beamforming can be used as described above. The terminal includes the configuration illustrated in FIG. 2K and performs the reception beamforming by using the analysis result of analyzer 245K.

Terminal #1 of 302_1 illustrated in FIGS. 3A and 3C will be focused on.

As a first example, it is assumed that terminal #1 of 302_1 does not perform the reception beamforming. In this case, since the configuration illustrated in FIG. 2K does not operate, terminal #1 of 302_1 receives a radio power transmission signal transmitted by base station #1 of 301_1, and the charging corresponding to the radio power transmission signal is performed.

As a second example, it is assumed that terminal #1 of 302_1 performs the reception beamforming. In this case, the configuration illustrated in FIG. 2K operates, and the power is consumed herein. Then, terminal #1 of 302_1 receives the radio power transmission signal transmitted by base station #1 of 301_1, and the charging corresponding to the radio power transmission signal is performed, but the efficiency of charging is reduced by the amount of power consumption of the configuration illustrated in FIG. 2K.

A charging method suitable for the situation of a terminal will be described below for the abovementioned problem.

As described with reference to FIGS. 3A and 3C, it is noted that the "terminal capable of charging," the "terminal capable of communication," and the "terminal capable of charging and communication" are present in the system; particularly, the "terminal capable of charging" and the "terminal capable of charging and communication" are present in the system.

In consideration of the abovementioned problem, it is assumed that the terminal has a mode illustrated in FIG. 4.

- Charging mode:
  A mode in which a terminal operates mainly for charging.
- Battery residual amount saving mode (or Battery residual amount decrease reducing mode:):
  The charging alone is not focused on. The terminal consumes the power by the operation of communication and/or the operation of an application, and the residual amount of the battery decreases. This mode is a mode for reducing the decrease in the residual amount of the battery.
- Communication mode:
  A mode in which a terminal (and a base station) performs communication.

In FIG. 4, for example, it is assumed that a screen mounted on a display provided in the terminal is assigned reference numeral 400.

It is assumed that the terminal supports any one or more of the "charging mode", the "battery residual amount saving mode", and the "communication mode".

In this case, for example, in a case where the terminal is in the "charging mode", the terminal may not perform the reception beamforming (reception directivity control) when receiving the radio power transmission signal transmitted by the base station for charging in order to improve the charging efficiency.

The base station may perform transmission beamforming (transmission directivity control) when transmitting the radio power transmission signal in order to improve the charging efficiency. (Transmission beamforming (transmission directivity control) may not be performed.)

It is assumed that the terminal in the "battery residual amount saving mode" performs communication. In this case, since the terminal performs the reception operation for communication, the terminal performs reception beamforming (reception directivity control) when receiving the modulation signal of the communication. Therefore, when performing the reception operation of the communication, the terminal is required to operate the analyzer for the reception beamforming (reception directivity control).

Therefore, the terminal receives the radio power transmission signal transmitted by the base station, based on the reception beamforming (reception directivity control) performed in conjunction with the reception operation of the communication, and performs the charging. As a result, it is possible to obtain an effect that the decrease in the residual amount of the battery can be reduced.

In this way, in a case where the "terminal capable of charging and communication" performs the reception beamforming in the communication and the charging in the "battery residual amount saving mode", the effect as described above can be obtained.

As already described, in the systems of FIGS. 3A and 3C, the "terminal capable of charging", the "terminal capable of communication", and the "terminal capable of charging and communication" are present. Hereinafter, the "terminal capable of charging and communication" will be described in detail.

In the description of the "terminal capable of charging and communication", first, the operation of the base station in FIGS. 3A and 3C will be described.

FIG. 5A illustrates an exemplary configuration in a time-frequency domain of a modulation signal transmitted by base station #1 of 301_1 of FIG. 3A in a case where base station #1 of 301_1 of FIG. 3A performs only communication. Further, FIG. 5A also illustrates a configuration of a modulation signal transmitted by base station #2 of 301_2 of FIG. 3C in a time-frequency domain. In FIG. 5A, the horizontal axis represents time, and the vertical axis represents frequency.

As illustrated in FIG. 5A, in the time-frequency domain, communication modulation signal 501 is present.

FIG. 5B illustrates an exemplary configuration in a time-frequency domain of a signal transmitted by base station #1 of 301_1 of FIG. 3A in a case where base station #1 of 301_1 of FIG. 3A performs only radio power transmission. Further, FIG. 5B also illustrates a configuration of a signal transmitted by base station #1 of 301_1 of FIG. 3C in a time-frequency domain. In FIG. 5B, the horizontal axis represents time, and the vertical axis represents frequency.

As illustrated in FIG. 5B, in the time-frequency domain, radio power transmission signal 502 is present.

FIG. 5C illustrates an exemplary configuration in a time-frequency domain of a modulation signal and a signal transmitted by base station #1 of 301_1 of FIG. 3A in a case where base station #1 of 301_1 of FIG. 3A performs communication and radio power transmission. Further, FIG. 5C also illustrates a configuration of a signal transmitted by base station #1 of 301_1 and base station #2 of 301_2 of FIG. 3C in the time-frequency domain. In FIG. 5C, the horizontal axis represents time, and the vertical axis represents frequency.

As illustrated in FIG. 5C, in the time-frequency domain, a region of communication modulation signal 501 and a region of radio power transmission signal 502 are present.

In the case of FIG. 3A, base station #1 of 301_1 transmits communication modulation signal 501 and radio power transmission signal 502.

In the case of FIG. 3A, base station #1 of 301_1 transmits radio power transmission signal 502, and base station #2 of 301_2 transmits communication modulation signal 501.

In FIG. 5C, "the frequency at which communication modulation signal 501 is present and the frequency at which radio power transmission signal 502 is present are the same" may be "the frequency at which communication modulation signal 501 is present and the frequency at which radio power transmission signal 502 is present are partially the same".

The "terminal capable of charging and communication" will be described.

First, a description will be given of, as an example, in FIG. 3A, a case where base station #1 of 301_1 transmits radio power transmission signal 502 and communication modulation signal 501 to terminal #2 of 302_2, which is the "terminal capable of charging and communication", as illustrated in FIG. 5C.

FIG. 6 illustrates an example of the communication modulation signal. As illustrated in FIG. 6, it is assumed that, for example, reference signal 601, data symbol 602, and control information symbol 603 are included in communication modulation signal 501 in FIG. 5C. The configuration of communication modulation signal 501 is not limited to the configuration of FIG. 6. For example, the communication modulation signal may be present in a plurality of frequencies and/or a plurality of times. Further, another symbol or signal may be present in communication modulation signal 501.

It is considered that the reference signal is, for example, a known symbol (or the receiver may know, by obtaining synchronization, the symbol transmitted by the transmitter) modulated by PSK modulation in a transceiver, a non-zero power signal, a zero power signal, a known signal in a transceiver, or the like, and the receiver uses these signals to perform "frequency synchronization", "time synchronization, channel estimation (of each modulation signal) (estimation of channel state information (CSI))", "signal detection", "reception state estimation", "transmission state estimation", "phase tracking due to phase noise or the like", and "estimation of a situation (such as a channel) for performing transmission beamforming and/or reception beamforming".

FIG. 7A illustrates an exemplary configuration related to antennas in the "configuration of base station #1 of 301_1 described with reference to FIGS. 1A, 1B, 1C1, 1C2, 1D1, 1D2, 1E, 1F, 1G, and 1H".

In FIG. 7A, as an example, a case where base station #1 of 301_1 includes 32 antennas is illustrated. However, FIG. 7A is an example, and the number of antennas provided in base station #1 of 301_1 is not limited to 32.

For example, as illustrated in FIG. 7A, "antenna #0 of 710_0, antenna #1 of 710_1, antenna #2 of 710_2, antenna #3 of 710_3, antenna #4 of 710_4, antenna #5 of 710_5, antenna #6 of 710_6, and antenna #7 of 710_7" are used by base station #1 of 301_1 to transmit communication modulation signal 501 in FIG. 5C. However, there may be an exception. This point will be described, hereinafter.

Further, "antenna #8 of 710_8, antenna #9 of 710_9, antenna #10 of 710_10, antenna #11 of 710_11, antenna #12 of 710_12, antenna #13 of 710_13, antenna #14 of 710_14, antenna #15 of 710_15, antenna #16 of 710_16, ..., antenna #31 of 710_31" are used by base station #1 of 301_1 to transmit radio power transmission signal 502 in FIG. 5C. However, there may be an exception.

FIG. 7B illustrates an example different from FIG. 7A of the configuration related to the antennas in the "configuration of base station #1 of 301_1 described with reference to FIGS. 1A, 1B, 1C1, 1C2, 1D1, 1D2, 1E, 1F, 1G, and 1H".

In FIG. 7B, the same reference numerals are assigned to the same components as in FIG. 7A and the like. As an example, a case where base station #1 of 301_1 includes 32 antennas is illustrated. However, FIG. 7B is an example, and the number of antennas provided in base station #1 of 301_1 is not limited to 32.

For example, as illustrated in FIG. 7B, "antenna #0 of 710_0, antenna #1 of 710_1, antenna #2 of 710_2, antenna #3 of 710_3, antenna #4 of 710_4, antenna #5 of 710_5, antenna #6 of 710_6, antenna #7 of 710_7, antenna #8 of 710_8, antenna #9 of 710_9, antenna #10 of 710_10, antenna #11 of 710_11, antenna #12 of 710_12, antenna #13 of 710_13, antenna #14 of 710_14, and antenna #15 of 710_15" are used by base station #1 of 301_1 to transmit communication modulation signal 501 in FIG. 5C. However, there may be an exception. This point will be described, hereinafter.

Further, "antenna #8 of 710_8, antenna #9 of 710_9, antenna #10 of 710_10, antenna #11 of 710_11, antenna #12 of 710_12, antenna #13 of 710_13, antenna #14 of 710_14, and antenna #15 of 710_15" are used by base station #1 of 301_1 to transmit radio power transmission signal 502 in FIG. 5C. However, there may be an exception.

Therefore, "antenna #8 of 710_8, antenna #9 of 710_9, antenna #10 of 710_10, antenna #11 of 710_11, antenna #12 of 710_12, antenna #13 of 710_13, antenna #14 of 710_14, and antenna #15 of 710_15" are used by base station #1 of 301_1 to transmit communication modulation signal 501 and radio power transmission signal 502 in FIG. 5C.

FIG. 7C illustrates an example different from FIGS. 7A and 7B of the configuration related to the antennas in the "configuration of base station #1 of 301_1 described with reference to FIGS. 1A, 1B, 1C1, 1C2, 1D1, 1D2, 1E, 1F, 1G, and 1H".

In FIG. 7C, the same reference numerals are assigned to the same components as in FIG. 7A and the like. As an example, a case where base station #1 of 301_1 includes 32 antennas is illustrated. However, FIG. 7C is an example, and the number of antennas provided in base station #1 of 301_1 is not limited to 32.

For example, as illustrated in FIG. 7C, "antenna #0 of 710_0, antenna #1 of 710_1, antenna #2 of 710_2, antenna #3 of 710_3, antenna #4 of 710_4, antenna #5 of 710_5, antenna #6 of 710_6, antenna #7 of 710_7, antenna #8 of 710_8, antenna #9 of 710_9, antenna #10 of 710_10, antenna #11 of 710_11, antenna #12 of 710_12, antenna #13 of 710_13, antenna #14 of 710_14, and antenna #15 of 710_15" are used by base station #1 of 301_1 to transmit communication modulation signal 501 in FIG. 5C. However, there may be an exception. This point will be described, hereinafter.

Further, "antenna #8 of 710_8, antenna #9 of 710_9, antenna #10 of 710_10, antenna #11 of 710_11, antenna #12 of 710_12, antenna #13 of 710_13, antenna #14 of 710_14, antenna #15 of 710_15, antenna #16 of 710_16, ..., antenna #31 of 710_31" are used by base station #1 of 301_1 to transmit radio power transmission signal 502 in FIG. 5C. However, there may be an exception.

Therefore, "antenna #8 of 710_8, antenna #9 of 710_9, antenna #10 of 710_10, antenna #11 of 710_11, antenna #12 of 710_12, antenna #13 of 710_13, antenna #14 of 710_14, and antenna #15 of 710_15" are used by base station #1 of 301_1 to transmit communication modulation signal 501 and radio power transmission signal 502 in FIG. 5C.

FIG. 8A illustrates an exemplary configuration of the reference signal. For example, FIG. 8A illustrates an exemplary configuration of reference signal 601 of FIG. 6 included in communication modulation signal 501 in FIG. 5C in a case where base station #1 of 301_1 uses the antennas as illustrated in FIG. 7A in the "configuration of base station #1 of 301_1 described with reference to FIGS. 1A, 1B, 1C1, 1C2, 1D1, 1D2, 1E, 1F, 1G, and 1H".

As illustrated in FIG. 8A, reference signal 601 includes, for example, communication reference signal 801 and a radio power transmission reference signal 802.

Communication reference signal 801 is transmitted from base station #1 of 301_1 using "antenna #0 of 710_0, antenna #1 of 710_1, antenna #2 of 710_2, antenna #3 of 710_3, antenna #4 of 710_4, antenna #5 of 710_5, antenna #6 of 710_6, and antenna #7 of 710_7" illustrated in FIG. 7A.

Further, radio power transmission reference signal 802 is transmitted from base station #1 of 301_1 using "antenna #8 of 710_8, antenna #9 of 710_9, antenna #10 of 710_10, antenna #11 of 710_11, antenna #12 of 710_12, antenna #13 of 710_13, antenna #14 of 710_14, antenna #15 of 710_15, antenna #16 of 710_16, ..., antenna #31 of 710_31" illustrated in FIG. 7A.

Then, terminal #2 of 302_2, which is a counterpart of base station #1 of 301_1, performs reception beamforming for communication modulation signal 501 using communication reference signal 801.

Further, terminal #2 of 302_2 performs reception beamforming for radio power transmission signal 502 using radio power transmission reference signal 802.

Therefore, the terminal performs the reception beamforming in a case of the radio power transmission together with the reception beamforming (reception directivity control) performed in conjunction with the reception operation of the communication, and receives the radio power transmission signal transmitted by the base station to perform the charging, whereby it is possible to obtain an effect that the decrease in the residual amount of the battery can be reduced.

In a case where base station #1 of 301_1 does not transmit radio power transmission signal 502, radio power transmission reference signal 802 in FIG. 8A is not transmitted.

Therefore, when not transmitting radio power transmission signal 502, in order to transmit communication modulation signal 501, base station #1 of 301_1 uses "antenna #0 of 710_0, antenna #1 of 710_1, antenna #2 of 710_2, antenna #3 of 710_3, antenna #4 of 710_4, antenna #5 of 710_5, antenna #6 of 710_6, and antenna #7 of 710_7", and when transmitting radio power transmission signal 502, base station #1 of 301_1 uses "antenna #0 of 710_0, ..., antenna #31 of 710_31" are used.

Then, when not transmitting radio power transmission signal 502, in order to transmit communication modulation signal 501, base station #1 of 301_1 uses "antenna #0 of 710_0, antenna #1 of 710_1, antenna #2 of 710_2, antenna #3 of 710_3, antenna #4 of 710_4, antenna #5 of 710_5, antenna #6 of 710_6, and antenna #7 of 710_7" to transmit communication reference signal 801, and when transmitting radio power transmission signal 502, for example (which is merely an example), base station #1 of 301_1 uses "antenna #0 of 710_0, ..., antenna #31 of 710_31" to transmit radio power transmission reference signal 802.

FIG. 8B illustrates an exemplary configuration of reference signal 601 of FIG. 6 included in communication modulation signal 501 in FIG. 5C in a case where base station #1 of 301_1 uses the antennas as illustrated in FIG. 7B in the "configuration of base station #1 of 301_1 described with reference to FIGS. 1A, 1B, 1C1, 1C2, 1D1, 1D2, 1E, 1F, 1G, and 1H".

As illustrated in FIG. 8B, reference signal 601 includes, for example, communication reference signal 801 and communication and radio power transmission reference signal 803.

Communication reference signal 801 is transmitted from base station #1 of 301_1 using "antenna #0 of 710_0, antenna #1 of 710_1, antenna #2 of 710_2, antenna #3 of 710_3, antenna #4 of 710_4, antenna #5 of 710_5, antenna #6 of 710_6, and antenna #7 of 710_7" illustrated in FIG. 7B.

Further, communication and radio power transmission reference signal 803 is transmitted from base station #1 of 301_1 using "antenna #8 of 710_8, antenna #9 of 710_9, antenna #10 of 710_10, antenna #11 of 710_11, antenna #12 of 710_12, antenna #13 of 710_13, antenna #14 of 710_14, and antenna #15 of 710_15" illustrated in FIG. 7B.

Teminal #2 of 302_2, which is a counterpart of base station #1 of 301_1, performs reception beamforming for communication modulation signal 501 using communication reference signal 801 and communication and radio power transmission reference signal 803.

Further, terminal #2 of 302_2 performs reception beamforming for radio power transmission signal 502 using communication and radio power transmission reference signal 803.

Therefore, the terminal performs the reception beamforming (reception directivity control) performed in conjunction with the reception operation of the communication and receives the radio power transmission signal transmitted by the base station to perform the charging, whereby it is possible to obtain an effect that the decrease in the residual amount of the battery can be reduced.

Therefore, even in a case where base station #1 of 301_1 does not transmit radio power transmission signal 502, communication reference signal 801 and communication and radio power transmission reference signal 803 in FIG. 8B are transmitted.

Therefore, when not transmitting communication modulation signal 502 or when transmitting communication modulation signal 502, in order to transmit communication modulation signal 501, base station #1 of 301_1 uses antenna #0 of 710_0, antenna #1 of 710_1, antenna #2 of 710_2, antenna #3 of 710_3, antenna #4 of 710_4, antenna #5 of 710_5, antenna #6 of 710_6, antenna #7 of 710_7, antenna #8 of 710_8, antenna #9 of 710_9, antenna #10 of 710_10, antenna #11 of 710_11, antenna #12 of 710_12, antenna #13 of 710_13, antenna #14 of 710_14, and antenna #15 of 710_15".

Then, when not transmitting radio power transmission signal 502 or when transmitting radio power transmission signal 502, in order to transmit communication modulation signal 501, base station #1 of 301_1 uses "antenna #0 of 710_0, antenna #1 of 710_1, antenna #2 of 710_2, antenna #3 of 710_3, antenna #4 of 710_4, antenna #5 of 710_5, antenna #6 of 710_6, antenna #7 of 710_7, antenna #8 of 710_8, antenna #9 of 710_9, antenna #10 of 710_10, antenna #11 of 710_11, antenna #12 of 710_12, antenna #13 of 710_13, antenna #14 of 710_14, and antenna #15 of 710_15" to transmit communication reference signal 801 and communication and radio power transmission reference signal 803 are transmitted.

FIG. 8C illustrates an exemplary configuration of reference signal 601 of FIG. 6 included in communication modulation signal 501 in FIG. 5C in a case where base station #1 of 301_1 uses the antenna as illustrated in FIG. 7C in the "configuration of base station #1 of 301_1 described with reference to FIGS. 1A, 1B, 1C1, 1C2, 1D1, 1D2, 1E, 1F, 1G, and 1H".

As illustrated in FIG. 8C, reference signal 601 includes, for example, communication reference signal 801, communication and radio power transmission reference signal 803, and radio power transmission reference signal 802.

Communication reference signal 801 is transmitted from base station #1 of 301_1 using "antenna #0 of 710_0, antenna #1 of 710_1, antenna #2 of 710_2, antenna #3 of 710_3, antenna #4 of 710_4, antenna #5 of 710_5, antenna #6 of 710_6, and antenna #7 of 710_7" illustrated in FIG. 7C.

Further, communication and radio power transmission reference signal 803 is transmitted from base station #1 of 301_1 using "antenna #8 of 710_8, antenna #9 of 710_9, antenna #10 of 710_10, antenna #11 of 710_11, antenna #12 of 710_12, antenna #13 of 710_13, antenna #14 of 710_14, and antenna #15 of 710_15" illustrated in FIG. 7C.

Radio power transmission reference signal 802 is transmitted from base station #1 of 301_1 using "antenna #16 of 710_16, antenna #17 of 710_17, ..., antenna #31 of 710_31" illustrated in FIG. 7C.

Then, terminal #2 of 302_2, which is a counterpart of base station #1 of 301_1, performs reception beamforming for communication modulation signal 501 using communication reference signal 801 and communication and radio power transmission reference signal 803.

Further, terminal #2 of 302_2 performs reception beamforming for radio power transmission signal 502 using communication and radio power transmission reference signal 803 and radio power transmission reference signal 802.

Therefore, the terminal performs the reception beamforming in a case of the radio power transmission together with the reception beamforming (reception directivity control) performed in conjunction with the reception operation of the communication and receives the radio power transmission signal transmitted by the base station to perform the charging, whereby it is possible to obtain an effect that the decrease in the residual amount of the battery can be reduced.

Therefore, in a case where base station #1 of 301_1 does not transmit radio power transmission signal 502, radio power transmission reference signal 802 in FIG. 8C is not transmitted.

Therefore, when not transmitting radio power transmission signal 502 or when transmitting radio power transmission signal 502, in order to transmit communication modulation signal 501, base station #1 of 301_1 uses "antenna #0 of 710_0, antenna #1 of 710_1, antenna #2 of 710_2, antenna #3 of 710_3, antenna #4 of 710_4, antenna #5 of 710_5, antenna #6 of 710_6, antenna #7 of 710_7, antenna #8 of 710_8, antenna #9 of 710_9, antenna #10 of 710_10, antenna #11 of 710_11, antenna #12 of 710_12, antenna #13 of 710_13, antenna #14 of 710_14, and antenna #15 of 710_15".

Then, when not transmitting radio power transmission signal 502 or when transmitting radio power transmission signal 502, in order to transmit communication modulation signal 501, base station #1 of 301_1 uses "antenna #0 of 710_0, antenna #1 of 710_1, antenna #2 of 710_2, antenna #3 of 710_3, antenna #4 of 710_4, antenna #5 of 710_5, antenna #6 of 710_6, antenna #7 of 710_7, antenna #8 of 710_8, antenna #9 of 710_9, antenna #10 of 710_10, antenna #11 of 710_11, antenna #12 of 710_12, antenna #13 of 710_13, antenna #14 of 710_14, and antenna #15 of 710_15" to transmit communication reference signal 801 and communication and radio power transmission reference signal 803.

Although the examples of the method for using antennas have been described with reference to FIGS. 7A, 7B, and 7C, the method for using antennas is not limited to these examples, and the same can be performed even how the number of antennas for transmitting a communication modulation signal, the arrangement of antennas, the number of antennas for transmitting a radio power transmission signal, and the arrangement of antennas are set.

Further, the configuration method for a communication reference signal, a radio power transmission reference signal, and a communication and radio power transmission reference signal is not limited to the examples of FIGS. 8A, 8B, and 8C, and for example, the communication reference signal, the radio power transmission reference signal, and the communication and radio power transmission reference signal may be arranged in any manner.

FIGS. 8A, 8B, and 8C illustrate the configuration of the reference signal included in the communication modulation signal, and in this case, a case where the radio power transmission-related reference signal is included in the communication modulation signal is illustrated. (As a result, it is possible for the terminal to perform the reception beamforming in a case of communication and radio power transmission in a unified manner, it is possible to simplify the control signal for synchronization and procedure, and it is possible to improve the data throughput and the frequency use efficiency.) However, even in a case where a radio power transmission-related reference signal is not included in the communication modulation signal and the radio power transmission-related reference signal is transmitted separately, the same can be performed.

Next, in FIG. 3C, a case where base station #1 of 301_1 and base station #2 of 301_2 transmit radio power transmission signal 502 and communication modulation signal 501 to terminal #2 of 302_2, which is the "terminal capable of charging and communication", as illustrated in FIG. 5C will be described as an example. In FIG. 3C, it is assumed that base station #1 of 301_1 transmits radio power transmission signal 502, and base station #2 of 301_2 transmits communication modulation signal 501.

As illustrated in FIG. 6, it is assumed that, for example, reference signal 601, data symbol 602, and control information symbol 603 are included in communication modulation signal 501 in FIG. 5C. The configuration of communication modulation signal 501 is not limited to the configuration of FIG. 6. For example, the communication modulation signal may be present in a plurality of frequencies and/or a plurality of times. Further, another symbol or signal may be present in communication modulation signal 501.

It is considered that the reference signal is, for example, a known symbol (or the receiver may know, by obtaining synchronization, the symbol transmitted by the transmitter) modulated by PSK modulation in a transceiver, a non-zero power signal, a zero power signal, a known signal in a transceiver, or the like, and the receiver uses these signals to perform "frequency synchronization", "time synchronization, channel estimation (of each modulation signal) (estimation of channel state information (CSI))", "signal detection", "reception state estimation", "transmission state estimation", "phase tracking due to phase noise or the like", and "estimation of a situation (such as a channel) for performing transmission beamforming and/or reception beamforming".

FIGS. 9A1 and 9A2 illustrate an exemplary configuration related to antennas in base station #2 of 301_2.

In FIGS. 9A1 and 9A2, as an example, a case where base station #2 of 301_2 includes 32 antennas is illustrated. However, FIGS. 9A1 and 9A2 are examples, and the number of antennas provided in base station #2 of 301_2 is not limited to 32. Further, in FIGS. 9A1 and 9A2, the same reference numerals are assigned to the same components as in FIG. 7A and the like.

For example, as illustrated in FIG. 9A1, "antenna #0 of 710_0, antenna #1 of 710_1, antenna #2 of 710_2, antenna #3 of 710_3, antenna #4 of 710_4, antenna #5 of 710_5, antenna #6 of 710_6, and antenna #7 of 710_7" are used by base station #2 of 301_2 to transmit communication modulation signal 501 in FIG. 5C.

"Antenna #8 of 710_8, antenna #9 of 710_9, antenna #10 of 710_10, antenna #11 of 710_11, antenna #12 of 710_12, antenna #13 of 710_13, antenna #14 of 710_14, antenna #15 of 710_15, antenna #16 of 710_16, ..., antenna #31 of 710_31" may be antennas for transmitting communication modulation signal 501 in FIG. 5C or antennas for transmitting radio power transmission signal 502 in base station #2 of 301_2.

FIG. 9A2 is an example different from FIG. 9A1. As illustrated in FIG. 9A2, "antenna #0 of 710_0, antenna #1 of 710_1, antenna #2 of 710_2, antenna #3 of 710_3, antenna #4 of 710_4, antenna #5 of 710_5, antenna #6 of 710_6, antenna #7 of 710_7, antenna #8 of 710_8, antenna #9 of 710_9, antenna #10 of 710_10, antenna #11 of 710_11, antenna #12 of 710_12, antenna #13 of 710_13, antenna #14 of 710_14, antenna #15 of 710_15, antenna #16 of 710_16, ..., antenna #31 of 710_31" are used by base station #2 of 301_2 to transmit communication modulation signal 501 in FIG. 5C.

In the case of FIG. 9A2, base station #2 of 301_2 may not have a function to transmit radio power transmission signal 502.

For example, as illustrated in FIG. 9B1, "antenna #8 of 710_8, antenna #9 of 710_9, antenna #10 of 710_10, antenna #11 of 710_11, antenna #12 of 710_12, antenna #13 of 710_13, antenna #14 of 710_14, antenna #15 of 710_15, antenna #16 of 710_16, ..., antenna #31 of 710_31" are used by base station #1 of 301_1 to transmit radio power transmission signal 502 in FIG. 5C.

"Antenna #0 of 710_0, antenna #1 of 710_1, antenna #2 of 710_2, antenna #3 of 710_3, antenna #4 of 710_4, antenna #5 of 710_5, antenna #6 of 710_6, and antenna #7 of 710_7" may be antennas for transmitting communication modulation signal 501 in FIG. 5C or antennas for transmitting radio power transmission signal 502 in base station #1 of 301_1.

FIG. 9B2 is an example different from FIG. 9B1. As illustrated in FIG. 9B2, "antenna #0 of 710_0, antenna #1 of 710_1, antenna #2 of 710_2, antenna #3 of 710_3, antenna #4 of 710_4, antenna #5 of 710_5, antenna #6 of 710_6, antenna #7 of 710_7, antenna #8 of 710_8, antenna #9 of 710_9, antenna #10 of 710_10, antenna #11 of 710_11, antenna #12 of 710_12, antenna #13 of 710_13, antenna #14 of 710_14, antenna #15 of 710_15, antenna #16 of 710_16, ..., antenna #31 of 710_31" are used by base station #1 of 301_1 to transmit radio power transmission signal 502 in FIG. 5C.

In the case of FIG. 9B2, base station #1 of 301_1 may not have a function to transmit communication modulation signal 501.

FIG. 8A illustrates an exemplary configuration of reference signal 601 of FIG. 6 included in communication modulation signal 501 in FIG. 5C in a case where base station #1 of 301_1 uses antennas as illustrated in FIG. 9B1 or FIG. 9B2 and base station #2 of 301_2 uses antennas as illustrated in FIG. 9A1 or FIG. 9A2.

As illustrated in FIG. 8A, reference signal 601 includes, for example, communication reference signal 801 and radio power transmission reference signal 802.

Communication reference signal 801 is transmitted from base station #2 of 301_2 using "antennas used in transmitting a communication modulation signal" illustrated in FIG. 9A1 or "antennas used in transmitting a communication modulation signal" illustrated in FIG. 9A2.

Further, radio power transmission reference signal 802 is transmitted from base station #1 of 301_1 using "antennas used in transmitting a radio power transmission signal" illustrated in FIG. 9B1 or "antennas used in transmitting a radio power transmission signal" illustrated in FIG. 9B2.

Then, terminal #2 of 302_2, which is a counterpart of base station #1 of 301_1 and base station #2 of 301_2, performs reception beamforming for communication modulation signal 501 using communication reference signal 801.

Further, terminal #2 of 302_2 performs reception beamforming for radio power transmission signal 502 using radio power transmission reference signal 802.

Therefore, the terminal performs the reception beamforming in a case of the radio power transmission together with the reception beamforming (reception directivity control) performed in conjunction with the reception operation of the communication and receives the radio power transmission signal transmitted by the base station to perform the charging, whereby it is possible to obtain an effect that the decrease in the residual amount of the battery can be reduced.

In a case where base station #1 of 301_1 does not transmit radio power transmission signal 502, radio power transmission reference signal 802 in FIG. 8A is not transmitted.

In a case where base station #1 of 301_1 does not transmit radio power transmission signal 502, in order to transmit communication modulation signal 501, base station #2 of 301_2 uses the "antennas used in transmitting the communication modulation signal" illustrated in FIG. 9A1 or the "antennas used in transmitting the communication modulation signal" illustrated in FIG. 9A2 to transmit communication reference signal 801, and in a case where base station #1 of 301_1 transmits radio power transmission signal 502, base station #2 of 301_2 uses the "antennas used in transmitting the radio power transmission signal" illustrated in FIG. 9B1 or the "antennas used in transmitting the radio power transmission signal" illustrated in FIG. 9B2 to transmit radio power transmission reference signal 802.

Although the examples of the method for using antennas have been described with reference to FIGS. 9A1, 9A1, 9B1, and 9B2, the method for using antennas is not limited to these examples, and the same can be performed even how the number of antennas for transmitting a communication modulation signal, the arrangement of antennas, the number of antennas for transmitting a radio power transmission signal, and the arrangement of antennas are set.

Further, the configuration method for a communication reference signal, a radio power transmission reference signal, and a communication and radio power transmission reference signal is not limited to the example of FIG. 8A, and for example, the communication reference signal and the radio power transmission reference signal may be arranged in any manner.

FIG. 8A illustrates the configuration of the reference signal included in the communication modulation signal, and in this case, a case where the radio power transmission-related reference signal is included in the communication modulation signal is illustrated. (As a result, it is possible for the terminal to perform the reception beamforming in a case of communication and radio power transmission in a unified manner, it is possible to simplify the control signal for synchronization and procedure, and it is possible to improve the data throughput and the frequency use efficiency.) However, even in a case where the radio power transmission-related reference signal is not included in the communication modulation signal and the radio power transmission-related reference signal is transmitted separately, the same can be performed.

In FIG. 3A, a case where base station #1 of 301_1 transmits radio power transmission signal 502 and communication modulation signal 501 to terminal #2 of 302_2, which is the "terminal capable of charging and communication", as illustrated in FIG. 5C will be described as an example.

As illustrated in FIG. 6, it is assumed that, for example, reference signal 601, data symbol 602, and control information symbol 603 are included in communication modulation signal 501 in FIG. 5C. The configuration of communication modulation signal 501 is not limited to the configuration of FIG. 6. For example, the communication modulation signal may be present in a plurality of frequencies and/or a plurality of times. Further, another symbol or signal may be present in the communication modulation signal 501.

Control information symbol 603 includes, for example, information on transmission parameters, such as "frequency used, frequency bandwidth (number of carriers), number of streams of signal, and Modulation and Coding Scheme (MCS)" of a signal transmitted by the base station, and "number of antennas, information on antennas, and timing" for signal transmission.

FIG. 7A illustrates an exemplary configuration related to antennas in the "configuration of base station #1 of 301_1 described with reference to FIGS. 1A, 1B, 1C1, 1C2, 1D1, 1D2, 1E, 1F, 1G, and 1H".

In FIG. 7A, as an example, a case where base station #1 of 301_1 includes 32 antennas is illustrated. However, FIG. 7A is an example, and the number of antennas provided in base station #1 of 301_1 is not limited to 32.

For example, as illustrated in FIG. 7A, "antenna #0 of 710_0, antenna #1 of 710_1, antenna #2 of 710_2, antenna #3 of 710_3, antenna #4 of 710_4, antenna #5 of 710_5, antenna #6 of 710_6, and antenna #7 of 710_7" are used by base station #1 of 301_1 to transmit communication modulation signal 501 in FIG. 5C. However, there may be an exception. This point will be described, hereinafter.

Further, "antenna #8 of 710_8, antenna #9 of 710_9, antenna #10 of 710_10, antenna #11 of 710_11, antenna #12 of 710_12, antenna #13 of 710_13, antenna #14 of 710_14, antenna #15 of 710_15, antenna #16 of 710_16, ..., antenna #31 of 710_31" are used by base station #1 of 301_1 to transmit radio power transmission signal 502 in FIG. 5C. However, there may be an exception.

FIG. 7B illustrates an example different from FIG. 7A of the configuration related to the antennas in the "configuration of base station #1 of 301_1 described with reference to FIGS. 1A, 1B, 1C1, 1C2, 1D1, 1D2, 1E, 1F, 1G, and 1H".

In FIG. 7B, the same reference numerals are assigned to the same components as in FIG. 7A and the like. As an example, a case where base station #1 of 301_1 includes 32 antennas is illustrated. However, FIG. 7B is an example, and the number of antennas provided in base station #1 of 301_1 is not limited to 32.

For example, as illustrated in FIG. 7B, "antenna #0 of 710_0, antenna #1 of 710_1, antenna #2 of 710_2, antenna #3 of 710_3, antenna #4 of 710_4, antenna #5 of 710_5, antenna #6 of 710_6, antenna #7 of 710_7, antenna #8 of 710_8, antenna #9 of 710_9, antenna #10 of 710_10, antenna #11 of 710_11, antenna #12 of 710_12, antenna #13 of 710_13, antenna #14 of 710_14, and antenna #15 of 710_15" are used by base station #1 of 301_1 to transmit communication modulation signal 501 in FIG. 5C. However, there may be an exception. This point will be described, hereinafter.

Further, "antenna #8 of 710_8, antenna #9 of 710_9, antenna #10 of 710_10, antenna #11 of 710_11, antenna #12 of 710_12, antenna #13 of 710_13, antenna #14 of 710_14, and antenna #15 of 710_15" are used by base station #1 of 301_1 to transmit radio power transmission signal 502 in FIG. 5C. However, there may be an exception.

Therefore, "antenna #8 of 710_8, antenna #9 of 710_9, antenna #10 of 710_10, antenna #11 of 710_11, antenna #12 of 710_12, antenna #13 of 710_13, antenna #14 of 710_14, and antenna #15 of 710_15" are used by base station #1 of 301_1 to transmit communication modulation signal 501 and radio power transmission signal 502 in FIG. 5C.

FIG. 7C illustrates an example different from FIGS. 7A and 7B of the configuration related to the antennas in the "configuration of base station #1 of 301_1 described with reference to FIGS. 1A, 1B, 1C1, 1C2, 1D1, 1D2, 1E, 1F, 1G, and 1H".

In FIG. 7C, the same reference numerals are assigned to the same components as in FIG. 7A and the like. As an example, a case where base station #1 of 301_1 includes 32 antennas is illustrated. However, FIG. 7C is an example, and the number of antennas provided in base station #1 of 301_1 is not limited to 32.

For example, as illustrated in FIG. 7C, "antenna #0 of 710_0, antenna #1 of 710_1, antenna #2 of 710_2, antenna #3 of 710_3, antenna #4 of 710_4, antenna #5 of 710_5, antenna #6 of 710_6, antenna #7 of 710_7, antenna #8 of 710_8, antenna #9 of 710_9, antenna #10 of 710_10, antenna #11 of 710_11, antenna #12 of 710_12, antenna #13 of 710_13, antenna #14 of 710_14, and antenna #15 of 710_15" are used by base station #1 of 301_1 to transmit communication modulation signal 501 in FIG. 5C. However, there may be an exception. This point will be described, hereinafter.

Further, "antenna #8 of 710_8, antenna #9 of 710_9, antenna #10 of 710_10, antenna #11 of 710_11, antenna #12 of 710_12, antenna #13 of 710_13, antenna #14 of 710_14, antenna #15 of 710_15, antenna #16 of 710_16, ..., antenna #31 of 710_31" are used by base station #1 of 301_1 to transmit radio power transmission signal 502 in FIG. 5C. However, there may be an exception.

Therefore, "antenna #8 of 710_8, antenna #9 of 710_9, antenna #10 of 710_10, antenna #11 of 710_11, antenna #12 of 710_12, antenna #13 of 710_13, antenna #14 of 710_14, and antenna #15 of 710_15" are used by base station #1 of 301_1 to transmit communication modulation signal 501 and radio power transmission signal 502 in FIG. 5C.

FIG. 10 illustrates an exemplary configuration of control information symbol 603 of FIG. 6 included in communication modulation signal 501 in FIG. 5C in a case where base station #1 of 301_1 uses the antennas as illustrated in FIG. 7A in the "configuration of base station #1 of 301_1 described with reference to FIGS. 1A, 1B, 1C1, 1C2, 1D1, 1D2, 1E, 1F, 1G, and 1H".

As illustrated in FIG. 10, control information symbol 603 includes, for example, communication modulation signal transmission parameter information 1001 and radio power transmission signal transmission parameter information 1002. The transmission parameter information is as described above.

For example, communication modulation signal transmission parameter information 1001 is transmitted from base station #1 of 301_1 using "antenna #0 of 710_0, antenna #1 of 710_1, antenna #2 of 710_2, antenna #3 of 710_3, antenna #4 of 710_4, antenna #5 of 710_5, antenna #6 of 710_6, and antenna #7 of 710_7" illustrated in FIG. 7A.

Further, for example, radio power transmission signal transmission parameter information 1002 is transmitted from base station #1 of 301_1 using "antenna #8 of 710_8, antenna #9 of 710_9, antenna #10 of 710_10, antenna #11 of 710_11, antenna #12 of 710_12, antenna #13 of 710_13, antenna #14 of 710_14, antenna #15 of 710_15, antenna #16 of 710_16, ..., antenna #31 of 710_31" illustrated in FIG. 7A.

Then, terminal #2 of 302_2, which is a counterpart of base station #1 of 301_1, obtains communication modulation signal transmission parameter information 1001, and performs processing, such as demodulation on the data symbol based on this information to obtain the data.

Further, terminal #2 of 302_2 obtains radio power transmission signal transmission parameter information 1002 and performs charging by radio power transmission signal 502.

As a result, the terminal can obtain an effect that the communication and charging are made possible.

In a case where base station #1 of 301_1 does not transmit radio power transmission signal 502, radio power transmission signal transmission parameter information 1002 in FIG. 10 is not transmitted.

Therefore, when not transmitting radio power transmission signal 502, in order to transmit communication modulation signal 501, base station #1 of 301_1 uses "antenna #0 of 710_0, antenna #1 of 710_1, antenna #2 of 710_2, antenna #3 of 710_3, antenna #4 of 710_4, antenna #5 of 710_5, antenna #6 of 710_6, and antenna #7 of 710_7", and when transmitting radio power transmission signal 502, base station #1 of 301_1 uses "antenna #0 of 710_0, ..., antenna #31 of 710_31".

Another example will be described. FIG. 10 illustrates an exemplary configuration of control information symbol 603 of FIG. 6 included in communication modulation signal 501 in FIG. 5C in a case where base station #1 of 301_1 uses the antennas as illustrated in FIG. 7B in the "configuration of base station #1 of 301_1 described with reference to FIGS. 1A, 1B, 1C1, 1C2, 1D1, 1D2, 1E, 1F, 1G, and 1H". Since FIG. 10 has already been described, the description thereof will be omitted.

For example, communication modulation signal transmission parameter information 1001 is transmitted from base station #1 of 301_1 using "antenna #0 of 710_0, antenna #1 of 710_1, antenna #2 of 710_2, antenna #3 of 710_3, antenna #4 of 710_4, antenna #5 of 710_5, antenna #6 of 710_6, antenna #7 of 710_7, antenna #8 of 710_8, antenna #9 of 710_9, antenna #10 of 710_10, antenna #11 of 710_11, antenna #12 of 710_12, antenna #13 of 710_13, antenna #14 of 710_14, and antenna #15 of 710_15" illustrated in FIG. 7B.

Further, radio power transmission signal transmission parameter information 1002 is transmitted from base station #1 of 301_1 using "antenna #8 of 710_8, antenna #9 of 710_9, antenna #10 of 710_10, antenna #11 of 710_11, antenna #12 of 710_12, antenna #13 of 710_13, antenna #14 of 710_14, and antenna #15 of 710_15" illustrated in FIG. 7B.

Then, terminal #2 of 302_2, which is a counterpart of base station #1 of 301_1, obtains communication modulation signal transmission parameter information 1001, and performs processing, such as demodulation on the data symbol based on this information to obtain the data.

Further, terminal #2 of 302_2 obtains radio power transmission signal transmission parameter information 1002 and performs charging by radio power transmission signal 502.

As a result, the terminal can obtain an effect that the communication and charging are made possible.

In a case where base station #1 of 301_1 does not transmit radio power transmission signal 502, radio power transmission signal transmission parameter information 1002 in FIG. 10 is not transmitted.

Therefore, when not transmitting transmit radio power transmission signal 502 or when transmitting transmit radio power transmission signal 502, in order to transmit communication modulation signal 501, base station #1 of 301_1 uses "antenna #0 of 710_0, antenna #1 of 710_1, antenna #2 of 710_2, antenna #3 of 710_3, antenna #4 of 710_4, antenna #5 of 710_5, antenna #6 of 710_6, antenna #7 of 710_7, antenna #8 of 710_8, antenna #9 of 710_9, antenna #10 of 710_10, antenna #11 of 710_11, antenna #12 of 710_12, antenna #13 of 710_13, antenna #14 of 710_14, and antenna #15 of 710_15".

Another example will be described. FIG. 10 illustrates an exemplary configuration of control information symbol 603 of FIG. 6 included in communication modulation signal 501 in FIG. 5C in a case where base station #1 of 301_1 uses the antennas as illustrated in FIG. 7C in the "configuration of base station #1 of 301_1 described with reference to FIGS. 1A, 1B, 1C1, 1C2, 1D1, 1D2, 1E, 1F, 1G, and 1H". Since FIG. 10 has already been described, the description thereof will be omitted.

For example, communication modulation signal transmission parameter information 1001 is transmitted from base station #1 of 301_1 using "antenna #0 of 710_0, antenna #1 of 710_1, antenna #2 of 710_2, antenna #3 of 710_3, antenna #4 of 710_4, antenna #5 of 710_5, antenna #6 of 710_6, antenna #7 of 710_7, antenna #8 of 710_8, antenna #9 of 710_9, antenna #10 of 710_10, antenna #11 of 710_11, antenna #12 of 710_12, antenna #13 of 710_13, antenna #14 of 710_14, and antenna #15 of 710_15" illustrated in FIG. 7C.

Further, radio power transmission signal transmission parameter information 1002 is transmitted from base station #1 of301_1 using "antenna #8 of 710_8, antenna #9 of 710_9, antenna #10 of 710_10, antenna #11 of 710_11, antenna #12 of 710_12, antenna #13 of 710_13, antenna #14 of 710_14, antenna #15 of 710_15, antenna #16 of 710_16, antenna #17 of 710_17, ..., antenna #31 of 710_31" illustrated in FIG. 7C.

Then, terminal #2 of 302_2, which is a counterpart of base station #1 of 301_1, obtains communication modulation signal transmission parameter information 1001 and performs processing, such as demodulation on the data symbol based on this information to obtain the data.

Further, terminal #2 of 302_2 obtains radio power transmission signal transmission parameter information 1002 and performs charging by radio power transmission signal 502.

As a result, the terminal can obtain an effect that the communication and charging are made possible.

In a case where base station #1 of 301_1 does not transmit radio power transmission signal 502, radio power transmission signal transmission parameter information 1002 in FIG. 10 is not transmitted.

Therefore, when not transmitting radio power transmission signal 502 or when transmitting radio power transmission signal 502, in order to transmit communication modulation signal 501, base station #1 of 301_1 uses "antenna #0 of 710_0, antenna #1 of 710_1, antenna #2 of 710_2, antenna #3 of 710_3, antenna #4 of 710_4, antenna #5 of 710_5, antenna #6 of 710_6, antenna #7 of 710_7, antenna #8 of 710_8, antenna #9 of 710_9, antenna #10 of 710_10, antenna #11 of 710_11, antenna #12 of 710_12, antenna #13 of 710_13, antenna #14 of 710_14, and antenna #15 of 710_15".

Although the examples of the method for using antennas have been described with reference to FIGS. 7A, 7B, and 7C, the method for using antennas is not limited to these examples, and the same can be performed even how the number of antennas for transmitting the communication modulation signal, the arrangement of the antennas, the number of antennas for transmitting the radio power transmission signal, and the arrangement of antennas are set.

Further, the configuration method for communication modulation signal transmission parameter information 1001 and radio power transmission signal transmission parameter information 1002 is not limited to the example of FIG. 10, and for example, communication modulation signal transmission parameter information 1001 and radio power transmission signal transmission parameter information 1002 may be arranged in any manner.

FIG. 10 illustrates the configuration of control information symbols included in the communication modulation signal, and in this case, a case where the radio power transmission-related transmission parameter information is included in the communication modulation signal is illustrated. (As a result, it is possible for the terminal to obtain the transmission parameter information in a case of communication and radio power transmission in a unified manner, it is possible to simplify the control signal for the synchronization and the procedure, and it is possible to improve the data throughput and the frequency use efficiency.) However, even in a case where the radio power transmission-related transmission parameter information is not included in the communication modulation signal and the radio power transmission-related transmission parameter information is transmitted separately, the same can be performed.

Next, in FIG. 3C, a case where base station #1 of 301_1 and base station #2 of 301_2 transmit radio power transmission signal 502 and communication modulation signal 501 to terminal #2 of 302_2, which is the "terminal capable of charging and communication", as illustrated in FIG. 5C will be described as an example. In FIG. 3C, it is assumed that base station #1 of 301_1 transmits radio power transmission signal 502, and base station #2 of 301_2 transmits communication modulation signal 501.

As illustrated in FIG. 6, it is assumed that, for example, reference signal 601, data symbol 602, and control information symbol 603 are included in communication modulation signal 501 in FIG. 5C. The configuration of communication modulation signal 501 is not limited to the configuration of FIG. 6. For example, the communication modulation signal may be present in a plurality of frequencies and/or a plurality of times. Further, another symbol or signal may be present in the communication modulation signal 501.

Control information symbol 603 includes, for example, information on transmission parameters, such as "frequency used, frequency bandwidth (number of carriers), number of streams of signal, and Modulation and Coding Scheme (MCS)" of a signal transmitted by the base station, and "number of antennas, information on antennas, and timing" for signal transmission.

FIGS. 9A1 and 9A2 illustrate an exemplary configuration related to antennas in base station #2 of 301_2.

In FIGS. 9A1 and 9A2, as an example, a case where base station #2 of 301_2 includes 32 antennas is illustrated. However, FIGS. 9A1 and 9A2 are examples, and the number of antennas provided in base station #2 of 301_2 is not limited to 32. Further, in FIGS. 9A1 and 9A2, the same reference numerals are assigned to the same components as in FIG. 7A and the like.

For example, as illustrated in FIG. 9A1, "antenna #0 of 710_0, antenna #1 of 710_1, antenna #2 of 710_2, antenna #3 of 710_3, antenna #4 of 710_4, antenna #5 of 710_5, antenna #6 of 710_6, and antenna #7 of 710_7" are used by base station #2 of 301_2 to transmit communication modulation signal 501 in FIG. 5C.

"Antenna #8 of 710_8, antenna #9 of 710_9, antenna #10 of 710_10, antenna #11 of 710_11, antenna #12 of 710_12, antenna #13 of 710_13, antenna #14 of 710_14, antenna #15 of 710_15, antenna #16 of 710_16, ..., antenna #31 of 710_31" may be antennas for transmitting communication modulation signal 501 in FIG. 5C or antennas for transmitting radio power transmission signal 502 in base station #2 of 301_2.

FIG. 9A2 is an example different from FIG. 9A1. As illustrated in FIG. 9A2, "antenna #0 of 710_0, antenna #1 of 710_1, antenna #2 of 710_2, antenna #3 of 710_3, antenna #4 of 710_4, antenna #5 of 710_5, antenna #6 of 710_6, antenna #7 of 710_7, antenna #8 of 710_8, antenna #9 of 710_9, antenna #10 of 710_10, antenna #11 of 710_11, antenna #12 of 710_12, antenna #13 of 710_13, antenna #14 of 710_14, antenna #15 of 710_15, antenna #16 of 710_16, ..., antenna #31 of 710_31" are used by base station #2 of 301_2 to transmit communication modulation signal 501 in FIG. 5C.

In the case of FIG. 9A2, base station #2 of 301_2 may not have a function to transmit radio power transmission signal 502.

For example, as illustrated in FIG. 9B1, "antenna #8 of 710_8, antenna #9 of 710_9, antenna #10 of 710_10, antenna #11 of 710_11, antenna #12 of 710_12, antenna #13 of 710_13, antenna #14 of 710_14, antenna #15 of 710_15, antenna #16 of 710_16, ..., antenna #31 of 710_31" are used by base station #1 of 301_1 to transmit radio power transmission signal 502 in FIG. 5C.

"Antenna #0 of 710_0, antenna #1 of 710_1, antenna #2 of 710_2, antenna #3 of 710_3, antenna #4 of 710_4, antenna #5 of 710_5, antenna #6 of 710_6, and antenna #7 of 710_7" may be antennas for transmitting communication modulation signal 501 in FIG. 5C or antennas for transmitting radio power transmission signal 502 in base station #1 of 301_1.

FIG. 9B2 is an example different from FIG. 9B1. As illustrated in FIG. 9B2, "antenna #0 of 710_0, antenna #1 of 710_1, antenna #2 of 710_2, antenna #3 of 710_3, antenna #4 of 710_4, antenna #5 of 710_5, antenna #6 of 710_6, antenna #7 of 710_7, antenna #8 of 710_8, antenna #9 of 710_9, antenna #10 of 710_10, antenna #11 of 710_11, antenna #12 of 710_12, antenna #13 of 710_13, antenna #14 of 710_14, antenna #15 of 710_15, antenna #16 of 710_16, ..., antenna #31 of 710_31" are used by base station #1 of 301_1 to transmit radio power transmission signal 502 in FIG. 5C.

In the case of FIG. 9B2, base station #1 of 301_1 may not have a function to transmit communication modulation signal 501.

FIG. 10 illustrates an exemplary configuration of control information symbol 603 of FIG. 6 included in communication modulation signal 501 in FIG. 5C in a case where base station #1 of 301_1 uses antennas as illustrated in FIG. 9B1 or FIG. 9B2 and base station #2 of 301_2 uses antennas as illustrated in FIG. 9A1 or FIG. 9A2.

As illustrated in FIG. 10, control information symbol 603 includes, for example, communication modulation signal transmission parameter information 1001 and radio power transmission signal transmission parameter information 1002. The transmission parameter information is as described above.

Communication modulation signal transmission parameter information 1001 is transmitted from base station #2 of 301_2 using antennas "used for communication modulation signal transmission" illustrated in FIG. 9A1 or antennas "used for communication modulation signal transmission" illustrated in FIG. 9A2.

Radio power transmission signal transmission parameter information 1002 is transmitted from base station #1 of 301_1 using antennas "used for communication modulation signal transmission" illustrated in FIG. 9B1 or antennas "used for communication modulation signal transmission" illustrated in FIG. 9B2.

Then, terminal #2 of 302_2, which is a counterpart of base station #1 of 301_1 and base station #2 of 301_2, obtains communication modulation signal transmission parameter information 1001 and performs processing, such as demodulation on the data symbol based on this information to obtain the data.

Further, terminal #2 of 302_2 obtains radio power transmission signal transmission parameter information 1002 and performs charging by radio power transmission signal 502.

As a result, the terminal can obtain an effect that the communication and charging are made possible.

In a case where base station #1 of 301_1 does not transmit radio power transmission signal 502, radio power transmission signal transmission parameter information 1002 in FIG. 10 is not transmitted.

In a case where base station #1 of 301_1 does not transmit radio power transmission signal 502, in order to transmit communication modulation signal 501, base station #2 of 301_2 uses the "antennas used in transmitting the communication modulation signal" illustrated in FIG. 9A1 or the "antennas used in transmitting the communication modulation signal" illustrated in FIG. 9A2, to transmit communication modulation signal transmission parameter information 1001, and in a case where base station #1 of 301_1 transmits radio power transmission signal 502, base station #2 of 301_2 uses the "antennas used in transmitting the radio power transmission signal" illustrated in FIG. 9B1 or the "antennas used in transmitting the radio power transmission signal" illustrated in FIG. 9B2, to transmit radio power transmission signal transmission parameter information 1002.

Although the examples of the method for using antennas have been described with reference to FIGS. 9A1, 9A2, 9B1, and 9B2, the method for using antennas is not limited to these examples, and the same can be performed even how the number of antennas for transmitting the communication modulation signal, the arrangement of antennas, the number of antennas for transmitting the radio power transmission signal, and the arrangement of antennas are set.

Further, the configuration method for communication modulation signal transmission parameter information 1001 and radio power transmission signal transmission parameter information 1002 is not limited to the example of FIG. 10, and for example, communication modulation signal transmission parameter information 1001 and radio power transmission signal transmission parameter information 1002 may be arranged in any manner.

FIG. 10 illustrates the configuration of control information symbols included in the communication modulation signal, and in this case, a case where the radio power transmission-related transmission parameter information is included in the communication modulation signal is illustrated. (As a result, it is possible for the terminal to obtain the transmission parameter information in a case of communication and radio power transmission in a unified manner, it is possible to simplify the control signal for the synchronization and the procedure, and it is possible to improve the data throughput and the frequency use efficiency.) However, even in a case where the radio power transmission-related transmission parameter information is not included in the communication modulation signal and the radio power transmission-related transmission parameter information is transmitted separately, the same can be performed.

In the above description, in a case of the state of the base station and the terminal as in FIGS. 3A and 3C, the base station may perform transmission beamforming (transmission directivity control). Hereinafter, the transmission beamforming will be simply described.

FIG. 11A illustrates a first example of interaction between the terminal and the base station, and the horizontal axis represents time.

For example, the terminal transmits reference signal 1101_A.

Then, the base station receives reference signal 1101_A and estimates, for example, a state of the channel. The base station determines a transmission beamforming method (direction of directivity, specific processing of directivity control) based on the state of the channel.

The base station performs the transmission beamforming and transmits a communication modulation signal and/or a radio power transmission signal.

In FIG. 11A, the term "reference signal" is used, but the term is not limited to this, and for example, a beacon, a signal, a symbol, or the like may be used. Further, since the configuration of the base station corresponding to the transmission beamforming has already been described, the description thereof will be omitted.

In a case where the base station performs the transmission beamforming as in FIG. 11A, it is preferable that "frequency used by signal transmitted by base station" and "frequency used by signal transmitted by terminal" be the same or partially the same.

FIG. 11B illustrates a second example of communication between the terminal and the base station, and the horizontal axis represents time.

For example, the base station transmits reference signal 1151_B.

Then, the terminal receives reference signal 1151_B and estimates, for example, a state of the channel. The terminal transmits information (1102_B) (e.g., information on the estimated state of the channel) necessary for the base station to perform the transmission beamforming to the base station.

The base station receives the information (1102_B) transmitted by the terminal and determines the transmission beamforming method (direction of directivity, specific processing of directivity control).

The base station performs the transmission beamforming and transmits the communication modulation signal and/or the radio power transmission signal.

In FIG. 11B, the term "reference signal" is used, but the term is not limited to this, and for example, a beacon, a signal, a symbol, or the like may be used. Further, since the configuration of the base station corresponding to the transmission beamforming has already been described, the description thereof will be omitted.

In the above, in a case of the state of the base station and the terminal as in FIGS. 3A and 3C, as an example, a case where "the frequency at which communication modulation signal 501 is present and the frequency at which radio power transmission signal 502 is present are the same" may be "the frequency at which communication modulation signal 501 is present and the frequency at which radio power transmission signal 502 is present are partially the same" as in FIG. 5C has been described.

Hereinafter, a case where the frequency used by the communication modulation signal transmitted by the base station and the frequency used by the radio power transmission signal transmitted by the base station are different will be described.

It is assumed that a frequency (band) used by the base station and the terminal for communication is f1 and a frequency (band) used by the base station to perform radio power transmission to the terminal is f2.

In this case, the communication between the base station and the terminal may be, for example, Frequency Division Duplex (FDD) or Time Division Duplex (TDD).

For example, base station #1 of 301_1 and terminal #2 of 302_2 in FIG. 3A will be focused on. In this case, as illustrated in FIG. 12A, the communication between base station #1 of 301_1 and terminal #2 of 302_2 uses frequency (band) f1, and a frequency (band) used by base station #1 of 301_1 to perform radio power transmission to terminal #2 of 302_2 is f2.

FIG. 12B illustrates an example of interaction between the base station (e.g., base station #1 of 301_1) and the terminal (e.g., terminal #2 of 302_2) in a case where the base station performs transmission beamforming. Here, a case where the base station performs transmission beamforming and transmits a communication modulation signal and a case where the base station performs transmission beamforming and transmits a radio power transmission signal will be described by way of example.

In a case where the base station performs transmission beamforming and transmits a communication modulation signal, the following interaction may be performed.

The base station transmits a reference signal using frequency (band) f1 (1201B).

The terminal receives the reference signal and estimates, for example, a state of the channel (1251B).

Then, the terminal transmits information (e.g., information on the estimated state of the channel) necessary for the base station to perform transmission beamforming to the base station, using frequency (band) f1 (1252B).

The base station receives the information (1252B) transmitted by the terminal and determines the transmission beamforming method (direction of directivity, specific processing of directivity control) (1202B).

The base station performs transmission beamforming and transmits a communication modulation signal to the terminal using frequency (band) f1 (1203B).

In a case where the base station performs transmission beamforming and transmits a radio power transmission signal, the following interaction may be performed.

The base station transmits a reference signal using frequency (band) f2 (1201B).

The terminal receives the reference signal and estimates, for example, a state of the channel (1251B).

Then, the terminal transmits information (e.g., information on the estimated state of the channel) necessary for the base station to perform the transmission beamforming to the base station using frequency (band) f1 (or f2) (1252B).

The base station receives the information (1252B) transmitted by the terminal and determines the transmission beamforming method (direction of directivity, specific processing of directivity control) (1202B). The base station performs transmission beamforming and transmits a radio power transmission signal to the terminal using frequency (band) f2 (1203B).

FIG. 12C illustrates an example different from FIG. 12B of interaction between the base station (e.g., base station #1 of 301_1) and the terminal (e.g., terminal #2 of 302_2) in a case where the base station performs transmission beamforming. Here, a case where the base station performs transmission beamforming and transmits a communication modulation signal and a case where the base station performs transmission beamforming and transmits a radio power transmission signal will be described by way of example.

In a case where the base station performs transmission beamforming and transmits a communication modulation signal, the following interaction may be performed.

The terminal transmits a reference signal using frequency (band) f1 (1251C).

The base station receives the reference signal and estimates, for example, a state of the channel (1201C).

The base station determines the transmission beamforming method (direction of directivity, specific processing of directivity control) based on the state of the channel (1202C).

The base station performs transmission beamforming and transmits a communication modulation signal to the terminal using frequency (band) f1 (1203C).

In a case where the base station performs transmission beamforming and transmits a radio power transmission signal, the following interaction may be performed.

The terminal transmits a reference signal using frequency (band) f2 (1251C).

The base station receives the reference signal and estimates, for example, a state of the channel (1201C).

The base station determines the transmission beamforming method (direction of directivity, specific processing of directivity control) based on the state of the channel (1202C).

The base station performs transmission beamforming and transmits a communication modulation signal to the terminal using frequency (band) f2 (1203C).

In a case where the base station is an apparatus capable of performing transmission beamforming and the terminal and the base station perform interaction of communication and radio power transmission since the terminal is in the "battery residual amount saving mode", the base station performs interaction with the terminal for transmission beamforming using the above as an example for transmitting a communication modulation signal and transmitting a radio power transmission signal.

Hereinafter, a case where the base station performs transmission beamforming and the terminal performs reception beamforming will be described.

FIG. 12D illustrates an example of interaction between the base station and the terminal in a case where the base station (e.g., base station #1 of 301_1) performs transmission beamforming and the terminal (e.g., terminal #2 of 302_2) performs reception beamforming. In FIG. 12D, the same reference numerals are assigned to components that operate in the same manner as in FIG. 12B, and a part of the description thereof will be omitted. Here, a case where the base station performs transmission beamforming and transmits a communication modulation signal and a case where the base station performs transmission beamforming and transmits a radio power transmission signal will be described by way of example.

In a case where the base station performs transmission beamforming and transmits a communication modulation signal, the following interaction may be performed.

The base station transmits a reference signal using frequency (band) f1 (1201B).

The terminal receives the reference signal and estimates, for example, a state of the channel (1251B).

Then, the terminal transmits information (e.g., information on the estimated state of the channel) necessary for the base station to perform transmission beamforming to the base station using frequency (band) f1 (1252B).

The base station receives the information (1252B) transmitted by the terminal and determines the transmission beamforming method (direction of directivity, specific processing of directivity control) (1202B).

The base station performs transmission beamforming and transmits the reference signal to the terminal using frequency (band) f1 (1203D).

The terminal receives the reference signal transmitted by the base station and estimates, for example, a state of the channel (1253D). Then, the terminal determines the reception beamforming method (direction of directivity, specific processing of directivity control) (1254D).

The base station performs transmission beamforming and transmits a communication modulation signal to the terminal using frequency (band) f1 (1204D).

The terminal performs reception beamforming and receives the communication modulation signal transmitted by the base station.

In a case where the base station performs transmission beamforming and transmits a radio power transmission signal, the following interaction may be performed.

The base station transmits a reference signal using frequency (band) f2 (1201B).

The terminal receives the reference signal and estimates, for example, a state of the channel (1251B).

Then, the terminal transmits information (e.g., information on the estimated state of the channel) necessary for the base station to perform transmission beamforming to the base station using frequency (band) f1 (or f2) (1252B).

The base station receives the information (1252B) transmitted by the terminal and determines the transmission beamforming method (direction of directivity, specific processing of directivity control) (1202B).

The base station performs transmission beamforming and transmits a reference signal to the terminal using frequency (band) f2 (1203D).

The terminal receives the reference signal transmitted by the base station and estimates, for example, a state of the channel (1253D). Then, the terminal determines the reception beamforming method (direction of directivity, specific processing of directivity control) (1254D).

The base station performs transmission beamforming and transmits a radio power transmission signal to the terminal using frequency (band) f2 (1204D).

The terminal performs reception beamforming and receives the radio power transmission signal transmitted by the base station.

FIG. 12E illustrates an example different from FIG. 12D of the interaction between the base station and the terminal in a case where the base station (e.g., base station #1 of 301_1) performs transmission beamforming and the terminal (e.g., terminal #2 of 302_2) performs reception beamforming. In FIG. 12E, the same reference numerals are assigned to components that operate in the same manner as in FIG. 12C, and a part of the description thereof will be omitted. Here, a case where the base station performs transmission beamforming and transmits a communication modulation signal and a case where the base station performs transmission beamforming and transmits a radio power transmission signal will be described by way of example.

In a case where the base station performs transmission beamforming and transmits a communication modulation signal, the following interaction may be performed.

The terminal transmits a reference signal using frequency (band) f1 (1251C).

The base station receives the reference signal and estimates, for example, a state of the channel (1201C). The base station determines the transmission beamforming method (direction of directivity, specific processing of directivity control) based on the state of the channel (1202C).

The base station performs transmission beamforming and transmits a reference signal to the terminal using frequency (band) f1 (1203E).

The terminal receives the reference signal transmitted by the base station and estimates, for example, a state of the channel (1252E). Then, the terminal determines the reception beamforming method (direction of directivity, specific processing of directivity control) (1253E).

The base station performs transmission beamforming and transmits a communication modulation signal to the terminal using frequency (band) f1 (1204E).

The terminal performs reception beamforming and receives the communication modulation signal transmitted by the base station.

In a case where the base station performs transmission beamforming and transmits a radio power transmission signal, the following interaction may be performed.

The terminal transmits a reference signal using frequency (band) f2 (1251C).

The base station receives the reference signal and estimates, for example, a state of the channel (1201C). The base station determines the transmission beamforming method (direction of directivity, specific processing of directivity control) based on the state of the channel (1202C).

The base station performs transmission beamforming and transmits a reference signal to the terminal using frequency (band) f2 (1203E).

The terminal receives the reference signal transmitted by the base station and estimates, for example, a state of the channel (1252E). Then, the terminal determines the reception beamforming method (direction of directivity, specific processing of directivity control) (1253E).

The base station performs transmission beamforming and transmits a radio power transmission signal to the terminal using frequency (band) f2 (1204E).

The terminal performs reception beamforming and receives the radio power transmission signal transmitted by the base station.

In a case where the base station is an apparatus capable of performing transmission beamforming and the terminal and the base station perform interaction of communication and radio power transmission since the terminal is in the "battery residual amount saving mode", the base station performs interaction with the terminal for transmission beamforming using the above as an example for transmitting a communication modulation signal and transmitting a radio power transmission signal.

For example, base station #1 of 301_1, base station #2 of 301_2, and terminal #2 of 302_2 in FIG. 3C will be focused on. In this case, as illustrated in FIG. 13, the communication between base station #2 of 301_2 and terminal #2 of 302_2 uses frequency (band) f1, and a frequency (band) used by base station #1 of 301_1 to perform radio power transmission to terminal #2 of 302_2 is f2.

FIG. 12B illustrates an example of interaction between the base station and the terminal (e.g., terminal #2 of 302_2) in a case where the base station (e.g., base station #1 of 301_1 or base station #2 of 301_2) performs transmission beamforming. Here, a case where the base station performs transmission beamforming and transmits a communication modulation signal and a case where the base station performs transmission beamforming and transmits a radio power transmission signal will be described by way of example.

In a case where the base station performs transmission beamforming and transmits a communication modulation signal, the following interaction may be performed.

The base station (base station #2 of 301_2) transmits a reference signal using frequency (band) f1 (1201B).

The terminal receives the reference signal and estimates, for example, a state of the channel (1251B).

Then, the terminal transmits information (e.g., information on the estimated state of the channel) necessary for the base station (base station #2 of 301_2) to perform transmission beamforming to the base station (base station #2 of 301_2), using frequency (band) f1 (1252B).

The base station (base station #2 of 301_2) receives the information (1252B) transmitted by the terminal and determines the transmission beamforming method (direction of directivity, specific processing of directivity control) (1202B).

The base station (base station #2 of 301_2) performs transmission beamforming and transmits a communication modulation signal to the terminal using frequency (band) f1 (1203B).

In a case where the base station performs transmission beamforming and transmits a radio power transmission signal, the following interaction may be performed.

The base station (base station #1 of 301_1) transmits a reference signal using frequency (band) f2 (1201B).

The terminal receives the reference signal and estimates, for example, a state of the channel (1251B).

Then, the terminal transmits information (e.g., information on the estimated state of the channel) necessary for the base station (base station #1 of 301_1) to perform the transmission beamforming to the base station (base station #1 of 301_1 or base station #2 of 301_2) using frequency (band) f1 or f2 (1252B).

The base station (base station #1 of 301_1 or base station #2 of 301_2) receives the information (1252B) transmitted by the terminal and the base station (base station #1 of 301_1) determines the transmission beamforming method (direction of directivity, specific processing of directivity control) (1202B).

The base station (base station #1 of 301_1) performs transmission beamforming and transmits a radio power transmission signal to the terminal using frequency (band) f2 (1203B).

FIG. 12C illustrates an example different from FIG. 12B of interaction between the base station and the terminal (e.g., terminal #2 of 302_2) in a case where the base station (base station #1 of 301_1 or base station #2 of 301_2) performs transmission beamforming. Here, a case where the base station performs transmission beamforming and transmits a communication modulation signal and a case where the base station performs transmission beamforming and transmits a radio power transmission signal will be described by way of example.

In a case where the base station performs transmission beamforming and transmits a communication modulation signal, the following interaction may be performed.

The terminal transmits a reference signal using frequency (band) f1 (1251C).

The base station (base station #2 of 301_2) receives the reference signal and estimates, for example, a state of the channel (1201C).

The base station (base station #2 of 301_2) determines the transmission beamforming method (direction of directivity, specific processing of directivity control) based on the state of the channel (1202C).

The base station (base station #2 of 301_2) performs transmission beamforming and transmits a communication modulation signal to the terminal using frequency (band) f1 (1203C).

In a case where the base station performs transmission beamforming and transmits a radio power transmission signal, the following interaction may be performed.

The terminal transmits a reference signal using frequency (band) f2 (1251C).

The base station (base station #1 of 301_1) receives the reference signal and estimates, for example, a state of the channel (1201C).

The base station (base station #1 of 301_1) determines the transmission beamforming method (direction of directivity, specific processing of directivity control) based on the state of the channel (1202C).

The base station (base station #1 of 301_1) performs transmission beamforming and transmits a communication modulation signal to the terminal using frequency (band) f2 (1203C).

In a case where the base station is an apparatus capable of performing transmission beamforming and the terminal and the base station perform interaction of communication and radio power transmission since the terminal is in the "battery residual amount saving mode", the base station performs interaction with the terminal for transmission beamforming using the above as an example for transmitting a communication modulation signal and transmitting a radio power transmission signal.

Hereinafter, a case where the base station performs transmission beamforming and the terminal performs reception beamforming will be described.

FIG. 12D illustrates an example of interaction between the base station and the terminal in a case where the base station (e.g., base station #1 of 301_1, base station #2 of 301_2)) performs transmission beamforming and the terminal (e.g., terminal #2 of 302_2) performs reception beamforming. In FIG. 12D, the same reference numerals are assigned to components that operate in the same manner as in FIG. 12B, and a part of the description thereof will be omitted. Here, a case where the base station performs transmission beamforming and transmits a communication modulation signal and a case where the base station performs transmission beamforming and transmits a radio power transmission signal will be described by way of example.

In a case where the base station performs transmission beamforming and transmits a communication modulation signal, the following interaction may be performed.

The base station (base station #2 of 301_2) transmits a reference signal using frequency (band) f1 (1201B).

The terminal receives the reference signal and estimates, for example, a state of the channel (1251B).

Then, the terminal transmits information (e.g., information on the estimated state of the channel) necessary for the base station (base station #2 of 301_2) to perform transmission beamforming to the base station (base station #2 of 301_2) using frequency (band) f1 (1252B).

The base station (base station #2 of 301_2) receives the information (1252B) transmitted by the terminal and determines the transmission beamforming method (direction of directivity, specific processing of directivity control) (1202B).

The base station (base station #2 of 301_2) performs transmission beamforming and transmits the reference signal to the terminal using frequency (band) f1 (1203D).

The terminal receives the reference signal transmitted by the base station (base station #2 of 301_2) and estimates, for example, a state of the channel (1253D). Then, the terminal determines the reception beamforming method (direction of directivity, specific processing of directivity control) (1254D).

The base station (base station #2 of 301_2) performs transmission beamforming and transmits a communication modulation signal to the terminal using frequency (band) f1 (1204D).

The terminal performs reception beamforming and receives the communication modulation signal transmitted by the base station (base station #2 of 301_2).

In a case where the base station performs transmission beamforming and transmits a radio power transmission signal, the following interaction may be performed.

The base station (base station #1 of 301_1) transmits a reference signal using frequency (band) f2 (1201B).

The terminal receives the reference signal and estimates, for example, a state of the channel (1251B).

Then, the terminal transmits information (e.g., information on the estimated state of the channel) necessary for the base station (base station #1 of 301_1) to perform transmission beamforming to the base station (base station #1 of 301_1 or base station #2 of 301_2) using frequency (band) f1 (or f2) (1252B).

The base station (base station #1 of 301_1 or base station #2 of 301_2) receives the information (1252B) transmitted by the terminal and the base station (base station #1 of 301_1) determines the transmission beamforming method (direction of directivity, specific processing of directivity control) (1202B).

The base station (base station #1 of 301_1) performs transmission beamforming and transmits a reference signal to the terminal using frequency (band) f2 (1203D).

The terminal receives the reference signal transmitted by the base station (base station #1 of 301_1) and estimates, for example, a state of the channel (1253D). Then, the terminal determines the reception beamforming method (direction of directivity, specific processing of directivity control) (1254D).

The base station (base station #1 of 301_1) performs transmission beamforming and transmits a radio power transmission signal to the terminal using frequency (band) f2 (1204D).

The terminal performs reception beamforming and receives the radio power transmission signal transmitted by the base station (base station #1 of 301_1).

FIG. 12E illustrates an example different from FIG. 12D of the interaction between the base station and the terminal in a case where the base station (e.g., base station #1 of 301_1, base station #2 of 301_2) performs transmission beamforming and the terminal (e.g., terminal #2 of 302_2) performs reception beamforming. In FIG. 12E, the same reference numerals are assigned to components that operate in the same manner as in FIG. 12C, and a part of the description thereof will be omitted. Here, a case where the base station performs transmission beamforming and transmits a communication modulation signal and a case where the base station performs transmission beamforming and transmits a radio power transmission signal will be described by way of example.

In a case where the base station performs transmission beamforming and transmits a communication modulation signal, the following interaction may be performed.

The terminal transmits a reference signal using frequency (band) f1 (1251C).

The base station (base station #2 of 301_2) receives the reference signal and estimates, for example, a state of the channel (1201C). The base station (base station #2 of 301_2) determines the transmission beamforming method (direction of directivity, specific processing of directivity control) based on the state of the channel (1202C).

The base station (base station #2 of 301_2) performs transmission beamforming and transmits a reference signal to the terminal using frequency (band) f1 (1203E).

The terminal receives the reference signal transmitted by the base station (base station #2 of 301_2) and estimates, for example, a state of the channel (1252E). Then, the terminal determines the reception beamforming method (direction of directivity, specific processing of directivity control) (1253E).

The base station (base station #2 of 301_2) performs transmission beamforming and transmits a communication modulation signal to the terminal using frequency (band) f1 (1204E).

The terminal performs reception beamforming and receives the communication modulation signal transmitted by the base station (base station #2 of 301_2).

In a case where the base station performs transmission beamforming and transmits a radio power transmission signal, the following interaction may be performed.

The terminal transmits a reference signal using frequency (band) f2 (1251C).

The base station (base station #1 of 301_1) receives the reference signal and estimates, for example, a state of the channel (1201C). The base station (base station #1 of 301_1) determines the transmission beamforming method (direction of directivity, specific processing of directivity control) based on the state of the channel (1202C).

The base station (base station #1 of 301_1) performs transmission beamforming and transmits a reference signal to the terminal using frequency (band) f2 (1203E).

The terminal receives the reference signal transmitted by the base station (base station #1 of 301_1) and estimates, for example, a state of the channel (1252E). Then, the terminal determines the reception beamforming method (direction of directivity, specific processing of directivity control) (1253E).

The base station (base station #1 of 301_1) performs transmission beamforming and transmits a radio power transmission signal to the terminal using frequency (band) f2 (1204E).

The terminal performs reception beamforming and receives the radio power transmission signal transmitted by the base station (base station #1 of 301_1).

In a case where the base station is an apparatus capable of performing transmission beamforming and the terminal and the base station perform interaction of communication and radio power transmission since the terminal is in the "battery residual amount saving mode", the base station performs interaction with the terminal for transmission beamforming using the above as an example for transmitting a communication modulation signal and transmitting a radio power transmission signal.

As described above, by performing reception beamforming in the terminal and/or performing transmission beamforming in the base station to execute the radio power transmission, the terminal can obtain an effect that the efficient charging is made possible.

As illustrated in FIGS. 3A and 3C, the "terminal capable of charging", the "terminal capable of communication", and the "terminal capable of charging and communication" are present in the system. Further, it is also considered that among these terminals, the "terminal capable of setting the "charging mode"", the "terminal capable of setting the "battery residual amount decrease reducing mode"", and the "terminal capable of setting the "charging mode" and the "battery residual amount decrease reducing mode"" in FIG. 4 are present in the system illustrated in FIGS. 3A and 3C.

In such a case, the base station needs to perform an appropriate operation even in a situation where the terminal supports in what degree the radio power transmission. Hereinafter, this point will be described.

FIG. 14 is an exemplary configuration of base station capability information 1400 transmitted from the base station (e.g., base station #1 of 301_1 or base station #2 of 301_2) in FIGS. 3A and 3C to the terminal.

For example, as illustrated in FIG. 14, base station capability information 1400 includes "information 1411 on whether radio power transmission is supported", "information 1412 on whether the case where the "frequency (band) for transmitting a communication modulation signal" and the "frequency (band) for transmitting a radio power transmission signal" are the same is supported", "information 1413 on whether the case where the "frequency (band) for transmitting a communication modulation signal" and the "frequency (band) for transmitting a radio power transmission signal" are different is supported", and "information 1414 on whether transmission of a set of a communication modulation signal and a radio power transmission signal is supported".

The "information 1411 on whether radio power transmission is supported" is information for the base station to notify the terminal of whether the radio power transmission is supported. Therefore, the terminal illustrated in FIGS. 3A and 3C determines, for example, whether to request the radio power transmission to the base station by obtaining this information.

The "information 1412 on whether the case where the "frequency (band) for transmitting a communication modulation signal" and the "frequency (band) for transmitting a radio power transmission signal" are the same is supported" is information for the base station to notify the terminal of whether the case where the "frequency (band) for transmitting a communication modulation signal" and the "frequency (band) for transmitting a radio power transmission signal" are the same is supported. Therefore, the terminal illustrated in FIGS. 3A and 3C determines, for example, whether to request the base station to transmit (and receive) a communication modulation signal in which the "frequency (band) for transmitting a communication modulation signal" and the "frequency (band) for transmitting a radio power transmission signal" are the same and to transmit a radio power transmission signal by obtaining this information.

The "information 1413 on whether the case where the "frequency (band) for transmitting a communication modulation signal" and the "frequency (band) for transmitting a radio power transmission signal" are different is supported" is information for the base station to notify the terminal of whether the case where the "frequency (band) for transmitting a communication modulation signal" and the "frequency (band) for transmitting a radio power transmission signal" are different is supported. Therefore, the terminal illustrated in FIGS. 3A and 3C determines, for example, whether to request the base station to transmit (and receive) a communication modulation signal in which the "frequency (band) for transmitting a communication modulation signal" and the "frequency (band) for transmitting a radio power transmission signal" are different and to transmit a radio power transmission signal by obtaining this information.

The "information 1414 on whether transmission of a set of a communication modulation signal and a radio power transmission signal is supported" is information for the base station to notify the terminal of whether transmission of a set of a communication modulation signal and a radio power transmission signal is supported. Therefore, the terminal illustrated in FIGS. 3A and 3C determines, for example, whether to request the base station to transmit a set of a communication modulation signal and a radio power transmission signal by obtaining this information.

In a case where base station capability information 1400 includes at least one of the "information 1411 on whether radio power transmission is supported", the "information 1412 on whether the case where the "frequency (band) for transmitting a communication modulation signal" and the "frequency (band) for transmitting a radio power transmission signal" are the same is supported", the "information 1413 on whether the case where the "frequency (band) for transmitting a communication modulation signal" and the "frequency (band) for transmitting a radio power transmission signal" are different is supported", or the "information 1414 on whether the transmission of a set of a communication modulation signal and a radio power transmission signal is supported", the same can be performed.

FIG. 15 is an exemplary configuration of terminal capability information 1500 transmitted from the terminal in FIGS. 3A and 3C to the base station (e.g., base station #1 of 301_1 or base station #2 of 301_2).

For example, as illustrated in FIG. 15, terminal capability information 1500 includes "information 1511 on whether or charging by radio power transmission is supported", "information 1512 on whether the reception in the case where the "frequency (band) for transmitting a communication modulation signal" and the "frequency (band) for transmitting a radio power transmission signal" are the same is supported", "information 1513 on whether or the reception in the case where the "frequency (band) for transmitting a communication modulation signal" and the "frequency (band) for transmitting a radio power transmission signal" are different is supported", "information 1514 on whether the reception of a set of a communication modulation signal and a radio power transmission signal is supported", and "information 1515 on whether reception beamforming in radio power transmission is supported".

The "information 1511 on whether charging by radio power transmission is supported" is information for the terminal to notify the base station of whether charging by radio power transmission is supported. Therefore, the base station illustrated in FIGS. 3A and 3C determines, for example, whether to perform transmission for radio power transmission to the terminal by obtaining this information.

The "information 1512 on whether the reception in the case where the "frequency (band) for transmitting a communication modulation signal" and the "frequency (band) for transmitting a radio power transmission signal" are the same is supported" is information for the terminal to notify the base station of whether the reception in the case where the "frequency (band) for transmitting a communication modulation signal" and the "frequency (band) for transmitting a radio power transmission signal" are the same is supported. Therefore, the base station illustrated in FIGS. 3A and 3C determines, for example, whether to perform the transmission in the case where the "frequency (band) for transmitting a communication modulation signal" and the "frequency (band) for transmitting a radio power transmission signal" are the same to the terminal by obtaining this information.

The "information 1513 on whether the reception in the case where the "frequency (band) for transmitting a communication modulation signal" and the "frequency (band) for transmitting a radio power transmission signal" are different is supported" is information for the terminal to notify the base station of whether the reception in the case where the "frequency (band) for transmitting a communication modulation signal" and the "frequency (band) for transmitting a radio power transmission signal" are different is supported. Therefore, the base station illustrated in FIGS. 3A and 3C determines, for example, whether to perform the transmission in the case where the "frequency (band) for transmitting a communication modulation signal" and the "frequency (band) for transmitting a radio power transmission signal" are different to the terminal by obtaining this information.

The "information 1514 on whether the reception of a set of a communication modulation signal and a radio power transmission signal is supported" is information for the terminal to notify the base station of whether the reception of a set of a communication modulation signal and a radio power transmission signal is supported.

Therefore, the base station illustrated in FIGS. 3A and 3C determines, for example, whether to perform the transmission of a set of a communication modulation signal and a radio power transmission signal to the terminal by obtaining this information.

The "information 1515 on whether reception beamforming in radio power transmission is supported" is information for the terminal to notify the base station of whether reception beamforming in radio power transmission is supported. Therefore, the base station illustrated in FIGS. 3A and 3C determines, for example, whether to perform transmission for the procedure for reception beamforming to the terminal by obtaining this information.

In a case where terminal capability information 1500 includes at least one of the "information 1511 on whether charging by a radio power transmission is supported", the "information 1512 on whether reception in the case where the "frequency (band) for transmitting a communication modulation signal" and the "frequency (band) for transmitting a radio power transmission signal" are the same is supported", the "information 1513 on whether the reception in the case where the "frequency (band) for transmitting a communication modulation signal" and the "frequency (band) for transmitting a radio power transmission signal" are different is supported", the "information 1514 on whether the reception of a set of a communication modulation signal and a radio power transmission signal is supported", or the "information 1515 on whether reception beamforming in radio power transmission is supported", the same can be performed.

FIG. 16A illustrates an example of interaction between the base station (e.g., base station #1 of 301_1) and the terminal (e.g., terminal #1 of 302_1) in FIG. 3A. It is assumed that the base station has already transmitted the base station capability information to the terminal, and the terminal has already transmitted the terminal capability information to the base station.

The terminal determines that the base station can perform transmission for radio power transmission based on the base station capability information and requests the base station to perform charging by radio power transmission (1651A).

The base station determines whether to transmit a radio power transmission signal to the terminal in response to the request (1601A). In this example, it is assumed that the base station determines to transmit a radio power transmission signal to the terminal.

The base station determines the transmission method for transmission of the radio power transmission signal based on the terminal capability information (1602A).

The base station transmits the radio power transmission signal to the terminal by the determined transmission method (1603A). As a result, the terminal performs charging.

FIG. 16B illustrates an example different from FIG. 16A of the interaction between the base station (e.g.,

base station #1 of 301_1) and the terminal (e.g., terminal #2 of 302_2) in FIG. 3A. It is assumed that the base station has already transmitted the base station capability information to the terminal, and the terminal has already transmitted the terminal capability information to the base station.

The terminal determines that the base station can perform charging by radio power transmission, and communication based on the base station capability information and makes a "request to perform charging by radio power transmission, and communication" to the base station (1651B).

The base station determines whether to perform charging by radio power transmission, and communication for the terminal in response to the request (1601A). In this example, it is assumed that the base station determines to perform charging by radio power transmission, and communication for the terminal.

The base station determines the transmission method for the radio power transmission signal based on the terminal capability information (1602A). For example, a frequency used for communication, a frequency used for radio power transmission, a transmission parameter of communication, a transmission parameter of radio power transmission, and the like are determined.

The base station performs transmission of the radio power transmission signal and communication by the determined transmission method (1603B). As a result, the terminal performs communication and charging.

As described above, by transmitting the base station capability information from the base station to the terminal and transmitting the terminal capability information from the terminal to the base station, and by performing the procedure including radio power transmission based on the terminal capability information in the base station and the base station capability information in the terminal, the base station and the terminal can perform communication and radio power transmission based on the base station capability and the terminal capability, and thus it is possible to obtain an effect that communication and radio power transmission can be accurately performed.

Next, an operation example different from the above of FIGS. 16A and 16B will be described.

FIG. 16A illustrates an example of interaction between the base station (e.g., base station #1 of 301_1, base station #2 of 301_2) and the terminal (e.g., terminal #1 of 302_1) in FIG. 3C. It is assumed that the base station has already transmitted the base station capability information to the terminal, and the terminal has already transmitted the terminal capability information to the base station.

The terminal determines that the base station can perform transmission for radio power transmission based on the base station capability information and requests the base station to perform charging by radio power transmission (1651A). (Note that, the terminal may make this request to either base station #1 of 301_1 or base station #2 of 301_2)

The base station determines whether to transmit a radio power transmission signal to the terminal in response to the request (1601A). In this example, it is assumed that the base station determines to transmit a radio power transmission signal to the terminal.

The base station determines the transmission method for the radio power transmission signal based on the terminal capability information (1602A).

The base station transmits the radio power transmission signal to the terminal by the determined transmission method (1603A). As a result, the terminal performs charging.

FIG. 16B illustrates an example different from FIG. 16A of the interaction between the base station (e.g., base station #1 of 301_1 or base station #2 of 301_2) and the terminal (e.g., terminal #2 of 302_2) in FIG. 3C. It is assumed that the base station has already transmitted the base station capability information to the terminal, and the terminal has already transmitted the terminal capability information to the base station.

The terminal determines that the base station can perform charging by radio power transmission, and communication based on the base station capability information and makes a "request" to perform charging by radio power transmission, and communication to the base station (1651B). (Note that, the terminal may make this request to either base station #1 of 301_1 or base station #2 of 301_2)

The base station determines whether to perform charging by radio power transmission, and communication for the terminal in response to the request (1601A). In this example, it is assumed that the base station determines to perform charging by radio power transmission, and communication for the terminal in response to the request

The base station determines the transmission method for the radio power transmission signal based on the terminal capability information (1602A). For example, a frequency used for communication, a frequency used for radio power transmission, a transmission parameter of communication, a transmission parameter of radio power transmission, and the like are determined.

The base station performs transmission of the radio power transmission signal and communication by the determined transmission method (1603B). As a result, the terminal performs communication and charging.

As described above, by transmitting the base station capability information from the base station to the terminal and transmitting the terminal capability information from the terminal to the base station, and by performing the procedure including the radio power transmission based on the terminal capability information in the base station and the base station capability information in the terminal, the base station and the terminal can perform communication and radio power transmission based on the base station capability and the terminal capability, and thus it is possible to obtain an effect that communication and radio power transmission can be accurately performed.

In the above description, in a case where communication and radio power transmission are performed as a set with an antenna transmitting a communication modulation signal as a first antenna port and an antenna transmitting a radio power transmission signal as a second antenna port, the apparatus may use the first antenna port and the second antenna port.

As another method, an antenna port capable of transmitting a communication modulation signal and transmitting a radio power transmission signal may be defined as a third antenna port, and the apparatus may use the third antenna port to transmit a communication modulation signal and transmit a radio power transmission signal.

As described in the present embodiment, by operating the base station and the terminal, the terminal can obtain an effect that the terminal can be efficiently charged. Further, the base station and the terminal can obtain an effect that the radio power transmission procedure can be effectively performed.

Here, the term "radio power transmission" is used, but the term is not limited to this, and for example, the term may be "power supply" or "power provision".

Further, for example, the terminal is equipped with a battery (secondary battery), but the term is not limited to "battery (secondary battery)", and may be referred to as a secondary battery, a storage battery, or the like.

In the present embodiment, the base station has been described, but the base station may be implemented as any of a "TRP (Tx(Transmission)/Rx (Reception) point) (Tx (Transmitter)/Rx (Receiver) point), a relay, a terminal, an access point, a broadcasting station, an e Node B (eNB), a g Node B (gNB) node, a server, a satellite, or the like," and the same can be performed in this case. Therefore, the base station of the present embodiment may be referred to as a "base station, TRP, relay, terminal, access point, broadcasting station, eNB, gNB, node, server, satellite, or the like". However, the present disclosure is not limited thereto.

Further, in the present embodiment, the terminal has been described, but the terminal may be implemented as any of a "mobile phone, smartphone, tablet, notebook computer, computer, personal computer, home appliance (household electric machine), an apparatus in a factory, a communication apparatus/broadcasting apparatus such as an Internet of Things (IoT) apparatus, or an apparatus capable of moving, such as a "car (e.g., an electric vehicle or the like), a bicycle (e.g., an electric bicycle, an electrically assisted bicycle, or the like), a motorcycle, a ship, a satellite, an aircraft, a drone, a robot, or the like" as an example, and the same can be performed in this case. Therefore, the terminal of the present embodiment may be referred to as a "mobile phone, smartphone, tablet, notebook computer, computer, personal computer, home appliance (household electric machine), an apparatus in a factory, a communication apparatus/broadcasting apparatus such as an IoT apparatus, or an apparatus capable of moving, such as the above-described apparatus as an example". However, the present disclosure is not limited thereto.

(Embodiment 2)

In Embodiment 2, a variation of the operations of the base station and the terminal described in Embodiment 1 will be described.

Since the configuration of the base station and the configuration of the terminal have been described in Embodiment 1, the description thereof will be omitted.

In Embodiment 1, FIGS. 5A, 5B, and 5C have been described as an example of the frame configuration transmitted by the base station. In the present embodiment, a method for realizing transmission of a communication modulation signal and a radio power transmission signal to a larger number of terminals by the base station will be mainly described.

FIG. 17A illustrates an example different from FIGS. 3A and 3C of a relationship between a "base station that is an example of a "power transmission and communication apparatus" having a configuration, such as FIGS. 1A, 1B, 1D1, 1D2, 1E, 1F, 1G, and 1H" and a "terminal that is an example of an apparatus that receives a power transmission signal transmitted by a "power transmission and communication apparatus" having a configuration, such as FIGS. 2A, 2B, 2E, 2F, 2G, and 2H to charge a battery (secondary battery)". In FIG. 17A, the same reference numerals are assigned to components that operate in the same manner as in FIG. 3A.

It is assumed that base station #1 of 301_1 performs radio power transmission to terminal #1 of 302_1 and terminal #4 of 302_4.

It is assumed that base station #1 of 301_1 performs radio power transmission to terminal #2 of 302_2 and terminal #5 of 302_5 and performs communication with terminal #1 of 302_2 and terminal #5 of 302_5.

It is assumed that base station #1 of 301_1 performs communication with terminal #3 of 302_3 and terminal #6 of 302_6.

In the example of FIG. 17A, it is assumed that base station #1 of 301_1 has a function to perform radio power transmission and a function to perform communication. Since the configuration of the apparatus having the function to perform radio power transmission and the function to perform communication has already been described, the description thereof will be omitted.

Efficiently performing, by base station #1 of 301_1, "communication", "radio power transmission", and "communication and radio power transmission" to a plurality of terminals as in FIG. 17A improves the frequency use efficiency. This point will be described, hereinafter.

Terminal #1 of 302_1 and terminal #4 of 302_4 have a charging function by radio power transmission. In this case, the configuration is, for example, as illustrated in FIG. 3B1, the terminals include charging function 398B. Further, as another method, a part of the communication function may be used. Since the configuration in this case has already been described, the description thereof will be omitted.

Terminal #2 of 302_2 and terminal #5 of 302_5 have a charging function by radio power transmission and a communication function. Since the configuration in this case has already been described, the description thereof will be omitted.

Terminal #3 of 302_3 and terminal #6 of 302_6 have a communication function. In this case, the configuration is, for example, as illustrated in FIG. 3B2, the terminals include communication function 399B.

In FIG. 17A, base station #1 of 301_1 performs interaction with six terminals, but base station #1 of 301_1 may perform interaction in the same manner with one or more terminals.

FIG. 17B illustrates an example different from FIGS. 3A, 3C, and 17A of a relationship between a "base station that is an example of a "power transmission and communication apparatus" having a configuration, such as FIGS. 1A, 1B, 1D1, 1D2, 1E, 1F, 1G, and 1H" and a "terminal that is an example of an apparatus that receives a power transmission signal transmitted by a "power transmission and communication apparatus" having a configuration, such as FIGS. 2A, 2B, 2E, 2F, 2G, and 2H to charge a battery (secondary battery)." In FIG. 17B, the same reference numerals are assigned to the same components as in FIGS. 3A, 3C, and 17A and a part of the description thereof will be omitted.

It is assumed that base station #1 of 301_1 performs radio power transmission to terminal #1 of 302_1 and terminal #4 of 302_4. Further, it is assumed that base station #1 of 301_1 performs radio power transmission to terminal #2 of 302_2 and terminal #5 of 302_5.

It is assumed that base station #2 of 301_2 performs communication with terminal #2 of 302_2 and terminal #5 of 302_5. Further, it is assumed that base station #2 of 301_2 performs communication with terminal #3 of 302_3 and terminal #6 of 302_6.

In the example of FIG. 17B, it is assumed that base station #1 of 301_1 has a function to perform radio power transmission. Therefore, as illustrated in FIG. 3D1, base station #1 of 301_1 includes power transmission function 396D. As another method, a part of the communication function may be used. Since the configuration in this case has already been described, the description thereof will be omitted.

In the example of FIG. 17B, it is assumed that base station #2 of 301_2 has a function to perform communication. Therefore, as illustrated in FIG. 3D2, base station #2 of 301_2 includes communication function 397D.

Terminal #1 of 302_1 and terminal #4 of 302_4 of FIG. 17B have a charging function by radio power transmission. In this case, the configuration is, for example, as illustrated in FIG. 3B1, the terminals include charging function 398B. Further, as another method, a part of the communication function may be used. Since the configuration in this case has already been described, the description thereof will be omitted.

Terminal #2 of 302_2 and terminal #5 of 302_5 of FIG. 17B have a charging function by radio power transmission and a communication function. Since the configuration in this case has already been described, the description thereof will be omitted.

Terminal #3 of 302_3 and terminal #6 of 302_6 of FIG. 17B have a communication function. In this case, the configuration is, for example, as illustrated in FIG. 3B2, the terminals including communication function 399B.

Base station #1 of 301_1 and base station #2 of 301_2 in FIG. 17B may perform communication. In this case, the communication may be performed via another apparatus.

Further, in FIG. 17B, an example is illustrated in a case where the number of base stations is 2 and the number of terminals is 6, but the present disclosure is not limited to this, and the same can be performed in a case where the number of base stations is 1 or 2 or more and the number of terminals is 1 or more.

As illustrated in FIGS. 17A and 17B, a "base station capable of radio power transmission (power transmission)," a "base station capable of communication," and a "base station capable of radio power transmission and communication" may be present in the system.

Further, as illustrated in FIGS. 17A and 17B, a "terminal capable of charging," a "terminal capable of communication," and a "terminal capable of charging and communication" may be present in the system.

Next, a method in which a terminal uses reception beamforming during charging will be described.

The configuration of the terminal that is the apparatus that receives a power transmission signal transmitted by the "power transmission and communication apparatus" such as a base station and an access point to charge a battery (secondary battery) is illustrated in FIGS. 2A, 2B, 2E, 2F, 2G, and 2H, and it is described that the reception beamforming can be used as described above. The terminal includes the configuration illustrated in FIG. 2K and performs the reception beamforming by using the analysis result of analyzer 245K.

Terminal #1 of 302_1 illustrated in FIGS. 17A and 17B will be focused on.

As a first example, it is assumed that terminal #1 of 302_1 does not perform the reception beamforming. In this case, since the configuration illustrated in FIG. 2K does not operate, terminal #1 of 302_1 receives a radio power transmission signal transmitted by base station #1 of 301_1, and the charging corresponding to the radio power transmission signal is performed.

As a second example, it is assumed that terminal #1 of 302_1 performs reception beamforming. In this case, the configuration illustrated in FIG. 2K operates, and the power is consumed herein. Then, terminal #1 of 302_1 receives the radio power transmission signal transmitted by base station #1 of 301_1, and the charging corresponding to the radio power transmission signal is performed, but the efficiency of charging is reduced by the amount of power consumption of the configuration illustrated in FIG. 2K.

A charging method suitable for the situation of a terminal will be described below for the abovementioned problem.

As described with reference to FIGS. 17A and 17B, it is noted that the "terminal capable of charging," the "terminal capable of communication," and the "terminal capable of charging and communication" are present in the system; particularly, the "terminal capable of charging" and the "terminal capable of charging and communication" are present in the system.

In consideration of the abovementioned problem, it is assumed that the terminal has a mode illustrated in FIG. 4.

- Charging mode:

  A mode in which a terminal operates mainly for charging.
- Battery residual amount saving mode:
  The charging alone is not focused on. The terminal consumes the power by the operation of communication and/or the operation of an application, and the residual amount of the battery decreases. This mode is a mode for reducing the decrease in the residual amount of the battery.
- Communication mode:
  A mode in which a terminal (and a base station) performs communication.

In FIG. 4, for example, it is assumed that a screen mounted on a display provided in the terminal is assigned reference numeral 400.

It is assumed that the terminal supports any one or more of the "charging mode", the "battery residual amount saving mode", and the "communication mode".

In this case, for example, in a case where the terminal is in the "charging mode", the terminal may not perform the reception beamforming (reception directivity control) when receiving the radio power transmission signal transmitted by the base station for charging in order to improve the charging efficiency.

The base station may perform transmission beamforming (transmission directivity control) when transmitting the radio power transmission signal in order to improve the charging efficiency. (Transmission beamforming (transmission directivity control) may not be performed.)

It is assumed that the terminal in the "battery residual amount saving mode" performs communication. In this case, since the terminal performs the reception operation for communication, the terminal performs reception beamforming (reception directivity control) when receiving the modulation signal of the communication. Therefore, when performing the reception operation of the communication, the terminal is required to operate the analyzer for the reception beamforming (reception directivity control).

Therefore, the terminal receives the radio power transmission signal transmitted by the base station, based on the reception beamforming (reception directivity control) performed in conjunction with the reception operation of the communication, and performs the charging. As a result, it is possible to obtain an effect that the decrease in the residual amount of the battery can be reduced.

In this way, in a case where the "terminal capable of charging and communication" performs the reception beamforming in the communication and the charging in the "battery residual amount saving mode", the effect as described above can be obtained.

As already described, in the systems of FIGS. 17A and 17B, the "terminal capable of charging", the "terminal capable of communication", and the "terminal capable of charging and communication" are present. Hereinafter, a description will be given of an example of a transmission method for a communication modulation signal and a radio power transmission signal of a base station in a case where the "terminal capable of charging", the "terminal capable of communication", and the "terminal capable of charging and communication" are present in the system.

In FIG. 17A, a case where base station #1 of 301_1 transmits a radio power transmission signal and a communication modulation signal to terminals will be described as an example.

FIG. 18A1 illustrates an exemplary configuration in a time-frequency domain of modulation signals and signals transmitted by base station #1 of 301_1 of FIG. 17A in a case where base station #1 of 301_1 of FIG. 17A performs communication and radio power transmission. Further, FIG. 18A1 also illustrates configurations of signals transmitted by base station #1 of 301_1 and base station #2 of 301_2 of FIG. 17B in the time-frequency domain. In FIG. 18A1 , the horizontal axis represents time, and the vertical axis represents frequency.

As illustrated in FIG. 18A1 , in the time-frequency domain, a region of communication modulation signals and a region of radio power transmission signals are present. The communication modulation signals are present in time A1, and the radio power transmission signals are present in time A2. Although not illustrated in the drawing, a communication modulation signals may be present within a range of time A1, and a radio power transmission signal may be present within a range of time A2.

Further, in the example of FIG. 18A1 , the communication modulation signals and the radio power transmission signals use frequency AA1.

In FIG. 18A1 , as in FIG. 17A, base station #1 of 301_1 transmits "communication modulation signal 1801A_2 for terminal #2 of 302_2", "communication modulation signal 1801A_5 for terminal #5 of 302_5", "communication modulation signal 1801A_3 for terminal #3 of 302_3", and "communication modulation signal 1801A_6 for terminal #6 of 302_6" in time A1. It is also possible to perform frequency division in order to support a plurality of terminals.

Terminal #2 of 302_2 receives communication modulation signal 1801A_2 for terminal #2 of 302_2 and obtains data. Terminal #2 of 302_2 may transmit a modulation signal for communication to base station #1 of 301_1.

Terminal #5 of 302_5 receives communication modulation signal 1801A_5 for terminal #5 of 302_5 and obtains data. Terminal #5 of 302_5 may transmit a modulation signal for communication to base station #1 of 301_1.

Terminal #3 of 302_3 receives communication modulation signal 1801A_3 for terminal #3 of 302_3 and obtains data. Terminal #3 of 302_3 may transmit a modulation signal for communication to base station #1 of 301_1.

Terminal #6 of 302_6 receives communication modulation signal 1801A_6 for terminal #6 of 302_6 and obtains data. Terminal #6 of 302_6 may transmit a modulation signal for communication to base station #1 of 301_1.

Further, base station #1 of 301_1 transmits "radio power transmission signal 1851A_2 for terminal #2 of 302_2", "radio power transmission signal 1851A_5 for terminal #5 of 302_5", "radio power transmission signal 1851A_1 for terminal #1 of 302_1", and "radio power transmission signal 1851A_4 for terminal #4 of 302_4" in time A2. It is also possible to perform frequency division in order to support a plurality of terminals.

Terminal #2 of 302_2 receives radio power transmission signal 1851A_2 for terminal #2 of 302_2 and performs charging.

Terminal #5 of 302_5 receives radio power transmission signal 1851A_5 for terminal #5 of 302_5 and performs charging.

Terminal #1 of 302_1 receives radio power transmission signal 1851A_5 for terminal #1 of 302_1 and performs charging.

Terminal #4 of 302_4 receives radio power transmission signal 1851A_5 for terminal #4 of 302_4 and performs charging.

The operations of the base stations (including beamforming) and the operation of the terminals (including beamforming) are as described in Embodiment 1.

As described above, efficiently performing, by base station #1 of 301_1, "communication", "radio power transmission", and "communication and radio power transmission" to the plurality of terminals as inFIG. 18A1 makes it possible to obtain an effect that the frequency use efficiency is improved.

Further, FIG. 18A1 is characterized in that "frequency used by communication modulation signal 1801A_2 for terminal #2 of 302_2" and "frequency used by radio power transmission signal 1851A_2 for terminal #2 of 302_2" are the same, and "frequency used by communication modulation signal 1801A_5 for terminal #5 of 302_5" and "frequency used by radio power transmission signal 1851A_5 for terminal #5 of 302_5" are partially the same.

As a result, terminal #2 of 302_2 and terminal #5 of 302_5 can obtain an effect that the decrease in the residual amount of the battery can be reduced by introducing reception beamforming at the time of communication and radio power transmission.

The frame configuration of signals transmitted by base station #1 of 301_1 is not limited to the configuration of FIG. 18A1 , and for example, "frequency used by communication modulation signal" and "frequency used by radio power transmission signal" may be partially the same. Further, a plurality of communication modulation signals may be present on the time axis, and a plurality of radio power transmission signals may be present on the time axis.

Further, a communication modulation signal for a certain terminal may be discretely disposed in plurality on the frequency axis, and a radio power transmission signal for a certain terminal may be discretely disposed in plurality on the frequency axis. Further, a communication modulation signal for a certain terminal may be discretely disposed in plurality on the time axis, and a radio power transmission signal for a certain terminal may be discretely disposed in plurality on the time axis.

Base station #1 of 301_1 may perform transmission beamforming when transmitting a communication modulation signal and a radio power transmission signal.

For example, base station #1 of 301_1 may configure a pre-coding matrix (pre-coding weight, codebook) for each of "communication modulation signal 1801A_2 for terminal #2 of 302_2", "communication modulation signal 1801A_5 for terminal #5 of 302_5", "communication modulation signal 1801A_3 for terminal #3 of 302_3", and "communication modulation signal 1801A_6 for terminal #6 of 302_6", and perform pre-coding processing to realize transmission beamforming.

Further, base station #1 of 301_1 may configure a pre-coding matrix (pre-coding weight, codebook) for each of "radio power transmission signal 1851A_2 for terminal #2 of 302_2", "radio power transmission signal 1851A_5 for terminal #5 of 302_5", "radio power transmission signal 1851A_1 for terminal #1 of 302_1", and "radio power transmission signal 1851A_4 for terminal #4 of 302_4", and perform pre-coding processing to realize transmission beamforming.

FIG. 18A2 illustrates an exemplary configuration of modulation signals and signals in a time-frequency domain transmitted by base station #1 of 301_1 of FIG. 17A in a case where base station #1 of 301_1 of FIG. 17A performs communication and radio power transmission. Further, FIG. 18A2also illustrates configurations of signals transmitted by base station #1 of 301_1 and base station #2 of 301_2 of FIG. 17B in the time-frequency domain. InFIG. 18A2, the horizontal axis represents time, and the vertical axis represents frequency.

As illustrated inFIG. 18A2, in the time-frequency domain, a region of communication modulation signals and a region of radio power transmission signals are present. The communication modulation signals are present in time A1, and the radio power transmission signals are present in time A2. Although not illustrated in the drawing, a communication modulation signal may be present within a range of time A1, and a radio power transmission signal may be present within a range of time A2.

Further, in the example ofFIG. 18A2, the communication modulation signals and the radio power transmission signals use frequency AA1.

In ,FIG. 18A2 as in FIG. 17A, base station #1 of 301_1 transmits "communication modulation signal 1801A_2 for terminal #2 of 302_2", "communication modulation signal 1801A_5 for terminal #5 of 302_5", "communication modulation signal 1801A_3 for terminal #3 of 302_3", and "communication modulation signal 1801A_6 for terminal #6 of 302_6" in time A1. It is also possible to perform frequency division in order to support a plurality of terminals.

Terminal #2 of 302_2 receives communication modulation signal 1801A_2 for terminal #2 of 302_2 and obtains data. Terminal #2 of 302_2 may transmit a modulation signal for communication to base station #1 of 301_1.

Terminal #5 of 302_5 receives communication modulation signal 1801A_5 for terminal #5 of 302_5 and obtains data. Terminal #5 of 302_5 may transmit a modulation signal for communication to base station #1 of 301_1.

Terminal #3 of 302_3 receives communication modulation signal 1801A_3 for the terminal #3 of 302_3 and obtains data. The terminal #3 of 302_3 may transmit a modulation signal for communication to base station #1 of 301_1.

Terminal #6 of 302_6 receives communication modulation signal 1801A_6 for terminal #6 of 302_6 and obtains data. Terminal #6 of 302_6 may transmit a modulation signal for communication to base station #1 of 301_1.

Further, base station #1 of 301_1 transmits "radio power transmission signal 1851A_2 for terminal #2 of 302_2" in time A2d within a range of time A2, "radio power transmission signal 1851A_5 for terminal #5 of 302_5" in time A2c within a range of time A2, "radio power transmission signal 1851A_1 for terminal #1 of 302_1" in time A2b within a range of time A2, and "radio power transmission signal 1851A_4 for terminal #4 of 302_4" in time A2a within a range of time A2. It is also possible to perform time division in order to support a plurality of terminals.

Terminal #2 of 302_2 receives radio power transmission signal 1851A_2 for Terminal #2 of 302_2 and performs charging.

Terminal #5 of 302_5 receives radio power transmission signal 1851A_5 for terminal #5 of 302_5 and performs charging.

Terminal #1 of 302_1 receives radio power transmission signal 1851A_5 for terminal #1 of 302_1 and performs charging.

Terminal #4 of 302_4 receives radio power transmission signal 1851A_5 for terminal #4 of 302_4 and performs charging.

The operations of base stations (including beamforming) and the operations of the terminals (including beamforming) are as described in Embodiment 1.

As described above, efficiently performing, by base station #1 of 301_1, "communication", "radio power transmission", and "communication and radio power transmission" to the plurality of terminals as in FIG. 18A2 makes it possible to obtain an effect that the frequency use efficiency is improved.

The frame configuration of signals transmitted by base station #1 of 301_1 is not limited to the configuration of FIG. 18A2, and for example, "frequency used by communication modulation signal" and "frequency used by radio power transmission signal" may be partially the same. Further, a plurality of communication modulation signals may be present on the time axis, and a plurality of radio power transmission signals may be present on the time axis.

Further, a communication modulation signal for a certain terminal may be discretely disposed in plurality on the frequency axis, and a radio power transmission signal for a certain terminal may be discretely disposed in plurality on the frequency axis. Further, a communication modulation signal for a certain terminal may be discretely disposed in plurality on the time axis, and a radio power transmission signal for a certain terminal may be discretely disposed in plurality on the time axis.

Base station #1 of 301_1 may perform transmission beamforming when transmitting a communication modulation signal and a radio power transmission signal.

For example, base station #1 of 301_1 may configure a pre-coding matrix (pre-coding weight, codebook) for each of "communication modulation signal 1801A_2 for terminal #2 of 302_2", "communication modulation signal 1801A_5 for terminal #5 of 302_5", "communication modulation signal 1801A_3 for terminal #3 of 302_3", and "communication modulation signal 1801A_6 for terminal #6 of 302_6", and perform pre-coding processing to realize transmission beamforming.

Further, base station #1 of 301_1 may configure a pre-coding matrix (pre-coding weight, codebook) for each of "radio power transmission signal 1851A_2 for terminal #2 of 302_2", "radio power transmission signal 1851A_5 for terminal #5 of 302_5", "radio power transmission signal 1851A_1 for terminal #1 of 302_1", and "radio power transmission signal 1851A_4 for terminal #4 of 302_4", and perform pre-coding processing to realize transmission beamforming.

In FIG. 18A2, since "radio power transmission signal 1851A_2 for terminal #2 of 302_2", "radio power transmission signal 1851A_5 for terminal #5 of 302_5", "radio power transmission signal 1851A_1 for terminal #1 of 302_1", and "radio power transmission signal 1851A_4 for terminal #4 of 302_4" are time-divided, a wide frequency assignment is made possible. Therefore, in each terminal, an effect that the charging efficiency is improved can be obtained. Further, in order to obtain high charging efficiency, the time of a radio power transmission signal assigned to each terminal may be increased. This point can be flexibly implemented by time division scheduling.

Further, "communication modulation signal 1801A_2 for terminal #2 of 302_2" and "radio power transmission signal 1851A_2 for terminal #2 of 302_2" are present for terminal #2 of 302_2, and "communication modulation signal 1801A_5 for terminal #5 of 302_5" and "radio power transmission signal 1851A_5 for terminal #5 of 302_5" are present for terminal #5 of 302_5.

As a result, terminal #2 of 302_2 and terminal #5 of 302_5 can obtain an effect that the decrease in the residual amount of the battery can be reduced by introducing reception beamforming at the time of communication and radio power transmission.

FIG. 18B1 illustrates an exemplary configuration in a time-frequency domain of modulation signals and signals transmitted by base station #1 of 301_1 of FIG. 17A in a case where base station #1 of 301_1 of FIG. 17A performs communication and radio power transmission. Further, FIG. 18B1 also illustrates configurations of signals transmitted by base station #1 of 301_1 and base station #2 of 301_2 of FIG. 17B in the time-frequency domain. In FIG. 18B1, the horizontal axis represents time, and the vertical axis represents frequency.

As illustrated in FIG. 18B1, in the time-frequency domain, a region of communication modulation signals and a region of radio power transmission signals are present. The communication modulation signals are present in frequency BB1, and the radio power transmission signals are present in frequency BB2. A communication modulation signal may be present within a range of frequency BB1, and a radio power transmission signal may be present within a range of frequency BB2.

In FIG. 18B1, as in FIG. 17A, base station #1 of 301_1 transmits "communication modulation signal 1801B_2 for terminal #2 of 302_2", "communication modulation signal 1801B_5 for terminal #5 of 302_5", "communication modulation signal 1801B_3 for terminal #3 of 302_3", and "communication modulation signal 1801B_6 for terminal #6 of 302_6" in frequency BB1 and time B1. It is also possible to perform frequency division in order to support a plurality of terminals.

Terminal #2 of 302_2 receives communication modulation signal 1801B_2 for terminal #2 of 302_2 and obtains data. Terminal #2 of 302_2 may transmit a modulation signal for communication to base station #1 of 301_1.

Terminal #5 of 302_5 receives communication modulation signal 1801B_5 for terminal #5 of 302_5 and obtains data. Terminal #5 of 302_5 may transmit a modulation signal for communication to base station #1 of 301_1.

Terminal #3 of 302_3 receives communication modulation signal 1801B_3 for terminal #3 of 302_3 and obtains data. Terminal #3 of 302_3 may transmit a modulation signal for communication to base station #1 of 301_1.

Terminal #6 of 302_6 receives communication modulation signal 1801B_6 for terminal #6 of 302_6 and obtains data. Terminal #6 of 302_6 may transmit a modulation signal for communication to base station #1 of 301_1.

"Communication modulation signal 1801B_2 for terminal #2 of 302_2", "communication modulation signal 1801B_5 for terminal #5 of 302_5", "communication modulation signal 1801B_3 for terminal #3 of 302_3", and "communication modulation signal 1801B_6 for terminal #6 of 302_6" may be present within a range of time B1.

Base station #1 of 301_1 transmits "radio power transmission signal 1851B_5 for terminal #5 of 302_5", "radio power transmission signal 1851B_1 for terminal #1 of 302_1", and "radio power transmission signal 1851B_4 for terminal #4 of 302_4" in frequency BB2 and time B2.

Further, base station #1 of 301_1 transmits "radio power transmission signal 1851B_2 for terminal #2 of 302_2" in frequency BB2 and within a range of time B2.

"Radio power transmission signal 1851B_2 for terminal #2 of 302_2", "radio power transmission signal 1851B_5 for terminal #5 of 302_5", "radio power transmission signal 1851B_1 for terminal #1 of 302_1", and "radio power transmission signal 1851B_4 for terminal #4 of 302_4" may be present within a range of time B2. It is also possible to perform frequency division in order to support a plurality of terminals.

Terminal #2 of 302_2 receives radio power transmission signal 1851B_2 for terminal #2 of 302_2 and performs charging.

Terminal #5 of 302_5 receives radio power transmission signal 1851B_5 for terminal #5 of 302_5 and performs charging.

Terminal #1 of 302_1 receives radio power transmission signal 1851B_1 for terminal #1 of 302_1 and performs charging.

Terminal #4 of 302_4 receives radio power transmission signal 1851B_4 for terminal #4 of 302_4 and performs charging.

The operations of base stations (including beamforming) and the operations of terminals (including beamforming) are as described in Embodiment 1.

As described above, efficiently performing, by base station #1 of 301_1, "communication", "radio power transmission", and "communication and radio power transmission" to the plurality of terminals as in FIG. 18B1 makes it possible to obtain an effect that the frequency use efficiency is improved.

The frame configuration of signals transmitted by base station #1 of 301_1 is not limited to the configuration of FIG. 18B1, and a plurality of communication modulation signals may be present on the time axis, and a plurality of radio power transmission signals may be present on the time axis.

Further, a communication modulation signal for a certain terminal may be discretely disposed in plurality on the frequency axis, and a radio power transmission signal for a certain terminal may be discretely disposed in plurality on the frequency axis. Further, a communication modulation signal for a certain terminal may be discretely disposed in plurality on the time axis, and a radio power transmission signal for a certain terminal may be discretely disposed in plurality on the time axis.

Base station #1 of 301_1 may perform transmission beamforming when transmitting a communication modulation signal and a radio power transmission signal.

For example, base station #1 of 301_1 may configure a pre-coding matrix (pre-coding weight, codebook) for each of "communication modulation signal 1801B_2 for terminal #2 of 302_2", "communication modulation signal 1801B_5 for terminal #5 of 302_5", "communication modulation signal 1801B_3 for terminal #3 of 302_3", and "communication modulation signal 1801B_6 for terminal #6 of 302_6", and perform pre-coding processing to realize transmission beamforming.

Further, base station #1 of 301_1 may configure a pre-coding matrix (pre-coding weight, codebook) for each of "radio power transmission signal 1851B_2 for terminal #2 of 302_2", "radio power transmission signal 1851B_5 for terminal #5 of 302_5", "radio power transmission signal 1851B_1 for terminal #1 of 302_1", and "radio power transmission signal 1851B_4 for terminal #4 of 302_4", and perform pre-coding processing to realize transmission beamforming.

In FIG. 18B1, "communication modulation signal 1801B_2 for terminal #2 of 302_2" and "radio power transmission signal 1851B_2 for terminal #2 of 302_2" are present, and "communication modulation signal 1801B_5 for terminal #5 of 302_5" and "radio power transmission signal 1851B_5 for terminal #5 of 302_5" are present.

As a result, terminal #2 of 302_2 and terminal #5 of 302_5 can obtain an effect that the decrease in the residual amount of the battery can be reduced by introducing reception beamforming at the time of communication and radio power transmission.

As in FIG. 18B1, there may be a time when "communication modulation signal 1801B_5 for terminal #5 of 302_5" and "radio power transmission signal 1851B_5 for terminal #5 of 302_5" are present, or "communication modulation signal 1801B_2 for terminal #2 of 302_2" and "radio power transmission signal 1851B_2 for terminal #2 of 302_2" may be present at different times.

FIG. 18B2 illustrates an exemplary configuration in a time-frequency domain of modulation signals and signals transmitted by base station #1 of 301_1 of FIG. 17A in a case where base station #1 of 301_1 of FIG. 17A performs communication and radio power transmission. Further, FIG. 18B2 also illustrates configurations of signals transmitted by base station #1 of 301_1 and base station #2 of 301_2 of FIG. 17B in the time-frequency domain. In FIG. 18B2, the horizontal axis represents time, and the vertical axis represents frequency.

As illustrated in FIG. 18B2, in the time-frequency domain, a region of communication modulation signals and a region of radio power transmission signals are present. The communication modulation signals are present in frequency BB1, and the radio power transmission signals are present in frequency BB2. A communication modulation signal may be present within a range of frequency BB1, and a radio power transmission signal may be present within a range of frequency BB2.

In FIG. 18B2, as in FIG. 17A, base station #1 of 301_1 transmits "communication modulation signal 1801B_2 for terminal #2 of 302_2", "communication modulation signal 1801B_5 for terminal #5 of 302_5", "communication modulation signal 1801B_3 for terminal #3 of 302_3", and "communication modulation signal 1801B_6 for terminal #6 of 302_6" in frequency BB1 and time B1. It is also possible to perform frequency division in order to support a plurality of terminals.

Terminal #2 of 302_2 receives communication modulation signal 1801B_2 for terminal #2 of 302_2 and obtains data. Terminal #2 of 302_2 may transmit a modulation signal for communication to base station #1 of 301_1.

Terminal #5 of 302_5 receives communication modulation signal 1801B_5 for terminal #5 of 302_5 and obtains data. Terminal #5 of 302_5 may transmit a modulation signal for communication to base station #1 of 301_1.

Terminal #3 of 302_3 receives communication modulation signal 1801B_3 for terminal #3 of 302_3 and obtains data. Terminal #3 of 302_3 may transmit a modulation signal for communication to base station #1 of 301_1.

Terminal #6 of 302_6 receives communication modulation signal 1801B_6 for terminal #6 of 302_6 and obtains data. Terminal #6 of 302_6 may transmit a modulation signal for communication to base station #1 of 301_1.

"Communication modulation signal 1801B_2 for terminal #2 of 302_2", "communication modulation signal 1801B_5 for terminal #5 of 302_5", "communication modulation signal 1801B_3 for terminal #3 of 302_3", and "communication modulation signal 1801B_6 for terminal #6 of 302_6" may be present within a range of time B1.

Base station #1 of 301_1 transmits "radio power transmission signal 1851B_5 for terminal #5 of 302_5" in time B2c within a range of frequency BB2 and time B2, "radio power transmission signal 1851B_1 for terminal #1 of 302_1" in time B2b within a range of frequency BB2 and time B2, "radio power transmission signal 1851B_4 for terminal #4 of 302_4" in time B2a within a range of frequency BB2 and time B2, and "radio power transmission signal 1851B_2 for terminal #2 of 302_2" in time B2d within a range of frequency BB2 and time B2.

"Radio power transmission signal 1851B_2 for terminal #2 of 302_2", "radio power transmission signal 1851B_5 for terminal #5 of 302_5", "radio power transmission signal 1851B_1 for terminal #1 of 302_1", and "radio power transmission signal 1851B_4 for terminal #4 of 302_4" may be present within a range of time B2. It is also possible to perform time division in order to support a plurality of terminals.

Terminal #2 of 302_2 receives radio power transmission signal 1851B_2 for terminal #2 of 302_2 and performs charging.

Terminal #5 of 302_5 receives radio power transmission signal 1851B_5 for terminal #5 of 302_5 and performs charging.

Terminal #1 of 302_1 receives radio power transmission signal 1851B_5 for terminal #1 of 302_1 and performs charging.

Terminal #4 of 302_4 receives radio power transmission signal 1851B_5 for terminal #4 of 302_4 and performs charging.

The operations of base stations (including beamforming) and the operations of terminals (including beamforming) are as described in Embodiment 1.

As described above, efficiently performing, by base station #1 of 301_1, "communication", "radio power transmission", and "communication and radio power transmission" to the plurality of terminals as in FIG. 18B2 makes it possible to obtain an effect that the frequency use efficiency is improved.

The frame configuration of signals transmitted by base station #1 of 301_1 is not limited to the configuration of FIG. 18B2, and a plurality of communication modulation signals may be present on the time axis, and a plurality of radio power transmission signals may be present on the time axis.

Further, a communication modulation signal for a certain terminal may be discretely disposed in plurality on the frequency axis, and a radio power transmission signal for a certain terminal may be discretely disposed in plurality on the frequency axis. Further, a communication modulation signal for a certain terminal may be discretely disposed in plurality on the time axis, and a radio power transmission signal for a certain terminal may be discretely disposed in plurality on the time axis.

Base station #1 of 301_1 may perform transmission beamforming when transmitting a communication modulation signal and a radio power transmission signal.

For example, base station #1 of 301_1 may configure a pre-coding matrix (pre-coding weight, codebook) for each of "communication modulation signal 1801B_2 for terminal #2 of 302_2", "communication modulation signal 1801B_5 for terminal #5 of 302_5", "communication modulation signal 1801B_3 for terminal #3 of 302_3", and "communication modulation signal 1801B_6 for terminal #6 of 302_6", and perform pre-coding processing to realize transmission beamforming.

Further, base station #1 of 301_1 may configure a pre-coding matrix (pre-coding weight, codebook) for each of "radio power transmission signal 1851B_2 for terminal #2 of 302_2", "radio power transmission signal 1851B_5 for terminal #5 of 302_5", "radio power transmission signal 1851B_1 for terminal #1 of 302_1", and "radio power transmission signal 1851B_4 for terminal #4 of 302_4", and perform pre-coding processing to realize transmission beamforming.

In FIG. 18B2, since "radio power transmission signal 1851B_2 for terminal #2 of 302_2", "radio power transmission signal 1851B_5 for terminal #5 of 302_5", "radio power transmission signal 1851B_1 for terminal #1 of 302_1", and "radio power transmission signal 1851B_4 for terminal #4 of 302_4" are time-divided, a wide frequency assignment is made possible. Therefore, in each terminal, an effect that the charging efficiency is improved can be obtained. Further, in order to obtain high charging efficiency, the time of a radio power transmission signal assigned to each terminal may be increased. This point can be flexibly implemented by time division scheduling.

Further, "communication modulation signal 1801B_2 for terminal #2 of 302_2" and "radio power transmission signal 1851B_2 for terminal #2 of 302_2" are present for terminal #2 of 302_2, and "communication modulation signal 1801B_5 for terminal #5 of 302_5" and "radio power transmission signal 1851B_5 for terminal #5 of 302_5" are present for terminal #5 of 302_5.

As a result, terminal #2 of 302_2 and terminal #5 of 302_5 can obtain an effect that the decrease in the residual amount of the battery can be reduced by introducing reception beamforming at the time of communication and radio power transmission.

FIG. 18C illustrates an exemplary configuration in a time-frequency domain of modulation signals and signals transmitted by base station #1 of 301_1 of FIG. 17A in a case where base station #1 of 301_1 of FIG. 17A performs communication and radio power transmission. Further, FIG. 18C also illustrates configurations of signals transmitted by base station #1 of 301_1 and base station #2 of 301_2 of FIG. 17B in the time-frequency domain. In FIG. 18C, the horizontal axis represents time, and the vertical axis represents frequency.

As illustrated in FIG. 18C, in the time-frequency domain, it is assumed that the "time-frequency region of frequency CC1 and time C1" and the "time-frequency region of frequency CC1 and time C2" can be assigned to a communication modulation signal and a radio power transmission signal.

In FIG. 18C, as in FIG. 17A, base station #1 of 301_1 transmits "communication modulation signal 1801C_2 for terminal #2 of 302_2", "radio power transmission signal 1851C_5 for terminal #5 of 302_5", "radio power transmission signal 1851C_1 for terminal #1 of 302_1", and "communication modulation signal 1801C_6 for terminal #6 of 302_6" in a range of frequency CC1 and time C1. It is also possible to perform frequency division in order to support a plurality of terminals.

Terminal #2 of 302_2 receives communication modulation signal 1801C_2 for terminal #2 of 302_2 and obtains data. Terminal #2 of 302_2 may transmit a modulation signal for communication to base station #1 of 301_1.

Terminal #5 of 302_5 receives radio power transmission signal 1851C_5 for terminal #5 of 302_5 and performs charging.

Terminal #1 of 302_1 receives radio power transmission signal 1851C_1 for terminal #1 of 302_1 and performs charging.

Terminal #6 of 302_6 receives communication modulation signal 1801C_6 for terminal #6 of 302_6 and obtains data. Terminal #6 of 302_6 may transmit a modulation signal for communication to base station #1 of 301_1.

"Communication modulation signal 1801C_2 for terminal #2 of 302_2", "radio power transmission signal 1851C_5 for terminal #5 of 302_5", "radio power transmission signal 1851C_1 for terminal #1 of 302_1", and "communication modulation signal 1801C_6 for terminal #6 of 302_6" may be present within a range of time C1.

Base station #1 of 301_1 transmits "radio power transmission signal 1851C_2 for terminal #2 of 302_2", "communication modulation signal 1801C_5 for terminal #5 of 302_5", "communication modulation signal 1801C_3 for terminal #3 of 302_3", and "radio power transmission signal 1851C_4 for terminal #4 of 302_4" in a range of frequency CC1 and time C2. It is also possible to perform frequency division in order to support a plurality of terminals.

Terminal #2 of 302_2 receives radio power transmission signal 1851C_2 for terminal #2 of 302_2 and performs charging.

Terminal #5 of 302_5 receives communication modulation signal 1801C_5 for terminal #5 of 302_5 and obtains data. Terminal #5 of 302_5 may transmit a modulation signal for communication to base station #1 of 301_1.

Terminal #3 of 302_3 receives communication modulation signal 1801C_3 for terminal #3 of 302_3 and obtains data. Terminal #3 of 302_3 may transmit a modulation signal for communication to base station #1 of 301_1.

Terminal #4 of 302_4 receives radio power transmission signal 1851C_4 for terminal #4 of 302_4 and performs charging.

The operations of base stations (including beamforming) and the operations of terminals (including beamforming) are as described in Embodiment 1.

As described above, efficiently performing, by base station #1 of 301_1, "communication", "radio power transmission", and "communication and radio power transmission" to the plurality of terminals as in FIG. 18C makes it possible to obtain an effect that the frequency use efficiency is improved.

The frame configuration of signals transmitted by base station #1 of 301_1 is not limited to the configuration of FIG. 18C, and a plurality of communication modulation signals may be present on the time axis, and a plurality of radio power transmission signals may be present on the time axis.

Further, a communication modulation signal for a certain terminal may be discretely disposed in plurality on the frequency axis, and a radio power transmission signal for a certain terminal may be discretely disposed in plurality on the frequency axis. Further, a communication modulation signal for a certain terminal may be discretely disposed in plurality on the time axis, and a radio power transmission signal for a certain terminal may be discretely disposed in plurality on the time axis.

Base station #1 of 301_1 may perform transmission beamforming when transmitting a communication modulation signal and a radio power transmission signal.

For example, base station #1 of 301_1 may configure a pre-coding matrix (pre-coding weight, codebook) for each of "communication modulation signal 1801C_2 for terminal #2 of 302_2", "communication modulation signal 1801C_5 for terminal #5 of 302_5", "communication modulation signal 1801C_3 for terminal #3 of 302_3", and "communication modulation signal 1801C_6 for terminal #6 of 302_6", and perform pre-coding processing to realize transmission beamforming.

Further, base station #1 of 301_1 may configure a pre-coding matrix (pre-coding weight, codebook) for each of "radio power transmission signal 1851C_2 for terminal #2 of 302_2", "radio power transmission signal 1851C_5 for terminal #5 of 302_5", "radio power transmission signal 1851C_1 for terminal #1 of 302_1", and "radio power transmission signal 1851C_4 for terminal #4 of 302_4", and perform pre-coding processing to realize transmission beamforming.

In FIG. 18C, "communication modulation signal 1801C_2 for terminal #2 of 302_2" and "radio power transmission signal 1851C_2 for terminal #2 of 302_2" are present, and "communication modulation signal 1801C_5 for terminal #5 of 302_5" and "radio power transmission signal 1851C_5 for terminal #5 of 302_5" are present.

As a result, terminal #2 of 302_2 and terminal #5 of 302_5 can obtain an effect that the decrease in the residual amount of the battery can be reduced by introducing reception beamforming at the time of communication and radio power transmission.

As in FIG. 18C, the present disclosure may have a feature that "frequency used by communication modulation signal 1801C_2 for terminal #2 of 302_2" and "frequency used by radio power transmission signal 1851C_2 for terminal #2 of 302_2" are the same, and "frequency used by communication modulation signal 1801C_5 for terminal #5 of 302_5" and "frequency used by radio power transmission signal 1851C_5 for terminal #5 of 302_5" are partially the same.

In FIG. 17B, a case where base station #1 of 301_1 and base station #2 of 301_2 transmit radio power transmission signals and communication modulation signals to terminals will be described as an example.

FIG. 18A1 illustrates an exemplary configuration in a time-frequency domain of modulation signals and signals transmitted by base station #1 of 301_1 and base station #2 of 301_2 of FIG. 17B in a case where "base station #1 of 301_1 performs radio power transmission and base station #2 of 301_2 of FIG. 17B performs communication." In FIG. 18A1, the horizontal axis represents time, and the vertical axis represents frequency.

As illustrated in FIG. 18A1, in the time-frequency domain, a region of communication modulation signals and a region of radio power transmission signals are present. The communication modulation signals are present in time A1, and the radio power transmission signals are present in time A2. Although not illustrated in the drawing, a communication modulation signal may be present within a range of time A1, and a radio power transmission signal may be present within a range of time A2.

Further, in the example of FIG. 18A1, the communication modulation signals and the radio power transmission signals use frequency AA1.

In FIG. 18A1, as in FIG. 17B, base station #2 of 301_2 transmits "communication modulation signal 1801A_2 for terminal #2 of 302_2", "communication modulation signal 1801A_5 for terminal #5 of 302_5", "communication modulation signal 1801A_3 for terminal #3 of 302_3", and "communication modulation signal 1801A_6 for terminal #6 of 302_6" in time A1. It is also possible to perform frequency division in order to support a plurality of terminals.

Terminal #2 of 302_2 receives communication modulation signal 1801A_2 for terminal #2 of 302_2 and obtains data. Terminal #2 of 302_2 may transmit a modulation signal for communication to base station #2 of 301_2.

Terminal #5 of 302_5 receives communication modulation signal 1801A_5 for terminal #5 of 302_5 and obtains data. Terminal #5 of 302_5 may transmit a modulation signal for communication to base station #2 of 301_2.

Terminal #3 of 302_3 receives communication modulation signal 1801A_3 for terminal #3 of 302_3 and obtains data. Terminal #3 of 302_3 may transmit a modulation signal for communication to base station #2 of 301_2.

Terminal #6 of 302_6 receives communication modulation signal 1801A_6 for terminal #6 of 302_6 and obtains data. Terminal #6 of 302_6 may transmit a modulation signal for communication to base station #2 of 301_2.

Further, base station #1 of 301_1 transmits "radio power transmission signal 1851A_2 for terminal #2 of 302_2", "radio power transmission signal 1851A_5 for terminal #5 of 302_5", "radio power transmission signal 1851A_1 for terminal #1 of 302_1", and "radio power transmission signal 1851A_4 for terminal #4 of 302_4" in time A2. It is also possible to perform frequency division in order to support a plurality of terminals.

Terminal #2 of 302_2 receives radio power transmission signal 1851A_2 for terminal #2 of 302_2 and performs charging.

Terminal #5 of 302_5 receives radio power transmission signal 1851A_5 for terminal #5 of 302_5 and performs charging.

Terminal #1 of 302_1 receives radio power transmission signal 1851A_5 for terminal #1 of 302_1 and performs charging.

Terminal #4 of 302_4 receives radio power transmission signal 1851A_5 for terminal #4 of 302_4 and performs charging.

The operations of base station (including beamforming) and the operations of terminal (including beamforming) are as described in Embodiment 1.

As described above, efficiently performing, by base station #1 of 301_1 and base station #2 of 301_2, "communication", "radio power transmission", and "communication and radio power transmission" to the plurality of terminals as in FIG. 18A1 makes it possible to obtain an effect that the frequency use efficiency is improved.

Further, a feature of FIG. 18A1 is that "frequency used by communication modulation signal 1801A_2 for terminal #2 of 302_2" and "frequency used by radio power transmission signal 1851A_2 for terminal #2 of 302_2" are the same, and "frequency used by communication modulation signal 1801A_5 for terminal #5 of 302_5" and "frequency used by radio power transmission signal 1851A_5 for terminal #5 of 302_5" are partially the same.

As a result, terminal #2 of 302_2 and terminal #5 of 302_5 can obtain an effect that the decrease in the residual amount of the battery can be reduced by introducing reception beamforming at the time of communication and radio power transmission.

The frame configuration of signals transmitted by base station #1 of 301_1 and base station #2 of 301_2 is not limited to the configuration of FIG. 18A1, and for example, "frequency used by a communication modulation signal" and "frequency used by a radio power transmission signal" may be partially the same. Further, a plurality of communication modulation signals may be present on the time axis, and a plurality of radio power transmission signals may be present on the time axis.

Further, a communication modulation signal for a certain terminal may be discretely disposed in plurality on the frequency axis, and a radio power transmission signal for a certain terminal may be discretely disposed in plurality on the frequency axis. Further, a communication modulation signal for a certain terminal may be discretely disposed in plurality on the time axis, and a radio power transmission signal for a certain terminal may be discretely disposed in plurality on the time axis.

Base station #1 of 301_1 and base station #2 of 301_2 may perform transmission beamforming when transmitting a communication module signal and a radio power transmission signal.

For example, base station #2 of 301_2 may configure a pre-coding matrix (pre-coding weight, codebook) for each of "communication modulation signal 1801A_2 for terminal #2 of 302_2", "communication modulation signal 1801A_5 for terminal #5 of 302_5", "communication modulation signal 1801A_3 for terminal #3 of 302_3", and "communication modulation signal 1801A_6 for terminal #6 of 302_6", and perform pre-coding processing to realize transmission beamforming.

Further, base station #1 of 301_1 may configure a pre-coding matrix (pre-coding weight, codebook) for each of "radio power transmission signal 1851A_2 for terminal #2 of 302_2", "radio power transmission signal 1851A_5 for terminal #5 of 302_5", "radio power transmission signal 1851A_1 for terminal #1 of 302_1", and "radio power transmission signal 1851A_4 for terminal #4 of 302_4", and perform pre-coding processing to realize transmission beamforming.

FIG. 18A2 illustrates an exemplary configuration in a time-frequency domain of modulation signals and signals transmitted by base station #1 of 301_1 and base station #2 of 301_2 of FIG. 17B in a case where "base station #1 of 301_1 performs radio power transmission and base station #2 of 301_2 of FIG. 17B performs communication. In FIG. 18A2, the horizontal axis represents time, and the vertical axis represents frequency.

As illustrated in FIG. 18A2, in the time-frequency domain, a region of communication modulation signals and a region of radio power transmission signal are present. The communication modulation signals are present in time A1, and the radio power transmission signals are present in time A2. Although not illustrated in the drawing, a communication modulation signal may be present within a range of time A1, and a radio power transmission signal may be present within a range of time A2.

Further, in the example of FIG. 18A2, the communication modulation signals and the radio power transmission signals use frequency AA1.

In FIG. 18A2, as in FIG. 17A, base station #2 of 301_2 transmits "communication modulation signal 1801A_2 for terminal #2 of 302_2", "communication modulation signal 1801A_5 for terminal #5 of 302_5", "communication modulation signal 1801A_3 for terminal #3 of 302_3", and "communication modulation signal 1801A_6 for terminal #6 of 302_6" in time A1. It is also possible to perform frequency division in order to support a plurality of terminals.

Terminal #2 of 302_2 receives communication modulation signal 1801A_2 for terminal #2 of 302_2 and obtains data. Terminal #2 of 302_2 may transmit a modulation signal for communication to base station #2 of 301_2.

Terminal #5 of 302_5 receives communication modulation signal 1801A_5 for terminal #5 of 302_5 and obtains data. Terminal #5 of 302_5 may transmit a modulation signal for communication to base station #2 of 301_2.

Terminal #3 of 302_3 receives communication modulation signal 1801A_3 for terminal #3 of 302_3 and obtains data. Terminal #3 of 302_3 may transmit a modulation signal for communication to base station #2 of 301_2.

Terminal #6 of 302_6 receives communication modulation signal 1801A_6 for terminal #6 of 302_6 and obtains data. Terminal #6 of 302_6 may transmit a modulation signal for communication to base station #2 of 301_2.

Further, base station #1 of 301_1 transmits "radio power transmission signal 1851A_2 for terminal #2 of 302_2" in time A2d within a range of time A2, "radio power transmission signal 1851A_5 for terminal #5 of 302_5" in time A2c within a range of time A2, "radio power transmission signal 1851A_1 for terminal #1 of 302_1" in time A2b within a range of time A2, and "radio power transmission signal 1851A_4 for terminal #4 of 302_4" in time A2a within a range of time A2. It is also possible to perform time division in order to support a plurality of terminals.

Terminal #2 of 302_2 receives radio power transmission signal 1851A_2 for terminal #2 of 302_2 and performs charging.

Terminal #5 of 302_5 receives radio power transmission signal 1851A_5 for terminal #5 of 302_5 and performs charging.

Terminal #1 of 302_1 receives radio power transmission signal 1851A_5 for terminal #1 of 302_1 and performs charging.

Terminal #4 of 302_4 receives radio power transmission signal 1851A_5 for terminal #4 of 302_4 and performs charging.

The operations of base stations (including beamforming) and the operations of terminals (including beamforming) are as described in Embodiment 1.

As described above, efficiently performing, by base station #1 of 301_1 and base station #2 of 301_2, "communication", "radio power transmission", and "communication and radio power transmission" to the plurality of terminals as in FIG. 18A2 makes it possible to obtain an effect that the frequency use efficiency is improved.

The frame configuration of signals transmitted by base station #1 of 301_1 and base station #2 of 301_2 is not limited to the configuration of FIG. 18A2, and for example, "frequency used by a communication modulation signal" and "frequency used by a radio power transmission signal" may be partially the same. Further, a plurality of communication modulation signals may be present on the time axis, and a plurality of radio power transmission signals may be present on the time axis.

Further, a communication modulation signal for a certain terminal may be discretely disposed in plurality on the frequency axis, and a radio power transmission signal for a certain terminal may be discretely disposed in plurality on the frequency axis. Further, a communication modulation signal for a certain terminal may be discretely disposed in plurality on the time axis, and a radio power transmission signal for a certain terminal may be discretely disposed in plurality on the time axis.

Base station #1 of 301_1 and base station #2 of 301_2 may perform transmission beamforming when transmitting a communication module signal and a radio power transmission signal.

For example, base station #2 of 301_2 may configure a pre-coding matrix (pre-coding weight, codebook) for each of "communication modulation signal 1801A_2 for terminal #2 of 302_2", "communication modulation signal 1801A_5 for terminal #5 of 302_5", "communication modulation signal 1801A_3 for terminal #3 of 302_3", and "communication modulation signal 1801A_6 for terminal #6 of 302_6", and perform precoding processing to realize transmission beamforming.

Further, base station #1 of 301_1 may configure a pre-coding matrix (pre-coding weight, codebook) for each of "radio power transmission signal 1851A_2 for terminal #2 of 302_2", "radio power transmission signal 1851A_5 for terminal #5 of 302_5", "radio power transmission signal 1851A_1 for terminal #1 of 302_1", and "radio power transmission signal 1851A_4 for terminal #4 of 302_4", and perform pre-coding processing to realize transmission beamforming.

In FIG. 18A2, since "radio power transmission signal 1851A_2 for terminal #2 of 302_2", "radio power transmission signal 1851A_5 for terminal #5 of 302_5", "radio power transmission signal 1851A_1 for terminal #1 of 302_1", and "radio power transmission signal 1851A_4 for terminal #4 of 302_4" are time-divided, a wide frequency assignment is made possible. Therefore, in each terminal, an effect that the charging efficiency is improved can be obtained. Further, in order to obtain high charging efficiency, the time of a radio power transmission signal assigned to each terminal may be increased. This point can be flexibly implemented by time division scheduling.

Further, "communication modulation signal 1801A_2 for terminal #2 of 302_2" and "radio power transmission signal 1851A_2 for terminal #2 of 302_2" are present for terminal #2 of 302_2, and "communication modulation signal 1801A_5 for terminal #5 of 302_5" and "radio power transmission signal 1851A_5 for terminal #5 of 302_5" are present for terminal #5 of 302_5.

As a result, terminal #2 of 302_2 and terminal #5 of 302_5 can obtain an effect that the decrease in the residual amount of the battery can be reduced by introducing reception beamforming at the time of communication and radio power transmission.

FIG. 18B1 illustrates an exemplary configuration in a time-frequency domain of modulation signals and signals transmitted by base station #1 of 301_1 and base station #2 of 301_2 of FIG. 17B in a case where "base station #1 of 301_1 performs radio power transmission and base station #2 of 301_2 of FIG. 17B performs communication." In FIG. 18B1, the horizontal axis represents time, and the vertical axis represents frequency.

As illustrated in FIG. 18B1, in the time-frequency domain, a region of communication modulation signals and a region of radio power transmission signals are present. The communication modulation signals are present in frequency BB1, and the radio power transmission signals are present in frequency BB2. A communication modulation signal may be present within a range of frequency BB1, and a radio power transmission signal may be present within a range of frequency BB2.

In FIG. 18B1, as in FIG. 17B, base station #2 of 301_2 transmits "communication modulation signal 1801B_2 for terminal #2 of 302_2", "communication modulation signal 1801B_5 for terminal #5 of 302_5", "communication modulation signal 1801B_3 for terminal #3 of 302_3", and "communication modulation signal 1801B_6 for terminal #6 of 302_6" in frequency BB1 and time B1. It is also possible to perform frequency division in order to support a plurality of terminals.

Terminal #2 of 302_2 receives communication modulation signal 1801B_2 for terminal #2 of 302_2 and obtains data. Terminal #2 of 302_2 may transmit a modulation signal for communication to base station #2 of 301_2.

Terminal #5 of 302_5 receives communication modulation signal 1801B_5 for terminal #5 of 302_5 and obtains data. Terminal #5 of 302_5 may transmit a modulation signal for communication to base station #2 of 301_2.

Terminal #3 of 302_3 receives communication modulation signal 1801B_3 for terminal #3 of 302_3 and obtains data. Terminal #3 of 302_3 may transmit a modulation signal for communication to base station #2 of 301_2.

Terminal #6 of 302_6 receives communication modulation signal 1801B_6 for terminal #6 of 302_6 and obtains data. Terminal #6 of 302_6 may transmit a modulation signal for communication to base station #2 of 301_2.

"Communication modulation signal 1801B_2 for terminal #2 of 302_2", "communication modulation signal 1801B_5 for terminal #5 of 302_5", "communication modulation signal 1801B_3 for terminal #3 of 302_3", and "communication modulation signal 1801B_6 for terminal #6 of 302_6" may be present within a range of time B1.

Base station #1 of 301_1 transmits "radio power transmission signal 1851B_5 for terminal #5 of 302_5", "radio power transmission signal 1851B_1 for terminal #1 of 302_1", and "radio power transmission signal 1851B_4 for terminal #4 of 302_4" in frequency BB2 and time B2.

Further, base station #1 of 301_1 transmits "radio power transmission signal 1851B_2 for terminal #2 of 302_2" in frequency BB2 and within a range of time B2.

"Radio power transmission signal 1851B_2 for terminal #2 of302_2", "radio power transmission signal 1851B_5 for terminal #5 of 302_5", "radio power transmission signal 1851B_1 for terminal #1 of 302_1", and "radio power transmission signal 1851B_4 for terminal #4 of 302_4" may be present within a range of time B2. It is also possible to perform frequency division in order to support a plurality of terminals.

Terminal #2 of 302_2 receives radio power transmission signal 1851B_2 for terminal #2 of 302_2 and performs charging.

Terminal #5 of 302_5 receives radio power transmission signal 1851B_5 for terminal #5 of 302_5 and performs charging.

Terminal #1 of 302_1 receives radio power transmission signal 1851B_1 for terminal #1 of 302_1 and performs charging.

Terminal #4 of 302_4 receives radio power transmission signal 1851B_4 for terminal #4 of 302_4 and performs charging.

The operations of base stations (including beamforming) and the operations of terminals (including beamforming) are as described in Embodiment 1.

As described above, efficiently performing, by base station #1 of 301_1, "communication", "radio power transmission", and "communication and radio power transmission" to the plurality of terminals as in FIG. 18B1 makes it possible to obtain an effect that the frequency use efficiency is improved.

The frame configuration of signals transmitted by base station #1 of 301_1 and base station #2 of 301_2 is not limited to the configuration of FIG. 18B1, and for example, a plurality of communication modulation signals may be present on the time axis, and a plurality of radio power transmission signals may be present on the time axis.

Further, a communication modulation signal for a certain terminal may be discretely disposed in plurality on the frequency axis, and a radio power transmission signal for a certain terminal may be discretely disposed in plurality on the frequency axis. Further, a communication modulation signal for a certain terminal may be discretely disposed in plurality on the time axis, and a radio power transmission signal for a certain terminal may be discretely disposed in plurality on the time axis.

Base station #1 of 301_1 and base station #2 of 301_2 may perform transmission beamforming when transmitting a communication module signal and a radio power transmission signal.

For example, base station #2 of 301_2 may configure a pre-coding matrix (pre-coding weight, codebook) for each of "communication modulation signal 1801B_2 for terminal #2 of 302_2", "communication modulation signal 1801B_5 for terminal #5 of 302_5", "communication modulation signal 1801B_3 for terminal #3 of 302_3", and "communication modulation signal 1801B_6 for terminal #6 of 302_6", and perform pre-coding processing to realize transmission beamforming.

Further, base station #1 of 301_1 may configure a pre-coding matrix (pre-coding weight, codebook) for each of "radio power transmission signal 1851B_2 for terminal #2 of 302_2", "radio power transmission signal 1851B_5 for terminal #5 of 302_5", "radio power transmission signal 1851B_1 for terminal #1 of 302_1", and "radio power transmission signal 1851B_4 for terminal #4 of 302_4", and perform pre-coding processing to realize transmission beamforming.

In FIG. 18B1, "communication modulation signal 1801B_2 for terminal #2 of 302_2" and "radio power transmission signal 1851B_2 for terminal #2 of 302_2" are present, and "communication modulation signal 1801B_5 for terminal #5 of 302_5" and "radio power transmission signal 1851B_5 for terminal #5 of 302_5" are present.

As a result, terminal #2 of 302_2 and terminal #5 of 302_5 can obtain an effect that the decrease in the residual amount of the battery can be reduced by introducing reception beamforming at the time of communication and radio power transmission.

As in FIG. 18B1, there may be a time when "communication modulation signal 1801B_5 for terminal #5 of 302_5" and "radio power transmission signal 1851B_5 for terminal #5 of 302_5" are present, or "communication modulation signal 1801B_2 for terminal #2 of 302_2" and "radio power transmission signal 1851B_2 for terminal #2 of 302_2" may be present at different times.

FIG. 18B2 illustrates an exemplary configuration in a time-frequency domain of modulation signals and signals transmitted by base station #1 of 301_1 and base station #2 of 301_2 of FIG. 17B in a case where "base station #1 of 301_1 performs radio power transmission and base station #2 of 301_2 of FIG. 17B performs the communication." In FIG. 18B2, the horizontal axis represents time, and the vertical axis represents frequency.

As illustrated in FIG. 18B2, in the time-frequency domain, a region of communication modulation signals and a region of radio power transmission signals are present. The communication modulation signals are present in frequency BB1, and the radio power transmission signals are present in frequency BB2. A communication modulation signal may be present within a range of frequency BB1, and a radio power transmission signal may be present within a range of frequency BB2.

In FIG. 18B2, as in FIG. 17B, base station #2 of 301_2 transmits "communication modulation signal 1801B_2 for terminal #2 of 302_2", "communication modulation signal 1801B_5 for terminal #5 of 302_5", "communication modulation signal 1801B_3 for terminal #3 of 302_3", and "communication modulation signal 1801B_6 for terminal #6 of 302_6" in frequency BB1 and time B1. It is also possible to perform frequency division in order to support a plurality of terminals.

Terminal #2 of 302_2 receives communication modulation signal 1801B_2 for terminal #2 of 302_2 and obtains data. Terminal #2 of 302_2 may transmit a modulation signal for communication to base station #2 of 301_2.

Terminal #5 of 302_5 receives communication modulation signal 1801B_5 for terminal #5 of 302_5 and obtains data. Terminal #5 of 302_5 may transmit a modulation signal for communication to base station #2 of 301_2.

Terminal #3 of 302_3 receives communication modulation signal 1801B_3 for terminal #3 of 302_3 and obtains data. Terminal #3 of 302_3 may transmit a modulation signal for communication to base station #2 of 301_2.

Terminal #6 of 302_6 receives communication modulation signal 1801B_6 for terminal #6 of 302_6 and obtains data. Terminal #6 of 302_6 may transmit a modulation signal for communication to base station #2 of 301_2.

"Communication modulation signal 1801B_2 for terminal #2 of 302_2", "communication modulation signal 1801B_5 for terminal #5 of 302_5", "communication modulation signal 1801B_3 for terminal #3 of 302_3", and "communication modulation signal 1801B_6 for terminal #6 of 302_6" may be present within a range of time B1.

Base station #1 of 301_1 transmits "radio power transmission signal 1851B_5 for terminal #5 of 302_5" in time B2c within a range of frequency BB2 and time B2, "radio power transmission signal 1851B_1 for terminal #1 of 302_1" in time B2b within a range of frequency BB2 and time B2, "radio power transmission signal 1851B_4 for terminal #4 of 302_4" in time B2a within a range of frequency BB2 and time B2, and "radio power transmission signal 1851B_2 for terminal #2 of 302_2" in time B2d within a range of frequency BB2 and time B2.

"Radio power transmission signal 1851B_2 for terminal #2 of302_2", "radio power transmission signal 1851B_5 for terminal #5 of 302_5", "radio power transmission signal 1851B_1 for terminal #1 of 302_1", and "radio power transmission signal 1851B_4 for terminal #4 of 302_4" may be present within a range of time B2. It is also possible to perform time division in order to support a plurality of terminals.

Terminal #2 of 302_2 receives radio power transmission signal 1851B_2 for terminal #2 of 302_2 and performs charging.

Terminal #5 of 302_5 receives radio power transmission signal 1851B_5 for terminal #5 of 302_5 and performs charging.

Terminal #1 of 302_1 receives radio power transmission signal 1851B_5 for terminal #1 of 302_1 and performs charging.

Terminal #4 of 302_4 receives radio power transmission signal 1851B_5 for terminal #4 of 302_4 and performs charging.

The operations of base stations (including beamforming) and the operations of terminals (including beamforming) are as described in Embodiment 1.

As described above, efficiently performing, by base station #1 of 301_1 and base station #2 of 301_2, "communication", "radio power transmission", and "communication and radio power transmission" to the plurality of terminals as in FIG. 18B2 makes it possible to obtain an effect that the frequency use efficiency is improved.

The frame configuration of signals transmitted by base station #1 of 301_1 and base station #2 of 301_2 is not limited to the configuration of FIG. 18B2, and for example, a plurality of communication modulation signals may be present on the time axis, and a plurality of radio power transmission signals may be present on the time axis.

Further, a communication modulation signal for a certain terminal may be discretely disposed in plurality on the frequency axis, and a radio power transmission signal for a certain terminal may be discretely disposed in plurality on the frequency axis. Further, a communication modulation signal for a certain terminal may be discretely disposed in plurality on the time axis, and a radio power transmission signal for a certain terminal may be discretely disposed in plurality on the time axis.

Base station #1 of 301_1 and base station #2 of 301_2 may perform transmission beamforming when transmitting a communication module signal and a radio power transmission signal.

For example, base station #2 of 301_2 may configure a pre-coding matrix (pre-coding weight, codebook) for each of "communication modulation signal 1801B_2 for terminal #2 of 302_2", "communication modulation signal 1801B_5 for terminal #5 of 302_5", "communication modulation signal 1801B_3 for terminal #3 of 302_3", and "communication modulation signal 1801B_6 for terminal #6 of 302_6", and perform pre-coding processing to realize transmission beamforming.

Further, base station #1 of 301_1 may configure a pre-coding matrix (pre-coding weight, codebook) for each of "radio power transmission signal 1851B_2 for terminal #2 of 302_2", "radio power transmission signal 1851B_5 for terminal #5 of 302_5", "radio power transmission signal 1851B_1 for terminal #1 of 302_1", and "radio power transmission signal 1851B_4 for terminal #4 of 302_4", and perform pre-coding processing to realize transmission beamforming.

In FIG. 18B2, since "radio power transmission signal 1851B_2 for terminal #2 of 302_2", "radio power transmission signal 1851B_5 for terminal #5 of 302_5", "radio power transmission signal 1851B_1 for terminal #1 of 302_1", and "radio power transmission signal 1851B_4 for terminal #4 of 302_4" are time-divided, a wide frequency assignment is made possible. Therefore, in each terminal, an effect that the charging efficiency is improved can be obtained. Further, in order to obtain high charging efficiency, the time of a radio power transmission signal assigned to each terminal may be increased. This point can be flexibly implemented by time division scheduling.

Further, "communication modulation signal 1801B_2 for terminal #2 of 302_2" and "radio power transmission signal 1851B_2 for terminal #2 of 302_2" are present for terminal #2 of 302_2, and "communication modulation signal 1801B_5 for terminal #5 of 302_5" and "radio power transmission signal 1851B_5 for terminal #5 of 302_5" are present for terminal #5 of 302_5.

As a result, terminal #2 of 302_2 and terminal #5 of 302_5 can obtain an effect that the decrease in the residual amount of the battery can be reduced by introducing reception beamforming at the time of communication and radio power transmission.

FIG. 18C illustrates an exemplary configuration in a time-frequency domain of modulation signals and signals transmitted by base station #1 of 301_1 and base station #2 of 301_2 of FIG. 17B in a case where "base station #1 of 301_1 performs radio power transmission and base station #2 of 301_2 of FIG. 17B performs communication." In FIG. 18C, the horizontal axis represents time, and the vertical axis represents frequency.

As illustrated in FIG. 18C, in the time-frequency domain, it is assumed that "time-frequency region of frequency CC1 and time C1" and "time-frequency region of frequency CC1 and time C2" both can be assigned to a communication modulation signal and a radio power transmission signal.

In FIG. 18C, as in FIG. 17B, base station #2 of 301_2 transmits "communication modulation signal 1801C_2 for terminal #2 of 302_2" and "communication modulation signal 1801C_6 for terminal #6 of 302_6" in a range of frequency CC1, and time C1. It is also possible to perform frequency division in order to support a plurality of terminals.

In FIG. 18C, base station #1 of 301_1 transmits "radio power transmission signal 1851C_5 for terminal #5 of 302_5" and "radio power transmission signal 1851C_1 for terminal #1 of 302_1" in a range of frequency CC1 and time C1. It is also possible to perform frequency division in order to support a plurality of terminals.

Terminal #2 of 302_2 receives communication modulation signal 1801C_2 for terminal #2 of 302_2 and obtains data. Terminal #2 of 302_2 may transmit a modulation signal for communication to base station #2 of 301_2.

Terminal #5 of 302_5 receives radio power transmission signal 1851C_5 for terminal #5 of 302_5 and performs charging.

Terminal #1 of 302_1 receives radio power transmission signal 1851C_1 for terminal #1 of 302_1 and performs charging.

Terminal #6 of 302_6 receives communication modulation signal 1801C_6 for terminal #6 of 302_6 and obtains data. Terminal #6 of 302_6 may transmit a modulation signal for communication to base station #2 of 301_2.

"Communication modulation signal 1801C_2 for terminal #2 of 302_2", "radio power transmission signal 1851C_5 for terminal #5 of 302_5", "radio power transmission signal 1851C_1 for terminal #1 of 302_1", and "communication modulation signal 1801C_6 for terminal #6 of 302_6" may be present within a range of time C1.

Base station #2 of 301_2 transmits "communication modulation signal 1801C_5 for terminal #5 of 302_5" and "communication modulation signal 1801C_3 for terminal #3 of 302_3" in a range of frequency CC1, and time C2. It is also possible to perform frequency division in order to support a plurality of terminals.

Base station #1 of 301_1 transmits "radio power transmission signal 1851C_2 for terminal #2 of 302_2" and "radio power transmission signal 1851C_4 for terminal #4 of 302_4" in a range of frequency CC1, and time C2. It is also possible to perform frequency division in order to support a plurality of terminals.

Terminal #2 of 302_2 receives radio power transmission signal 1851C_2 for terminal #2 of 302_2 and performs charging.

Terminal #5 of 302_5 receives communication modulation signal 1801C_5 for terminal #5 of 302_5 and obtains data. Terminal #5 of 302_5 may transmit a modulation signal for communication to base station #2 of 301_2.

Terminal #3 of 302_3 receives communication modulation signal 1801C_3 for terminal #3 of 302_3 and obtains data. Terminal #3 of 302_3 may transmit a modulation signal for communication to base station #2 of 301_2.

Terminal #4 of 302_4 receives radio power transmission signal 1851C_4 for terminal #4 of 302_4 and performs charging.

The operations of base stations (including beamforming) and the operation of terminals (including beamforming) are as described in Embodiment 1.

As described above, efficiently performing, by base station #1 of 301_1 and base station #2 of 301_2, "communication", "radio power transmission", and "communication and radio power transmission" to the plurality of terminals as in FIG. 18C makes it possible to obtain an effect that the frequency use efficiency is improved.

The frame configuration of signals transmitted by base station #1 of 301_1 and base station #2 of 301_2 is not limited to the configuration of FIG. 18C, and for example, a plurality of "communication modulation signals, radio power transmission signal" may be present on the time axis. Further, a plurality of "communication modulation signals, radio power transmission signals" may be present on the frequency axis.

Further, a communication modulation signal for a certain terminal may be discretely disposed in plurality on the frequency axis, and a radio power transmission signal for a certain terminal may be discretely disposed in plurality on the frequency axis. Further, a communication modulation signal for a certain terminal may be discretely disposed in plurality on the time axis, and a radio power transmission signal for a certain terminal may be discretely disposed in plurality on the time axis.

Base station #1 of 301_1 and base station #2 of 301_2 may perform transmission beamforming when transmitting a communication modulation signal and a radio power transmission signal.

For example, base station #2 of 301_2 may configure a pre-coding matrix (pre-coding weight, codebook) for each of "communication modulation signal 1801C_2 for terminal #2 of 302_2", "communication modulation signal 1801C_5 for terminal #5 of 302_5", "communication modulation signal 1801C_3 for terminal #3 of 302_3", and "communication modulation signal 1801C_6 for terminal #6 of 302_6", and perform pre-coding processing to realize transmission beamforming.

Further, base station #1 of 301_1 may configure a pre-coding matrix (pre-coding weight, codebook) for each of "radio power transmission signal 1851C_2 for terminal #2 of 302_2", "radio power transmission signal 1851C_5 for terminal #5 of 302_5", "radio power transmission signal 1851C_1 for terminal #1 of 302_1", and "radio power transmission signal 1851C_4 for terminal #4 of 302_4", and perform pre-coding processing to realize transmission beamforming.

In FIG. 18C, "communication modulation signal 1801C_2 for terminal #2 of 302_2" and "radio power transmission signal 1851C_2 for terminal #2 of 302_2" are present, and "communication modulation signal 1801C_5 for terminal #5 of 302_5" and "radio power transmission signal 1851C_5 for terminal #5 of 302_5" are present.

As a result, terminal #2 of 302_2 and terminal #5 of 302_5 can obtain an effect that the decrease in the residual amount of the battery can be reduced by introducing reception beamforming at the time of communication and radio power transmission.

As in FIG. 18C, the present disclosure may have a feature that "frequency used by communication modulation signal 1801C_2 for terminal #2 of 302_2" and "frequency used by radio power transmission signal 1851C_2 for terminal #2 of 302_2" are the same, and "frequency used by communication modulation signal 1801C_5 for terminal #5 of 302_5" and "frequency used by radio power transmission signal 1851C_5 for terminal #5 of 302_5" are partially the same.

Next, a method for transmitting "communication signal, radio power transmission signal" will be described.

In FIGS. 5A, 5B, and 5C, for example, the following conditions are applied as a communication modulation signal transmitted by a base station.

· In a multipath environment of radio waves, in order to improve communication quality, a multi-carrier system using "Orthogonal Frequency Division Multiplexing (OFDM)" as an example and a single-carrier system using "Discrete Fourier Transform (DFT)-spread OFDM" (DFT-S OFDM) as an example are used.

• When communicating with a plurality of terminals, in order to improve frequency use efficiency, for example, Orthogonal Frequency Multiple Access (OFDMA), Time Division Multiplexing (TDM), or Carrier Sense Multiple Access (CSMA) is used.

Further, in FIGS. 5A, 5B, and 5C, for example, the following conditions are applied as a radio power transmission signal transmitted by a base station.

· In order to improve charging efficiency, a transmission method having a small Peak-to-Average Power Ratio (PAPR) is used.
· Further, a transmission method having good frequency use efficiency is used, if possible.
· In order to perform highly efficient charging, a transmission method that does not require a guard interval is used, if possible.

From the above conditions, preferable examples as a radio power transmission signal include Frequency Modulation (FM), Phase Modulation (PM), Frequency Shift Keying (FSK), Minimum Shift Keying (MSK), Gaussian Minimum Shift Keying (GMSK), and Phase Shift Keying (PSK).

Further, hereinafter, a method for configuring modulation signals/signals transmitted by base stations in FIGS. 18A1, 18A2, 18B1, 18B2, and 18C will be described.

In FIG. 18A1, in the time-frequency domain, a region of communication modulation signals and a region of radio power transmission signals are present. The communication modulation signals are present in time A1, and the radio power transmission signals are present in time A2. Although not illustrated in the drawing, a communication modulation signal may be present within a range of time A1, and a radio power transmission signal may be present within a range of time A2.

Further, in the example of FIG. 18A1, the communication modulation signals and the radio power transmission signals use frequency AA1.

In FIG. 18A1, as in FIG. 17A, base station #1 of 301_1 transmits "communication modulation signal 1801A_2 for terminal #2 of 302_2", "communication modulation signal 1801A_5 for terminal #5 of 302_5", "communication modulation signal 1801A_3 for terminal #3 of 302_3", and "communication modulation signal 1801A_6 for terminal #6 of 302_6" in time A1. It is also possible to perform frequency division in order to support a plurality of terminals.

Terminal #2 of 302_2 receives communication modulation signal 1801A_2 for terminal #2 of 302_2 and obtains data. Terminal #2 of 302_2 may transmit a modulation signal for communication to base station #1 of 301_1.

Terminal #5 of 302_5 receives communication modulation signal 1801A_5 for terminal #5 of 302_5 and obtains data. Terminal #5 of 302_5 may transmit a modulation signal for communication to base station #1 of 301_1.

Terminal #3 of 302_3 receives communication modulation signal 1801A_3 for terminal #3 of 302_3 and obtains data. Terminal #3 of 302_3 may transmit a modulation signal for communication to base station #1 of 301_1.

Terminal #6 of 302_6 receives communication modulation signal 1801A_6 for terminal #6 of 302_6 and obtains data. Terminal #6 of 302_6 may transmit a modulation signal for communication to base station #1 of 301_1.

Further, base station #1 of 301_1 transmits "radio power transmission signal 1851A_2 for terminal #2 of 302_2", "radio power transmission signal 1851A_5 for terminal #5 of 302_5", "radio power transmission signal 1851A_1 for terminal #1 of 302_1", and "radio power transmission signal 1851A_4 for terminal #4 of 302_4" in time A2. It is also possible to perform frequency division in order to support a plurality of terminals.

Terminal #2 of 302_2 receives radio power transmission signal 1851A_2 for terminal #2 of 302_2 and performs charging.

Terminal #5 of 302_5 receives radio power transmission signal 1851A_5 for terminal #5 of 302_5 and performs charging.

Terminal #1 of 302_1 receives radio power transmission signal 1851A_5 for terminal #1 of 302_1 and performs charging.

Terminal #4 of 302_4 receives radio power transmission signal 1851A_5 for terminal #4 of 302_4 and performs charging.

In this case, in a case where the communication modulation signals present in frequency AA1 and time A1 use the OFDMA method, the above-described advantages can be obtained.

Further, the communication modulation signals present in frequency AA1 and time A1 can obtain the above-described advantages by arranging signals of a single-carrier system using DFT-S OFDM as an example in a plurality of frequencies to form a multi-carrier system.

In a case where the radio power transmission signal for each terminal present in frequency AA1 and time A2 uses a modulation method having a small PAPR, such as "FM, PM, FSK, MSK, GMSK, and PSK", the above-described advantages can be obtained. The modulation method may be switched depending on a situation, such as a frequency usage status and the number of terminals to which the base station transmits the radio power transmission signal.

Further, in a case where the radio power transmission signal for each terminal present in frequency AA1 and time A2 uses a transmission method that does not require a guard interval, the above-described advantages can be obtained.

Further, in a case where the radio power transmission signal for each terminal present in frequency AA1 and time A2 uses the single-carrier system, the PAPR may be reduced.

In a case where GMSK is selected as the modulation method for the radio power transmission signals, GMSK may be selected as the modulation method for the communication modulation signals from the viewpoint of simplifying the configuration of the base station. Therefore, in the communication modulation signals, OFDM may be used or GMSK may be used.

In FIG. 18A2, in the time-frequency domain, a region of communication modulation signals and a region of radio power transmission signals are present. The communication modulation signals are present in time A1, and the radio power transmission signals are present in time A2. Although not illustrated in the drawing, a communication modulation signal may be present within a range of time A1, and a radio power transmission signal may be present within a range of time A2.

Further, in the example of FIG. 18A2, the communication modulation signals and the radio power transmission signals use frequency AA1.

In FIG. 18A2, as in FIG. 17A, base station #1 of 301_1 transmits "communication modulation signal 1801A_2 for terminal #2 of 302_2", "communication modulation signal 1801A_5 for terminal #5 of 302_5", "communication modulation signal 1801A_3 for terminal #3 of 302_3", and "communication modulation signal 1801A_6 for terminal #6 of 302_6" in time A1. It is also possible to perform frequency division in order to support a plurality of terminals.

Terminal #2 of 302_2 receives communication modulation signal 1801A_2 for terminal #2 of 302_2 and obtains data. Terminal #2 of 302_2 may transmit a modulation signal for communication to base station #1 of 301_1.

Terminal #5 of 302_5 receives communication modulation signal 1801A_5 for terminal #5 of 302_5 and obtains data. Terminal #5 of 302_5 may transmit a modulation signal for communication to base station #1 of 301_1.

Terminal #3 of 302_3 receives communication modulation signal 1801A_3 for terminal #3 of 302_3 and obtains data. Terminal #3 of 302_3 may transmit a modulation signal for communication to base station #1 of 301_1.

Terminal #6 of 302_6 receives communication modulation signal 1801A_6 for terminal #6 of 302_6 and obtains data. Terminal #6 of 302_6 may transmit a modulation signal for communication to base station #1 of 301_1.

Further, base station #1 of 301_1 transmits "radio power transmission signal 1851A_2 for terminal #2 of 302_2" in time A2d within a range of time A2, "radio power transmission signal 1851A_5 for terminal #5 of 302_5" in time A2c within a range of time A2, "radio power transmission signal 1851A_1 for terminal #1 of 302_1" in time A2b within a range of time A2, and "radio power transmission signal 1851A_4 for terminal #4 of 302_4" in time A2a within a range of time A2. It is also possible to perform time division in order to support a plurality of terminals.

Terminal #2 of 302_2 receives radio power transmission signal 1851A_2 for terminal #2 of 302_2 and performs charging.

Terminal #5 of 302_5 receives radio power transmission signal 1851A_5 for terminal #5 of 302_5 and performs charging.

Terminal #1 of 302_1 receives radio power transmission signal 1851A_5 for terminal #1 of 302_1 and performs charging.

Terminal #4 of 302_4 receives radio power transmission signal 1851A_5 for terminal #4 of 302_4 and performs charging.

In this case, in a case where the communication modulation signals present in frequency AA1 and time A1 uses the OFDMA method, the above-described advantages can be obtained.

Further, the communication modulation signals present in frequency AA1 and time A1 can obtain the above-described advantages by arranging signals of a single-carrier system using DFT-S OFDM as an example in a plurality of frequencies to form a multi-carrier system.

In a case where the radio power transmission signal for each terminal present in frequency AA1 and time A2 uses a modulation method having a small PAPR, such as "FM, PM, FSK, MSK, GMSK, and PSK", the above-described advantages can be obtained. The modulation method may be switched depending on a situation, such as a frequency usage status and the number of terminals to which the base station transmits the radio power transmission signal.

Further, in a case where the radio power transmission signal for each terminal present in frequency AA1 and time A2 uses a transmission method that does not require a guard interval, the above-described advantages can be obtained.

Further, in a case where the radio power transmission signal for each terminal present in frequency AA1 and time A2 uses the single-carrier system, the PAPR may be reduced.

A wide frequency assignment is made possible for the radio power transmission signal for each terminal.

Therefore, in each terminal, an effect that the charging efficiency is improved can be obtained.

In a case where GMSK is selected as the modulation method for the radio power transmission signals, GMSK may be selected as the modulation method for the communication modulation signals from the viewpoint of simplifying the configuration of the base station. Therefore, in the communication modulation signals, OFDM may be used or GMSK may be used.

InFIG. 18B1, in the time-frequency domain, a region of communication modulation signals and a region of radio power transmission signals are present. The communication modulation signals are present in frequency BB1, and the radio power transmission signals are present in frequency BB2. A communication modulation signal may be present within a range of frequency BB1, and a radio power transmission signal may be present within a range of frequency BB2.

In FIG. 18B1, as in FIG. 17A, base station #1 of 301_1 transmits "communication modulation signal 1801B_2 for terminal #2 of 302_2", "communication modulation signal 1801B_5 for terminal #5 of 302_5", "communication modulation signal 1801B_3 for terminal #3 of 302_3", and "communication modulation signal 1801B_6 for terminal #6 of 302_6" in frequency BB1 and time B1. It is also possible to perform frequency division in order to support a plurality of terminals.

Terminal #2 of 302_2 receives communication modulation signal 1801B_2 for terminal #2 of 302_2 and obtains data. Terminal #2 of 302_2 may transmit a modulation signal for communication to base station #1 of 301_1.

Terminal #5 of 302_5 receives communication modulation signal 1801B_5 for terminal #5 of 302_5 and obtains data. Terminal #5 of 302_5 may transmit a modulation signal for communication to base station #1 of 301_1.

Terminal #3 of 302_3 receives communication modulation signal 1801B_3 for terminal #3 of 302_3 and obtains data. Terminal #3 of 302_3 may transmit a modulation signal for communication to base station #1 of 301_1.

Terminal #6 of 302_6 receives communication modulation signal 1801B_6 for terminal #6 of 302_6 and obtains data. Terminal #6 of 302_6 may transmit a modulation signal for communication to base station #1 of 301_1.

"Communication modulation signal 1801B_2 for terminal #2 of 302_2", "communication modulation signal 1801B_5 for terminal #5 of 302_5", "communication modulation signal 1801B_3 for terminal #3 of 302_3", and "communication modulation signal 1801B_6 for terminal #6 of 302_6" may be present within a range of time B1.

Base station #1 of 301_1 transmits "radio power transmission signal 1851B_5 for terminal #5 of 302_5", "radio power transmission signal 1851B_1 for terminal #1 of 302_1", and "radio power transmission signal 1851B_4 for terminal #4 of 302_4" in frequency BB2 and time B2.

Further, base station #1 of 301_1 transmits "radio power transmission signal 1851B_2 for terminal #2 of 302_2" in frequency BB2 and within a range of time B2.

"Radio power transmission signal 1851B_2 for terminal #2 of302_2", "radio power transmission signal 1851B_5 for terminal #5 of 302_5", "radio power transmission signal 1851B_1 for terminal #1 of 302_1", and "radio power transmission signal 1851B_4 for terminal #4 of 302_4" may be present within a range of time B2. It is also possible to perform frequency division in order to support a plurality of terminals.

Terminal #2 of 302_2 receives radio power transmission signal 1851B_2 for terminal #2 of 302_2 and performs charging.

Terminal #5 of 302_5 receives radio power transmission signal 1851B_5 for terminal #5 of 302_5 and performs charging.

Terminal #1 of 302_1 receives radio power transmission signal 1851B_1 for terminal #1 of 302_1 and performs charging.

Terminal #4 of 302_4 receives radio power transmission signal 1851B_4 for terminal #4 of 302_4 and performs charging.

In this case, in a case where the communication modulation signals present in frequency BB1 and time B1 uses the OFDMA method, the above-described advantages can be obtained.

Further, the communication modulation signals present in frequency BB1 and time B1 can obtain the above-described advantages by arranging signals of a single-carrier system using DFT-S OFDM as an example in a plurality of frequencies to form a multi-carrier system.

In a case where the radio power transmission signal for each terminal present in frequency BB2 and time B2 uses a modulation method having a small PAPR, such as "FM, PM, FSK, MSK, GMSK, and PSK", the above-described advantages can be obtained.

Further, in a case where the radio power transmission signal for each terminal present in frequency BB2 and time B2 uses a transmission method that does not require a guard interval, the above-described advantages can be obtained.

Further, in a case where the radio power transmission signal for each terminal present in frequency BB2 and time B2 uses the single-carrier system, the PAPR may be reduced.

In a case where GMSK is selected as the modulation method for the radio power transmission signals, GMSK may be selected as the modulation method for the communication modulation signals from the viewpoint of simplifying the configuration of the base station. Therefore, in the communication modulation signals, OFDM may be used or GMSK may be used.

In FIG. 18B2, as in FIG. 17A, base station #1 of 301_1 transmits "communication modulation signal 1801B_2 for terminal #2 of 302_2", "communication modulation signal 1801B_5 for terminal #5 of 302_5", "communication modulation signal 1801B_3 for terminal #3 of 302_3", and "communication modulation signal 1801B_6 for terminal #6 of 302_6" in frequency BB1 and time B1. It is also possible to perform frequency division in order to support a plurality of terminals.

Terminal #2 of 302_2 receives communication modulation signal 1801B_2 for terminal #2 of 302_2 and obtains data. Terminal #2 of 302_2 may transmit a modulation signal for communication to base station #1 of 301_1.

Terminal #5 of 302_5 receives communication modulation signal 1801B_5 for terminal #5 of 302_5 and obtains data. Terminal #5 of 302_5 may transmit a modulation signal for communication to base station #1 of 301_1.

Terminal #3 of 302_3 receives communication modulation signal 1801B_3 for terminal #3 of 302_3 and obtains data. Terminal #3 of 302_3 may transmit a modulation signal for communication to base station #1 of 301_1.

Terminal #6 of 302_6 receives communication modulation signal 1801B_6 for terminal #6 of 302_6 and obtains data. Terminal #6 of 302_6 may transmit a modulation signal for communication to base station #1 of 301_1.

"Communication modulation signal 1801B_2 for terminal #2 of 302_2", "communication modulation signal 1801B_5 for terminal #5 of 302_5", "communication modulation signal 1801B_3 for terminal #3 of 302_3", and "communication modulation signal 1801B_6 for terminal #6 of 302_6" may be present within a range of time B1.

Base station #1 of 301_1 transmits "radio power transmission signal 1851B_5 for terminal #5 of 302_5" in time B2c within a range of frequency BB2 and time B2, "radio power transmission signal 1851B_1 for terminal #1 of 302_1" in time B2b within a range of frequency BB2 and time B2, "radio power transmission signal 1851B_4 for terminal #4 of 302_4" in time B2a within a range of frequency BB2 and time B2, and "radio power transmission signal 1851B_2 for terminal #2 of 302_2" in time B2d within a range of frequency BB2 and time B2.

"Radio power transmission signal 1851B_2 for terminal #2 of 302_2", "radio power transmission signal 1851B_5 for terminal #5 of 302_5", "radio power transmission signal 1851B_1 for terminal #1 of 302_1", and "radio power transmission signal 1851B_4 for terminal #4 of 302_4" may be present within a range of time B2. It is also possible to perform time division in order to support a plurality of terminals.

Terminal #2 of 302_2 receives radio power transmission signal 1851B_2 for terminal #2 of 302_2 and performs charging.

Terminal #5 of 302_5 receives radio power transmission signal 1851B_5 for terminal #5 of 302_5 and performs charging.

Terminal #1 of 302_1 receives radio power transmission signal 1851B_5 for terminal #1 of 302_1 and performs charging.

Terminal #4 of 302_4 receives radio power transmission signal 1851B_5 for terminal #4 of 302_4 and performs charging.

In this case, in a case where the communication modulation signals present in frequency BB1 and time B1 uses the OFDMA method, the above-described advantages can be obtained.

Further, the communication modulation signals present in frequency BB1 and time B1 can obtain the above-described advantages by arranging signals of a single-carrier system using DFT-S OFDM as an example in a plurality of frequencies to form a multi-carrier system.

In a case where the radio power transmission signal for each terminal present in frequency BB2 and time B2 uses a modulation method having a small PAPR, such as "FM, PM, FSK, MSK, GMSK, and PSK", the above-described advantages can be obtained. The modulation method may be switched depending on a situation, such as a frequency usage status and the number of terminals to which the base station transmits the radio power transmission signal.

Further, in a case where the radio power transmission signal for each terminal present in frequency BB2 and time B2 uses a transmission method that does not require a guard interval, the above-described advantages can be obtained.

Further, in a case where the radio power transmission signal for each terminal present in frequency BB2 and time B2 uses the single-carrier system, the PAPR may be reduced.

A wide frequency assignment is made possible for the radio power transmission signal for each terminal. Therefore, in each terminal, an effect that the charging efficiency is improved can be obtained.

In a case where GMSK is selected as the modulation method for the radio power transmission signals, GMSK may be selected as the modulation method for the communication modulation signals from the viewpoint of simplifying the configuration of the base station. Therefore, in the communication modulation signals, OFDM may be used or GMSK may be used.

In FIG. 18C, in the time-frequency domain, it is assumed that the "time-frequency region of frequency CC1 and time C1" and the "time-frequency region of frequency CC1 and time C2" can be assigned to the communication modulation signals and the radio power transmission signals.

In FIG. 18C, as in FIG. 17A, base station #1 of 301_1 transmits "communication modulation signal 1801C_2 for terminal #2 of 302_2", "radio power transmission signal 1851C_5 for terminal #5 of 302_5", "radio power transmission signal 1851C_1 for terminal #1 of 302_1", and "communication modulation signal 1801C_6 for terminal #6 of 302_6" in a range of frequency CC1, and time C1. It is also possible to perform frequency division in order to support a plurality of terminals.

Terminal #2 of 302_2 receives communication modulation signal 1801C_2 for terminal #2 of 302_2 and obtains data. Terminal #2 of 302_2 may transmit a modulation signal for communication to base station #1 of 301_1.

Terminal #5 of 302_5 receives radio power transmission signal 1851C_5 for terminal #5 of 302_5 and performs charging.

Terminal #1 of 302_1 receives radio power transmission signal 1851C_1 for terminal #1 of 302_1 and performs charging.

Terminal #6 of 302_6 receives communication modulation signal 1801C_6 for terminal #6 of 302_6 and obtains data. Terminal #6 of 302_6 may transmit a modulation signal for communication to base station #1 of 301_1.

"Communication modulation signal 1801C_2 for terminal #2 of 302_2", "radio power transmission signal 1851C_5 for terminal #5 of 302_5", "radio power transmission signal 1851C_1 for terminal #1 of 302_1", and "communication modulation signal 1801C_6 for terminal #6 of 302_6" may be present within a range of time C1.

Base station #1 of 301_1 transmits "radio power transmission signal 1851C_2 for terminal #2 of 302_2", "communication modulation signal 1801C_5 for terminal #5 of 302_5", "communication modulation signal 1801C_3 for terminal #3 of 302_3", and "radio power transmission signal 1851C_4 for terminal #4 of 302_4" in a range of frequency CC1, and time C2. It is also possible to perform frequency division in order to support a plurality of terminals.

Terminal #2 of 302_2 receives radio power transmission signal 1851C_2 for terminal #2 of 302_2 and performs charging.

Terminal #5 of 302_5 receives communication modulation signal 1801C_5 for terminal #5 of 302_5 and obtains data. Terminal #5 of 302_5 may transmit a modulation signal for communication to base station #1 of 301_1.

Terminal #3 of 302_3 receives communication modulation signal 1801C_3 for terminal #3 of 302_3 and obtains data. Terminal #3 of 302_3 may transmit a modulation signal for communication to base station #1 of 301_1.

Terminal #4 of 302_4 receives radio power transmission signal 1851C_4 for terminal #4 of 302_4 and performs charging.

In this case, in a case where communication modulation signals present in "frequency CC1 and time C1" or "frequency CC1 and time C2" use the OFDMA method, the above-described advantages can be obtained.

Further, the communication modulation signals present in "frequency CC1 and time C1" or "frequency CC1 and time C2" can obtain the above-described advantages by arranging signals of a single-carrier system using DFT-S OFDM as an example in a plurality of frequencies to form a multi-carrier system.

In a case where the radio power transmission signal for each terminal present in "frequency CC1 and time C1" or "frequency CC1 and time C2" uses a modulation method having a small PAPR, such as "FM, PM, FSK, MSK, GMSK, and PSK", the above-described advantages can be obtained.

Further, in a case where the radio power transmission signal for each terminal present in "frequency CC1 and time C1" or "frequency CC1 and time C2" uses the single-carrier system, the PAPR may be reduced. The modulation method may be switched depending on a situation, such as a frequency usage status and the number of terminals to which the base station transmits the radio power transmission signal.

In a case where the radio power transmission signal for each terminal present in "frequency CC1 and time C1" or "frequency CC1 and time C2" coexists with a communication modulation signal, a guard interval may be inserted at the same timing as the communication modulation signal. However, the radio power transmission signal for each terminal present in "frequency CC1 and time C1" or "frequency CC1 and time C2" can also use a transmission method that does not require a guard interval.

In a case where GMSK is selected as the modulation method for the radio power transmission signals, GMSK may be selected as the modulation method for the communication modulation signals from the viewpoint of simplifying the configuration of the base station. Therefore, in the communication modulation signals, OFDM may be used or GMSK may be used.

Adopting the manner described above, in performing communication and radio power transmission, the frequency use efficiency is improved, and an effect that a high charging efficiency can be obtained can be obtained.

Although FIGS. 18A1, 18A2, 18B1, 18B2, and 18C have been described as examples of the "configuration of a communication modulation signal and a radio power transmission signal" transmitted by a base station, the "configuration of a communication modulation signal and a radio power transmission signal" is not limited to these examples, and a communication modulation signal and/or a radio power transmission signal may be separately disposed on the time-frequency domain. Further, a communication modulation signal and a radio power transmission signal may be composed of one or more signals or two or more signals.

(Supplement 1)

The embodiments described in the present specification may be implemented while combined with each other or combined with other contents.

Further, the embodiments and other contents are examples. For example, even though the "modulation scheme, error correction coding scheme (error correction code, code length, coding rate, and the like for use), control information, and the like" are illustrated as the examples, it is possible to implement the embodiments with a similar configuration even when a "modulation scheme, error correction coding scheme (error correction code, code length, coding rate, and the like for use), control information, and the like" different from those in the examples are applied.

The embodiments and other contents described in the present specification can be implemented even in a case where a modulation method other than the modulation method described in the present specification is used. For example, amplitude phase shift keying (APSK) (e.g., 16APSK, 64APSK, 128APSK, 256APSK, 1024APSK, 4096APSK, and the like), pulse amplitude modulation (PAM) (e.g., 4PAM, 8PAM, 16PAM, 64PAM, 128PAM, 256PAM, 1024PAM, 4096PAM, and the like), phase shift keying (PSK) (e.g., BPSK, QPSK, 8PSK, 16PSK, 64PSK, 128PSK, 256PSK, 1024PSK, 4096PSK, and the like), quadrature amplitude modulation (QAM) (e.g., 4QAM, 8QAM, 16QAM, 64QAM, 128QAM, 256QAM, 1024QAM, 4096QAM, and the like), frequency shift keying (FSK), Gaussian minimum shift keying (GMSK), frequency modulation (FM), phase modulation (PM), or the like may be applied, and in each modulation method, uniform mapping or non-uniform mapping may be used. Further, the number of signal points in the I (in-phase)-Q (quadrature (phase)) is not limited to the above example and may be an integer of 3 or more. These modulation methods may be used for the radio power transmission signal.

Further, a method for disposing 2, 4, 8, 16, 64, 128, 256, 1024, and the like signal points (however, the number of signal points is not limited to these examples) on the I-Q plane (modulation method having 2, 4, 8, 16, 64, 128, 256, 1024, and the like signal points) is not limited to the signal point disposition method for the modulation method illustrated in the present specification. Therefore, a function of outputting an in-phase component and a quadrature component based on a plurality of bits is a function of the mapping section, and then, matrix operation (pre-coding or the like) for performing MIMO transmission and phase change on the baseband signal are one of the effective functions of the present disclosure.

In the present specification, when "∀" and "∃" are present, "V" represents a universal quantifier, and "∃" represents an existential quantifier.

In the present specification, when a complex plane is present, for example, a unit of phase such as an argument is "radian".

The use of the complex plane allows representation of complex numbers in polar form as a representation of the complex numbers using polar coordinates. Letting a point (a, b) on the complex plane correspond to a complex number z = a + jb (where both of "a" and "b" are real numbers and "j" is an imaginary unit), when this point is expressed as [r, θ] with the polar coordinates, a = r × cosθ and b = r × sinθ, and the following Equation hold true: [1]

$$r = \sqrt{a^2 + b^2} \qquad \ldots \text{(Equation 1).}$$

The character "r" is the absolute value of z (r = |z|) and θ is the argument. Then, z = a + jb is expressed as r × e^{jθ}.

In the present specification, a configuration in which a reception apparatus of a "terminal, a base station, a radio power transmission apparatus, a charging apparatus, and the like" and an antenna are separate may be adopted. For example, the reception apparatus includes an interface for inputting, through a cable, a signal received by the antenna or a signal received by the antenna and subjected to frequency conversion, and the reception apparatus performs subsequent processing. Further, the data and information obtained by the reception apparatus are then converted into a video and sound, and displayed on a display (monitor), or outputted from a speaker in the case of sound. Further, the data and information obtained by the reception apparatus may be subjected to signal processing relevant to the video and sound (such signal processing does not have to be performed), and outputted from an RCA terminal (a video terminal and a sound terminal), universal serial bus (USB), high-definition multimedia interface (HDMI) (registered trademark), digital terminal, or the like provided in the reception apparatus.

In the present specification, it is considered that the transmission apparatus and/or the transmitter includes, for example, a broadcasting station, a base station, an access point (AP), a terminal, a mobile phone, a smartphone, a tablet, a notebook computer, a server, a computer, a personal computer, a television, a home appliance (household electric machine), an apparatus in a factory, a communication apparatus/broadcasting apparatus such as an Internet of Things (IoT) apparatus, a g Node B (gNB), an e Node B (eNB), a relay, a node, a car (e.g., an electric vehicle), a bicycle (e.g., an electric bicycle, an electrically assisted bicycle), a motorcycle (e.g., an electric motorcycle), a ship, a satellite, an aircraft, a drone, an apparatus capable of moving, a robot, or a TRP (Tx (Transmission) / Rx (Reception) point) (TX transmitter / RX (Receiver) point).

In the present specification, it is considered that the reception apparatus and/or the receiver includes a radio, a terminal, a personal computer, a mobile phone, a communication apparatus such as an access point or a base station, a smartphone, a tablet, a notebook computer, a server, a computer, a personal computer, a television, a home appliance (household electric machine), an apparatus in a factory, a communication apparatus/broadcasting apparatus such as an Internet of Things (IoT) apparatus, a g Node B (gNB), an e Node B (eNB), a relay, a node, a car (e.g., an electric vehicle), a bicycle (e.g., an electric bicycle, an electrically assisted bicycle), a motorcycle, a ship, a satellite, an aircraft, a drone, an apparatus capable of moving, a robot, or a transmission/reception point (TRP).

Further, it is also considered that the transmission apparatus and the reception apparatus in the present disclosure are apparatuses having a communication function, and the apparatuses are in a form in which any interface can be connected to an apparatus for executing an application such as a television, a radio, a personal computer, and a mobile phone.

Further, it is considered that the communication apparatus and the transceiver apparatus provided in the present specification include, for example, a broadcasting station, a base station, an access point, a terminal, a mobile phone, a smartphone, a tablet, a notebook computer, a server, a computer, a personal computer, a television, a home appliance (household electric machine), an apparatus in a factory, a communication apparatus/broadcasting apparatus such as an Internet of Things (IoT) apparatus, a g Node B (gNB), an e Node B (eNB), a relay, a node, a car (e.g., an electric vehicle), a bicycle (e.g., an electric bicycle, an electrically assisted bicycle), a motorcycle (e.g., an electric motorcycle), a ship, a satellite, an aircraft, a drone, an apparatus capable of moving, a robot, or a TRP (Tx (Transmission) / Rx (Reception) point) (TX transmitter / RX (Receiver) point).

It is considered that the radio power transmission section, the power transmitter, the radio power transmission apparatus, and the power transmission apparatus include, for example, a broadcasting station, a base station, an access point, a terminal, a mobile phone, a smartphone, a tablet, a notebook computer, a server, a computer, a personal computer, a television, a home appliance (household electric machine), an apparatus in a factory, a communication apparatus/broadcasting apparatus such as an Internet of Things (IoT) apparatus, a g Node B (gNB), an e Node B (eNB), a relay, a node, a car (e.g., an electric vehicle), a bicycle (e.g., an electric bicycle, an electrically assisted bicycle), a motorcycle (e.g., an electric motorcycle), a ship, a satellite, an aircraft, a drone, an apparatus capable of moving, a robot, or a transmission/reception point (TRP).

Further, it is considered that the power receiver, the charger, and the charging apparatus include, for example, a broadcasting station, a base station, an access point, a terminal, a mobile phone, a smartphone, a tablet, a notebook computer, a server, a computer, a personal computer, a television, a home appliance (household electric machine), an apparatus in a factory, a communication apparatus/broadcasting apparatus such as an Internet of Things (IoT) apparatus, a g Node B (gNB), an e Node B (eNB), a relay, a node, a car (e.g., an electric vehicle), a bicycle (e.g., an electric bicycle, an electrically assisted bicycle), a motorcycle (e.g., an electric motorcycle), a ship, a satellite, an aircraft, a drone, an apparatus capable of moving, a robot, or a transmission/reception point (TRP).

In the present embodiment, symbols other than the data symbol, for example, a reference signal (a preamble, a unique word, a postamble, a reference symbol, a pilot symbol, a pilot signal, or the like), a symbol for control information, a sector sweep, or the like may be disposed in the frame in any manner. Here, the reference signal and the symbol for control information are used as names, but any naming may be used, and the function itself is important.

It is considered that the reference signal is, for example, a known symbol (or the receiver may know the symbol transmitted by the transmitter by obtaining synchronization) modulated by PSK modulation in a radio power transmission apparatus, a charging apparatus, or a transceiver, a non-zero power signal, a zero power signal, a known signal in a transceiver, or the like, and the receiver uses these signals to perform "frequency synchronization", "time synchronization, (channel estimation of) each modulation signal (estimation of Channel State Information (CSI))", "signal detection", "reception state estimation", "transmission state estimation", "phase tracking due to phase noise or the like", and "estimation of a situation (such as a channel) for performing transmission beamforming and/or reception beamforming".

Further, the symbol for control information is a symbol for transmitting information (e.g., a modulation method, an error correction encoding method, and a coding rate of the error correction encoding method used for communication, setting information in an upper layer, a modulation and coding scheme (MCS), a frame configuration, channel information, information on a frequency band used, information on the number of channels used, and the like) that needs to be transmitted to a communication counterpart in order to implement communication other than data (such as an application).

It may be necessary to notify the "transmission apparatus and/or reception apparatus" and the "radio power transmission apparatus and/or charging apparatus" of a transmission method (MIMO, single-input single-output (SISO), multiple-input single-output (MISO), single-input multiple-output (SIMO), space-time block code, interleaving method, MCS, and the like), a modulation method, and an error correction encoding method. Depending on the embodiment, this description may be omitted.

In the present specification, terms such as "precoding" and "pre-coding weight" may be used, but the name itself may be any name, and in the present disclosure, the signal processing itself is important.

In any of the transmission antenna of the transmission apparatus or the reception antenna of the reception apparatus, one antenna described in the drawings may be composed of one antenna, an antenna element, or a plurality of antennas, and an antenna element.

Further, in the description of the embodiment and the like, the transmission antenna and the reception antenna may be separately described, but a configuration of a "transceiver antenna" in which the transmission antenna and the reception antenna are shared may be adopted.

Then, the transmission antenna, reception antenna, and the transceiver antenna may be referred to as, for example, an antenna port. The names of the transmission antenna, reception antenna, and the transceiver antenna are not limited to this, and a method for constituting the transmission antenna of one or more or a plurality of antennas, antenna elements is considered. Further, a method for constituting the reception antenna of one or more or a plurality of antennas, antenna elements is considered. Then, a method for constituting the transceiver antenna of one or more or a plurality of antennas, antenna elements is considered. Further, the apparatus may be configured for each transmission antenna, reception antenna, or transceiver antenna may be configured for each apparatus may be configured for each transceiver antenna. That is, it may be considered as Multiple TRP (TX (transmitter)/RX (receiver) point) (TRP (Tx (transmission)/Rx (reception) point)).

The antenna port may be a logical antenna (antenna group) composed of one or more physical antennas. That is, the antenna port does not necessarily refer to one physical antenna, but may refer to an array antenna or the like composed of a plurality of antennas. For example, the number of physical antennas composing the antenna port is not specified, but the number of physical antennas may be specified as the minimum unit in which a terminal station is capable of transmitting a reference signal. Further, the antenna port may also be specified as a unit or a minimum unit for multiplication by a precoding vector or a weight of a precoding matrix.

There are a plurality of methods of generating a modulation signal by a single-carrier scheme in the present specification, and the present embodiments can be implemented by using any of the schemes. For example, examples of the single-carrier scheme include "discrete Fourier transform (DFT)-spread orthogonal frequency division multiplexing (OFDM)" (DFT-S OFDM), "trajectory constrained DFT-spread OFDM," "constrained DFT-spread OFDM" (constrained DFT-S OFDM), "OFDM based single carrier (SC)," "single carrier (SC)-frequency division multiple access (FDMA)," "guard interval DFT-spread OFDM," a time-domain implementation single carrier scheme (e.g., single carrier (SC)-QAM), and the like.

It has been described that the waveform of the modulation signal transmitted by the radio power transmission apparatus and the communication apparatus in the present specification may be any of the single-carrier system or the multi-carrier system such as OFDM. In a case where the multi-carrier system such as OFDM is used, the symbol is present on the frequency axis in the frame.

In the present specification, the embodiments have been described using OFDM as an example of multi-carrier schemes, but the embodiments in the present specification can be similarly implemented using another multi-carrier scheme.

By way of example, multi-carrier transmission may be implemented by assigning a "single-carrier scheme using a single frequency band" and assigning a "single-carrier scheme using one or more frequency bands" to the frequency band described in the present specification.

As another example, multi-carrier transmission may be implemented by assigning one or more carriers or two or more carriers to the frequency band described in the present specification. Note that the multi-carrier transmission scheme is not limited to the above examples.

The radio power transmission signal in the present specification includes a signal (power transmission signal) for charging (may not include), but may include a reference signal, a signal (symbol) for transmitting control information, and a signal (symbol) for transmitting data. Specific examples of the control information and the data have been described in the present specification.

In the present specification, an example has been described in which the base station (or the TRP) transmits the radio power transmission signal to terminal, but the base station (or the TRP) may transmit the radio power transmission signal to the relay, the other base station (or the TRP), and the relay, the other base station (or the TRP) may charge the secondary battery or the battery.

In the present specification, the base station is described, but the base station may be composed of a plurality of base stations (a plurality of apparatuses). Further, the base station may be composed of a plurality of TRPs. For example, it is assumed that the base station is composed of a first base station (first TRP) and a second base station (second TRP). In this case, the first base station (first TRP) may transmit the radio power transmission signal, and the second base station (second TRP) may transmit (and receive) the communication modulation signal. As described above, the first base station (first TRP) and the second base station (second TRP) may share a plurality of processes.

Further, in a case where an apparatus having a charging function by radio power transmission, such as a terminal, includes a secondary battery and the battery may be capable of being separated from the apparatus having the charging function by radio power transmission. Further, the apparatus having a charging function by radio power transmission may have a portion that supplies power, and may be connected to the portion to charge the secondary battery or the battery.

In the present specification, the radio power transmission has been described, but as the radio power transmission, radio waves may be used, or for example, light such as a laser, or "frequency of radio waves, frequency of light, and frequency different from radio waves and light" may be used. In a case where the radio power transmission is performed using light, power transmission is performed using a light emitting section instead of "transmission using an antenna" in the present specification. Therefore, the apparatus that performs the radio power transmission in the present specification includes a light emitting section instead of the antenna. Further, in a case where the radio power transmission is performed using light, charging is performed using a light receiving section instead of "charging using an antenna" in the present specification. Therefore, the apparatus that performs the charging by the radio power transmission in the present specification includes a light receiving section instead of the antenna.

In the present specification, the part in which the configuration and the operation of the base station are described may be considered as "configuration and operation of terminal, the AP, and the relay". Similarly, the part in which the configuration and the operation of terminal are described may be considered as "configuration and operation of the base station, the AP, and the relay".

In the present specification, a server may provide an application related to processing relevant to the reception apparatus and the receiver, and the terminal may implement the functions of the reception apparatus described in the present specification by installing this application. Note that the application may be provided to the terminal by connection of a communication apparatus including the transmission apparatus described in the present specification to the server via a network, or the application may be provided to the terminal by connection of a communication apparatus having another transmission function to the server via the network.

Likewise, in the present specification, a server may provide an application related to processing relevant to the transmission apparatus and the transmitter, and the communication apparatus may implement the functions of the transmission apparatus described in the present specification by installing this application. Note that a method can be envisaged in which this communication apparatus is provided with the application by connection of another communication apparatus to the server via the network.

In the present specification, the server may provide an application related to processing related to the radio power transmission apparatus, the charging apparatus, the radio power transmission section, and the charger, and the communication apparatus may install the application to realize the function of the transmission apparatus described in the present specification. It is considered that the application is provided to the communication apparatus by the other communication apparatus being connected to the server via a network.

Note that the present disclosure is not limited to the embodiments and can be implemented with various modifications. For example, the embodiments are performed by a communication apparatus in the description, but the present invention is not limited to this and the communication methods can be realized by software.

In addition, a program for performing the above communication methods may be stored in read only memory (ROM) in advance, for example, and the program may be executed by a central processor unit (CPU).

Further, a program for performing the communication method may be stored in a computer-readable storage medium, and the program stored in the storage medium may be recorded in a random access memory (RAM) of the computer so that the computer operates according to the program.

Each configuration in each of the embodiments described above can be typically realized by a large scale integration (LSI), which is an integrated circuit. The LSI may be individually formed as chips, or one chip may be formed so as to include a part or all of the configurations in each embodiment. The LSI here may be referred to as an integrated circuit (IC), a system LSI, a super LSI, or an ultra LSI depending on a difference in the degree of integration. In addition, the technique of implementing an integrated circuit is not limited to the LSI and may be realized by using a dedicated circuit or a general-purpose processor. A field programmable gate array (FPGA) that can be programmed after the manufacture of the LSI or a reconfigurable processor in which the connections and the settings of circuit cells disposed inside the LSI can be reconfigured may be used.

Note that at least one of the FPGA and the CPU may be configured to download all or some of software required for implementing the communication methods described in the present disclosure by radio communication or wired communication. Further, at least one of the FPGA and the CPU may be configured to download all or some of software for updating by radio communication or wired communication. Then, the downloaded software may be stored in storage, and at least one of the FPGA and the CPU may be operated based on the stored software to execute the digital signal processing described in the present disclosure.

The device including at least one of the FPGA and the CPU may be connected to a communication modem by radio or wire, and the communication methods described in the present disclosure may be implemented by the device and the communication modem.

For example, a communication apparatus, a radio power transmission apparatus, and a charging apparatus, such as the base station, AP, and terminal described in the present specification may include at least one of the FPGA and the CPU, and the communication apparatus may include an interface for externally obtaining software for operating at least one of the FPGA and the CPU. Further, the communication apparatus may include storage for storing the externally-obtained software, and the FPGA and/or the CPU may be operated based on the stored software to implement the signal processing described in the present disclosure.

If future integrated circuit technology replaces LSIs as a result of the advancement of semiconductor technology or other derivative technology, the functional blocks could be integrated using the future integrated circuit technology. Biotechnology can also be applied.

The present disclosure can be widely applied to a radio system that transmits different modulation signals from a plurality of antennas. Further, it can be applied to a case where MIMO transmission is performed in a wired communication system having a plurality of transmission locations (e.g., a power line communication (PLC) system, an optical communication system, or a digital subscriber line (DSL) system).

The "data", the "data symbol", and the "data frame" may be, for example, a physical downlink shared channel (PDSCH) or a physical uplink shared channel (PUSCH).

In the present case, the base station, terminal, and the radio power transmission apparatus have been described as forming the transmission beam, but all the transmission beams may not have the same polarization. For example, in a case where the base station and terminal can generate the transmission beam #1, the transmission beam #2, the transmission beam #3, ..., the transmission beam #1 may be set to the first polarization, the transmission beam #2 may be set to the second polarization different from the first polarization and so forth.

Further, the base station, terminal, and the charging apparatus have been described as forming the reception beam, but all the reception beams may not have the same polarization. For example, in a case where the base station and terminal can generate reception beam #1, reception beam #2, reception beam #3, ..., the reception beam #1 may be set to the first polarization, reception beam #2 may be set to the second polarization different from the first polarization and so forth.

In the present case, the base station, terminal, and the radio power transmission apparatus have been described as forming the transmission beam, but the polarization of the transmission beam may be changed over time. For example, the first polarization may be used for the transmission beam #1, and the polarization may be changed to the second polarization different from the first polarization in the middle.

Further, the base station, terminal, and the charging apparatus have been described as forming the reception beam, but the polarization of the reception beam may be changed over time. For example, the first polarization may be used for the reception beam #1, and the polarization may be changed to the second polarization different from the first polarization in the middle.

In a case where "A and/or B" is described, it may be "A and B" or "A or B".

The operation described in the present specification can be performed using any frequency, and for example, an ultra wide band (UWB) system may be used.

The disclosure of Japanese Patent Application No. 2023-115100, filed on July 13, 2023, including the specification, drawings and abstract, is incorporated herein by reference in its entirety.

Industrial Applicability

The present disclosure can be widely applied to a radio system that transmits a modulation signal from one or more antennas, and is suitable for application to, for example, a communication system using a single carrier or a communication system using a multi-carrier transmission method such as OFDM. Further, it can be applied to a wired communication system (e.g., a power line communication (PLC) system, an optical communication system, an optical power transmission system, or a digital subscriber line (DSL) system).

Reference Signs List

101A Power transmitter
102A_1 to 102A_M Transmission signal
103A_1 to 103A_M Power transmission antenna
104B_1 to 104B_M Antenna control signal
121A, 221A Communication antenna
122A, 144G_1 to 144G_M, 202A_1 to 202A_N, 222A, 252C_1 to 252C_4, 254C_1 to
254C_4, 232E_1 to 232E_N, 272G_1 to 272G_N, 284J Reception signal
123A, 142G_1 to 142G_M, 223A, 223E, 274G_1 to 274G_N Transmission signal
124A, 224A, 224E Communication processor
125A, 125E, 225A, 225E, 234G Reception data
126A, 126E, 226A, 226E, 235G Transmission data
131E Power transmission and transmitter
132E_1 to 132E_M Transmission signal for power transmission
133E_1 to 133E_M: Power transmission and transmission antenna
134F_1 to 134F_M, 145H_1 to 145H_M, 204B_1 to 204B_N, 234F_1 to 234F N, 275H_1
to 275H_N Antenna control signal
141G Power transmission and communication processor
143G_1 to 143G_M Power transmission and communication antenna
151C Input signal
152C Distributer
153C_1 to 153C_4, 286J Signal
154C_1 to 154C_4, 253C_1 to 253C_4 Multiplication operator
155C_1 to 155C_4 Signal after coefficient multiplication
156C_1 to 156C_4, 251C_1 to 251C_4 Antenna
181D Transmission directivity controller
198A, 198E, 198G, 298A, 298E, 298G, 292J Control signal
150C, 199A, 199E, 199G, 299A, 299E, 299G Controller
201A_1 to 201A_N Power reception antenna
203A Charger

231E_1 to 231E_N Power reception and reception antenna
233E Charger and receiver
243K Reception processor
245K Analyzer
255C Coupler and synthesizer
271G_1 to 271G_N Power reception and communication antenna
273G Charging and communication processor
281I Stabilization circuit
282I Charging circuit
283I Battery (secondary battery)
285J Switch
287J LNA
289J Receiver
294J Transmitter
301 Base station
302 Terminal
396D Power transmission function
397D Communication function
398B Charging function
399B Communication function
501, 1801 Communication modulation signal
502, 1851 Radio power transmission signal
601 Reference signal
602 Data symbol
603 Control information symbol
710_1 to 710_31 Antenna
801 Communication reference signal
802 Radio power transmission reference signal
803 Reference signal for both communication and radio power transmission
1001 Communication modulation signal transmission parameter information
1002 Radio power transmission signal transmission parameter information
1101, 1151 Reference signal
1102 Information transmission

**Claims**

1. A radio apparatus, comprising:

    a receiver that receives a communication signal and a power transmission signal, the communication signal including a first reference signal; and
    a controller that controls beamforming in reception of the power transmission signal, based on the first reference signal.

2. The radio apparatus according to claim 1, wherein,

    the communication signal includes a second reference signal, and
    the controller controls beamforming in reception of the communication signal, based on the second reference signal.

3. The radio apparatus according to claim 1, wherein,

    the communication signal includes a second reference signal,
    the controller controls beamforming in reception of the communication signal, based on the second reference signal, and
    the controller controls beamforming in reception of the power transmission signal, based on the first reference signal and the second reference signal.

4. The radio apparatus according to claim 1, wherein,

    the controller controls beamforming in reception of the power transmission signal, during a first mode in which the communication signal and the power transmission signal are received, and
    the controller perform no beamforming in reception of the power transmission signal during a second mode in which either one of the communication signal and the power transmission signal is not received.

5. The radio apparatus according to claim 1, wherein, the receiver receives the communication signal and the power transmission signal that has been transmitted using a frequency that is at least partly identical to a frequency used in transmission of the communication signal.

6. A radio apparatus, comprising:

    a controller that generates a communication signal and a power transmission signal, the communication signal including a first reference signal; and
    a transmitter that transmits the communication signal including the first reference signal and transmits the power transmission signal to another radio apparatus that controls beamforming in reception of the power transmission signal, based on the first reference signal.

7. The radio apparatus according to claim 6, wherein, the communication signal includes a second reference signal used to control beamforming in reception of the communication signal by the other radio apparatus.

8. The radio apparatus according to claim 6, wherein, the transmitter transmits the power transmission signal, using a frequency that is at least partly identical to a frequency used in transmission of the communication signal.

**9.** A control method, comprising:

receiving, by a radio apparatus, a communication signal including a first reference signal;
controlling, by the radio apparatus, beamforming in reception of a power transmission signal, based on the first reference signal; and
receiving the power transmission signal by the radio apparatus.

**10.** A control method, comprising:

generating, by a radio apparatus, a communication signal and a power transmission signal, the communication signal including a first reference signal;
transmitting, by the radio apparatus, the communication signal including the first reference signal; and
transmitting, by the radio apparatus, the power transmission signal to another radio apparatus that controls beamforming based on the first reference signal.

FIG. 1A

FIG. 1B

FIG. 1C1

EP 4 746 310 A1

153C_1 → 154C_1 MULTIPLICATION OPERATOR → 155C_1 156C_1

150C

FIG. 1C2

FIG. 1D1

FIG. 1D2

FIG. 1E

EP 4 746 310 A1

FIG. 1F

EP 4 746 310 A1

FIG. 1G

FIG. 1H

FIG. 2A

EP 4 746 310 A1

EP 4 746 310 A1

FIG. 2B

FIG. 2C

FIG. 2D

FIG. 2E

FIG. 2F

EP 4 746 310 A1

FIG. 2G

FIG. 2H

FIG. 2I

FIG. 2J1

FIG. 2J2

EP 4 746 310 A1

FIG. 2K

EP 4 746 310 A1

FIG. 3A

398B

CHARGING
FUNCTION

FIG. 3B1

399B

COMMUNICATION
FUNCTION

FIG. 3B2

FIG. 3C

396D

POWER
TRANSMISSION
FUNCTION

FIG. 3D1

397D

COMMUNICATION
FUNCTION

FIG. 3D2

400

| | |
|---|---|
| ◯ | CHARGING MODE |
| ● | BATTERY RESIDUAL AMOUNT SAVING MODE |
| ◯ | COMMUNICATION MODE |

FIG. 4

FIG. 5A

FIG. 5B

FIG. 5C

EP 4 746 310 A1

EP 4 746 310 A1

FIG. 6

710_0

ANTENNA #0

710_1

ANTENNA #1

710_7

ANTENNA #7

710_8

ANTENNA #8

710_9

ANTENNA #9

710_15

ANTENNA #15

710_16

ANTENNA #16

710_31

ANTENNA #31

USED FOR TRANSMITTING
COMMUNICATION MODULATION
SIGNALS

USED FOR TRANSMITTING RADIO
POWER TRANSMISSION SIGNALS

FIG. 7A

710_0
ANTENNA #0

710_1
ANTENNA #1

710_7
ANTENNA #7

710_8
ANTENNA #8

710_9
ANTENNA #9

710_15
ANTENNA #15

710_16
ANTENNA #16

710_31
ANTENNA #31

USED FOR TRANSMITTING RADIO POWER TRANSMISSION SIGNALS

USED FOR TRANSMITTING COMMUNICATION MODULATION SIGNALS

FIG. 7B

710_0 ANTENNA #0
710_1 ANTENNA #1
710_7 ANTENNA #7
710_8 ANTENNA #8
710_9 ANTENNA #9
710_15 ANTENNA #15
710_16 ANTENNA #16
710_31 ANTENNA #31

USED FOR TRANSMITTING COMMUNICATION MODULATION SIGNALS

USED FOR TRANSMITTING RADIO POWER TRANSMISSION SIGNALS

FIG. 7C

EP 4 746 310 A1

REFERENCE SIGNAL

601

801

802

COMMUNICATION REFERENCE SIGNAL

RADIO POWER TRANSMISSION REFERENCE SIGNAL

FIG. 8A

REFERENCE SIGNAL

601

801

803

COMMUNICATION
REFERENCE
SIGNAL

COMMUNICATION
AND RADIO POWER
TRANSMISSION
REFERENCE
SIGNAL

FIG. 8B

REFERENCE SIGNAL

601

| COMMUNICATION REFERENCE SIGNAL | COMMUNICATION AND RADIO POWER TRANSMISSION REFERENCE SIGNAL | RADIO POWER TRANSMISSION REFERENCE SIGNAL |

801        803        802

FIG. 8C

FIG. 9A1

FIG. 9A2

710_0 ANTENNA #0
710_1 ANTENNA #1
710_7 ANTENNA #7
710_8 ANTENNA #8
710_9 ANTENNA #9
710_15 ANTENNA #15
710_16 ANTENNA #16
710_31 ANTENNA #31

USED FOR TRANSMITTING COMMUNICATION MODULATION SIGNALS

100

710_0

ANTENNA #0

710_1

ANTENNA #1

⋮ ⋮ ⋮

710_7

ANTENNA #7

710_8

ANTENNA #8

710_9

ANTENNA #9

⋮ ⋮ ⋮

710_15

ANTENNA #15

710_16

ANTENNA #16

⋮ ⋮ ⋮

710_31

ANTENNA #31

USED FOR TRANSMITTING RADIO
POWER TRANSMISSION SIGNALS

FIG. 9B1

EP 4 746 310 A1

101

FIG. 9B2

FIG. 10

FIG. 11A

TERMINAL

1102_B

INFORMATION
TRANSMISSION

ESTIMATION $\longrightarrow$

TIME

1151_B

REFERENCE
SIGNAL

BASE STATION

TRANSMISSION BEAMFORMING
METHOD DETERMINATION $\longrightarrow$ TRANSMISSION

TIME

FIG. 11B

EP 4 746 310 A1

301_1

COMMUNICATION

FREQUENCY: F1

302_2

| BASE STATION #1 | TERMINAL #2 |

FREQUENCY: F2

RADIO POWER
TRANSMISSION

FIG. 12A

FIG. 12B

FIG. 12C

FIG. 12D

EP 4 746 310 A1

EP 4 746 310 A1

BASE
STATION

SIGNAL
ESTIMATION
1201C

TRANSMISSION
BEAMFORMING
METHOD
DETERMINATION
1202C

REFERENCE
SIGNAL
TRANSMISSION
1203E

SIGNAL
TRANSMISSION
1204E

TERMINAL

REFERENCE SIGNAL
TRANSMISSION
1251C

SIGNAL
ESTIMATION
1252E

RECEPTION
BEAMFORMING
METHOD
DETERMINATION
1253E

FIG. 12E

301_2

BASE
STATION
#2

COMMUNICATION

FREQUENCY: F1

302_2

TERMINAL
#2

301_1

BASE
STATION
#1

RADIO POWER
TRANSMISSION

FREQUENCY: F2

FIG. 13

1400

BASE STATION
CAPABILITY
INFORMATION

| INFORMATION ON WHETHER RADIO POWER TRANSMISSION IS SUPPORTED | INFORMATION ON WHETHER CASE WHERE "FREQUENCY (BAND) FOR TRANSMITTING COMMUNICATION MODULATION SIGNAL" AND "FREQUENCY (BAND) FOR TRANSMITTING RADIO POWER TRANSMISSION SIGNAL" ARE THE SAME IS SUPPORTED" | INFORMATION ON WHETHER CASE WHERE "FREQUENCY (BAND) FOR TRANSMITTING COMMUNICATION MODULATION SIGNAL" AND "FREQUENCY (BAND) FOR TRANSMITTING RADIO POWER TRANSMISSION SIGNAL" ARE DIFFERENT IS SUPPORTED | INFORMATION ON WHETHER TRANSMISSION OF SET OF COMMUNICATION MODULATION SIGNAL AND RADIO POWER TRANSMISSION SIGNAL IS SUPPORTED" | · · · · · · |
|---|---|---|---|---|
| 1411 | 1412 | 1413 | 1414 | |

FIG. 14

FIG. 15

FIG. 16A

EP 4 746 310 A1

DETERMINE WHETHER TO
PERFORM "TRANSMISSION OF
RADIO POWER TRANSMISSION
SIGNAL AND COMMUNICATION"
1601B

DETERMINE TRANSMISSION
METHOD OF
"TRANSMISSION OF
RADIO POWER
TRANSMISSION SIGNAL
AND COMMUNICATION"
1602B

PERFORM TRANSMISSION OF RADIO
POWER TRANSMISSION SIGNAL AND
COMMUNICATION
1603B

BASE STATION

TERMINAL

REQUEST "CHARGING BY RADIO POWER
TRANSMISSION AND COMMUNICATION"
1651B

FIG. 16B

FIG. 17A

FIG. 17B

FREQUENCY

FREQUENCY AA1

1801A_6 | COMMUNICATION MODULATION SIGNAL FOR TERMINAL #6

1801A_3 | COMMUNICATION MODULATION SIGNAL FOR TERMINAL #3

1801A_5 | COMMUNICATION MODULATION SIGNAL FOR TERMINAL #5

1801A_2 | COMMUNICATION MODULATION SIGNAL FOR TERMINAL #2

RADIO POWER TRANSMISSION SIGNAL FOR TERMINAL #4 | 1851A_4

RADIO POWER TRANSMISSION SIGNAL FOR TERMINAL #1 | 1851A_1

RADIO POWER TRANSMISSION SIGNAL FOR TERMINAL #5 | 1851A_5

RADIO POWER TRANSMISSION SIGNAL FOR TERMINAL #2 | 1851A_2

TIME

TIME A1

TIME A2

FIG. 18A1

EP 4 746 310 A1

FIG. 18A2

FREQUENCY

FREQUENCY AA1

1801A_6  COMMUNICATION MODULATION SIGNAL FOR TERMINAL #6

1801A_3  COMMUNICATION MODULATION SIGNAL FOR TERMINAL #3

1801A_5  COMMUNICATION MODULATION SIGNAL FOR TERMINAL #5

1801A_2  COMMUNICATION MODULATION SIGNAL FOR TERMINAL #2

1851A_4  RADIO POWER TRANSMISSION SIGNAL FOR TERMINAL #4

1851A_1  RADIO POWER TRANSMISSION SIGNAL FOR TERMINAL #1

1851A_5  RADIO POWER TRANSMISSION SIGNAL FOR TERMINAL #5

1851A_2  RADIO POWER TRANSMISSION SIGNAL FOR TERMINAL #2

TIME

TIME A1

TIME A2a  TIME A2b  TIME A2c  TIME A2d

TIME A2

EP 4 746 310 A1

EP 4 746 310 A1

**FREQUENCY**

**FREQUENCY BB2**

| RADIO POWER TRANSMISSION SIGNAL FOR TERMINAL #4 | 1851B_4 |
| RADIO POWER TRANSMISSION SIGNAL FOR TERMINAL #1 | 1851B_1 |
| RADIO POWER TRANSMISSION SIGNAL FOR TERMINAL #5 | 1851B_5 |
| RADIO POWER TRANSMISSION SIGNAL FOR TERMINAL #2 | 1851B_2 |

**FREQUENCY BB1**

1801B_6 COMMUNICATION MODULATION SIGNAL FOR TERMINAL #6

1801B_3 COMMUNICATION MODULATION SIGNAL FOR TERMINAL #3

1801B_5 COMMUNICATION MODULATION SIGNAL FOR TERMINAL #5

1801B_2 COMMUNICATION MODULATION SIGNAL FOR TERMINAL #2

**TIME**

TIME B1

TIME B2

FIG. 18B1

FIG. 18B2

FREQUENCY

FREQUENCY
CC1

1801C_6 | COMMUNICATION MODULATION SIGNAL FOR TERMINAL #6

1851C_1 | RADIO POWER TRANSMISSION SIGNAL FOR TERMINAL #1

1851C_5 | RADIO POWER TRANSMISSION SIGNAL FOR TERMINAL #5

1801C_2 | COMMUNICATION MODULATION SIGNAL FOR TERMINAL #2

RADIO POWER TRANSMISSION SIGNAL FOR TERMINAL #4 | 1851C_4

COMMUNICATION MODULATION SIGNAL FOR TERMINAL #3 | 1801C_3

COMMUNICATION MODULATION SIGNAL FOR TERMINAL #5 | 1801C_5

RADIO POWER TRANSMISSION SIGNAL FOR TERMINAL #2 | 1851C_2

TIME C1

TIME C2

TIME

FIG. 18C

EP 4 746 310 A1

FIG. 19

## INTERNATIONAL SEARCH REPORT

| | International application No. |
|---|---|
| | **PCT/JP2024/024164** |

---

**A. CLASSIFICATION OF SUBJECT MATTER**

*H04B 7/08*(2006.01)i; *H02J 50/20*(2016.01)i; *H02J 50/40*(2016.01)i
FI:   H04B7/08 802; H02J50/20; H02J50/40; H04B7/08 810

According to International Patent Classification (IPC) or to both national classification and IPC

**B. FIELDS SEARCHED**

Minimum documentation searched (classification system followed by classification symbols)

H04B7/08; H02J50/20; H02J50/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

IEEE Xplore

**C. DOCUMENTS CONSIDERED TO BE RELEVANT**

| Category* | Citation of document, with indication, where appropriate, of the relevant passages | Relevant to claim No. |
|---|---|---|
| X | WO 2023/026378 A1 (NTT DOCOMO, INC.) 02 March 2023 (2023-03-02) paragraphs [0015]-[0054], fig. 1-6 | 1, 5-6, 8-10 |
| A | | 2-4, 7 |
| A | US 2023/0024250 A1 (AGENCY SCIENCE TECH & RES) 26 January 2023 (2023-01-26) entire text, all drawings | 1-10 |
| A | KR 10-2021-0155325 A (WARP SOLUTION INC.) 22 December 2021 (2021-12-22) entire text, all drawings | 1-10 |
| A | JP 2023-75211 A (KYOCERA CORPORATION) 30 May 2023 (2023-05-30) entire text, all drawings | 1-10 |
| A | JP 2021-531714 A (OSSIA INC.) 18 November 2021 (2021-11-18) entire text, all drawings | 1-10 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 August 2024** | **10 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/024164**

| Patent document cited in search report | | | Publication date (day/month/year) | Patent family member(s) | | | Publication date (day/month/year) |
|---|---|---|---|---|---|---|---|
| WO | 2023/026378 | A1 | 02 March 2023 | CN | 117813742 | A | |
| US | 2023/0024250 | A1 | 26 January 2023 | WO | 2021/118453 | A1 | |
| KR | 10-2021-0155325 | A | 22 December 2021 | (Family: none) | | | |
| JP | 2023-75211 | A | 30 May 2023 | WO | 2023/276554 | A1 | |
| | | | | EP | 4366129 | A1 | |
| | | | | CN | 117546393 | A | |
| JP | 2021-531714 | A | 18 November 2021 | US | 10361595 | B1 | |
| | | | | entire text, all drawings | | | |
| | | | | CN | 112106268 | A | |
| | | | | KR | 10-2021-0003863 | A | |

Form PCT/ISA/210 (patent family annex) (July 2022)

**REFERENCES CITED IN THE DESCRIPTION**

**Patent documents cited in the description**

- JP 6388728 B

- JP 2023115100 A